(19) Europäisches Patentamt / European Patent Office / Office européen des brevets

(11) **EP 2 078 159 B1**

(12) **FASCICULE DE BREVET EUROPEEN**

(45) Date de publication et mention
de la délivrance du brevet:
**31.05.2017   Bulletin 2017/22**

(21) Numéro de dépôt: **07815993.6**

(22) Date de dépôt: **18.10.2007**

(51) Int Cl.:
*F03D 80/40* (2016.01)          *F03D 7/04* (2006.01)
*G05B 13/02* (2006.01)          *G01W 1/10* (2006.01)
*G08B 19/02* (2006.01)

(86) Numéro de dépôt international:
**PCT/CA2007/001842**

(87) Numéro de publication internationale:
**WO 2008/046215 (24.04.2008 Gazette 2008/17)**

(54) **SYSTÈME ET MÉTHODE POUR CONTRÔLER UNE ÉOLIENNe**

SYSTEM UND VERFAHREN ZUR STEUERUNG EINER WINDTURBINE

SYSTEM AND METHOD FOR CONTROLLING A WIND TURBINE

(84) Etats contractants désignés:
**AT BE BG CH CY CZ DE DK EE ES FI FR GB GR
HU IE IS IT LI LT LU LV MC MT NL PL PT RO SE
SI SK TR**

(30) Priorité:   **18.10.2006   CA 2564494**

(43) Date de publication de la demande:
**15.07.2009   Bulletin 2009/29**

(73) Titulaire: **Boralex, Inc.**
**Kingsey Falls QC J0A 1B0 (CA)**

(72) Inventeur: **GIRARDIN, Hugues**
**Kingsey Falls, Québec, J0A 1B0 (CA)**

(74) Mandataire: **Lavoix**
**2, place d'Estienne d'Orves**
**75441 Paris Cedex 09 (FR)**

(56) Documents cités:
**CA-A1- 2 526 032     JP-A- 2004 084 527
US-A- 5 155 375       US-A1- 2005 010 365
US-B2- 7 086 834**

**Description**

**DOMAINE DE L'INVENTION**

La présente invention a pour objet un système et une méthode pour contrôler une éolienne. Plus précisément, la présente invention a pour objet un système pour contrôler une éolienne avec un système de détection de givre lors de conditions de glaçage des pales, ainsi qu'une méthode pour contrôler de l'éolienne dans de telles conditions.

**DESCRIPTION DE L'ART ANTÉRIEUR**

Les systèmes utilisés aujourd'hui pour détecter le givre sur les pales d'une éolienne tentent de déterminer la présence de givre par différentes méthodes et transmettent un signal de détection au système de contrôle de l'éolienne qui l'arrête au même moment. L'expérience démontre que l'efficacité de ces systèmes est grandement variable et que le signal d'arrêt émis peut arriver tard après le début de l'événement givrant et même parfois pas du tout. C'est donc dire qu'il y a déjà une accumulation non-négligeable de givre sur les pales au moment de l'arrêt de l'éolienne et qu'il y avait risque de morcellement et de projection du givre à une vitesse suffisante pour causer des blessures ou des dommages matériels en plus d'exiger qu'un cycle naturel de dégivrage plus long soit complété préalablement au redémarrage de l'éolienne. Dans la plupart des cas, cela se concrétise par plusieurs jours d'attente des conditions climatiques favorables à la fonte du givre.

US 7,086,834 décrit un système pour contrôler une éolienne comprenant des instruments pour mesurer des conditions climatiques ambiantes et un contrôleur pour arrêter l'éolienne lorsque la probabilité de glaçage est supérieure à une tolérance de glaçage. L'algorithme de contrôle de ce système surveille surtout le comportement des composantes afin de déterminer si une anomalie de masse est présente.

Il existe donc un besoin pour un système et une méthode plus fiable et qui a la capacité d'anticiper la formation de givre sur les pales de l'éolienne afin d'annuler complètement les risques de projection de glace.

**SOMMAIRE DE L'INVENTION**

La présente invention a pour objet de fournir un système et une méthode permettant de répondre à au moins un des besoins énumérés précédemment.

Plus précisément, l'invention a pour objet un système pour contrôler une éolienne, comprenant :

- des instruments météorologiques pour mesurer des conditions climatiques ambiantes incluant une température ambiante moyenne, une humidité relative ambiante moyenne et un rayonnement solaire ambiant moyen, autour de l'éolienne, et générer des signaux météorologiques en conséquence;
- une mémoire pour garder en mémoire une tolérance de glaçage;
- un premier calculateur pour calculer une probabilité de glaçage globale ajustée en fonction du rayonnement solaire ambiant moyen, de la température ambiante moyenne, et de l'humidité relative ambiante moyenne; et
- un contrôleur pour arrêter l'éolienne lorsque la probabilité de glaçage globale est supérieure à la tolérance de glaçage.

L'invention a aussi pour objet une méthode pour contrôler une éolienne, comprenant les étapes de:

a) mesurer des conditions climatiques ambiantes, incluant une température ambiante moyenne, une humidité relative ambiante moyenne et un rayonnement solaire ambiant moyen, autour de l'éolienne, et générer des signaux météorologiques en conséquence;
b) garder dans une mémoire une tolérance de glaçage;
c) calculer une probabilité de glaçage globale ajustée en fonction du rayonnement solaire ambiant moyen, de la température ambiante moyenne, et de l'humidité relative ambiante moyenne; et
d) arrêter l'éolienne lorsque la probabilité de glaçage globale est supérieure à la tolérance de glaçage.

L'invention sera mieux comprise à la lecture de la description non limitative qui suit d'un mode de réalisation préférentiel de celle-ci, faite en se référant aux dessins annexés.

**BRÈVE DESCRIPTION DES DESSINS**

La Figure 1 est un schéma bloc du fonctionnement du système, selon un mode de réalisation préféré de l'invention.

Les Figures 2A à 2E forment un schéma bloc détaillé du processus CALCUL_MOYENNES du système de contrôle de l'éolienne de la Figure 1.

Les Figures 3A à 3D forment un schéma bloc détaillé du processus MESURE_EFFICACITÉ du système de contrôle de l'éolienne de la Figure 1.

Les Figures 4A à 4D forment un schéma bloc détaillé du processus CALCUL_PROB_GIVRE du système de contrôle de l'éolienne de la Figure 1.

Les Figures 5 et 6 forment un schéma bloc détaillé du processus GESTION_ARRÊT du système de contrôle de l'éolienne de la Figure 1.

Les Figures 7A à 7E forment un schéma bloc détaillé du processus CALCUL_MOYENNES du système de contrôle de l'éolienne de la Figure 1, montrant un premier exemple avec des données numériques.

Les Figures 8A à 8D forment un schéma bloc détaillé du processus MESURE_EFFICACITÉ du système de contrôle de l'éolienne de la Figure 1, montrant un premier exemple avec des données numériques.

Les Figures 9A à 9D forment un schéma bloc détaillé du processus CALCUL_PROB_GIVRE du système de contrôle de l'éolienne de la Figure 1, montrant un premier exemple avec des données numériques.

Les Figures 10 et 11 forment un schéma bloc détaillé du processus GESTION_ARRÊT du système de contrôle de l'éolienne de la Figure 1, montrant un premier exemple avec des données numériques.

Les Figures 12A à 12E forment un schéma bloc détaillé du processus CALCUL_MOYENNES du système de contrôle de l'éolienne de la Figure 1, montrant un deuxième exemple avec des données numériques.

Les Figures 13A à 13D forment un schéma bloc détaillé du processus MESURE_EFFICACITÉ du système de contrôle de l'éolienne de la Figure 1, montrant un deuxième exemple avec des données numériques.

Les Figures 14A à 14D forment un schéma bloc détaillé du processus CALCUL_PROB_GIVRE du système de contrôle de l'éolienne de la Figure 1, montrant un deuxième exemple avec des données numériques.

Les Figures 15 et 16 forment un schéma bloc détaillé du processus GESTION_ARRÊT du système de contrôle de l'éolienne de la Figure 1, montrant un deuxième exemple avec des données numériques.

Les Figures 17A à 17E forment un schéma bloc détaillé du processus CALCUL_MOYENNES du système de contrôle de l'éolienne de la Figure 1, montrant un troisième exemple avec des données numériques.

Les Figures 18A à 18D forment un schéma bloc détaillé du processus MESURE_EFFICACITÉ du système de contrôle de l'éolienne de la Figure 1, montrant un troisième exemple avec des données numériques.

Les Figures 19A à 19D forment un schéma bloc détaillé du processus CALCUL_PROB_GIVRE du système de contrôle de l'éolienne de la Figure 1, montrant un troisième exemple avec des données numériques.

Les Figures 20 et 21 forment un schéma bloc détaillé du processus GESTION_ARRÊT du système de contrôle de l'éolienne de la Figure 1, montrant un troisième exemple avec des données numériques.

La Figure 22 est un graphique illustrant un tracé polygonal avec interpolation de premier ordre.

La Figure 23 est un graphique illustrant un exemple de réponse à un échelon du bloc-fonction LAG.

La Figure 24 est un graphique illustrant un exemple de réponse indicielle du bloc-fonction LAG_FILTER.

Les Figures 25A et 25B sont des graphiques illustrant des diagrammes de cycles du bloc-fonction FUZ_ATERM_REAL avec 2 fonctions d'appartenance et 4 fonctions d'appartenance respectivement.

**DESCRIPTION DÉTAILLÉE DU MODE DE RÉALISATION PRÉFÉRÉ DE L'INVENTION**

Un objectif de l'invention est atteint avec un système et une méthode qui lit, enregistre et filtre en continu les conditions climatiques afin de déterminer celles qui sont propices à l'accumulation de givre sur les pales de l'éolienne tout en étant lié au système de contrôle de l'éolienne afin de mesurer également en continu son niveau d'efficacité et d'en commander éventuellement l'arrêt.

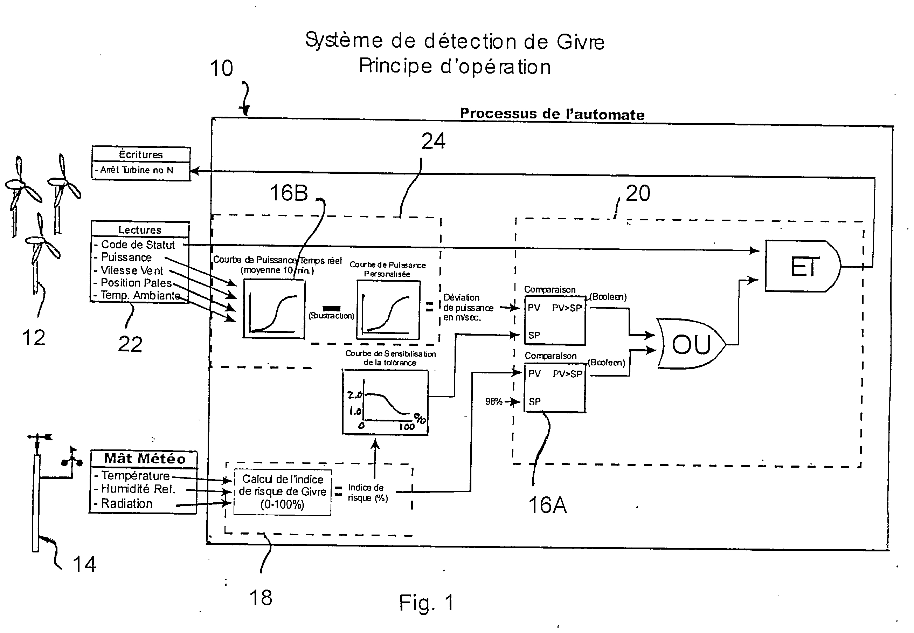

L'objectif de détecter le givre et de contrôler une éolienne est atteint avec un système 10, tel qu'illustré à la Figure 1. Le système 10 pour contrôler une éolienne 12 comprend des instruments météorologiques 14 pour mesurer des conditions climatiques ambiantes et générer des signaux météorologiques en conséquence, une mémoire 16A pour garder en mémoire une tolérance de glaçage, un premier calculateur 18 pour calculer une probabilité de glaçage globale à partir des signaux météorologiques et un contrôleur 20 pour arrêter l'éolienne 12 lorsque la probabilité de glaçage globale est supérieure à la tolérance de glaçage.

Tel qu'illustré dans la Figure 1, préférablement la mémoire 16B garde en mémoire des courbes d'efficacité de référence et une tolérance de déviation d'efficacité, et le système comprend en outre des capteurs 22 pour détecter une puissance moyenne générée par l'éolienne, une position des pales moyenne de l'éolienne, et une vitesse de vent moyenne autour de l'éolienne, et pour générer des signaux d'efficacité en conséquence. Le système 10 comprend aussi un deuxième calculateur 24 pour calculer une efficacité actuelle de l'éolienne à partir des signaux d'efficacité. Le contrôleur 20 arrête l'éolienne lorsqu'une déviation entre l'efficacité actuelle et une efficacité moyenne calculée à partir des courbes d'efficacité de référence est supérieure à la tolérance de déviation d'efficacité.

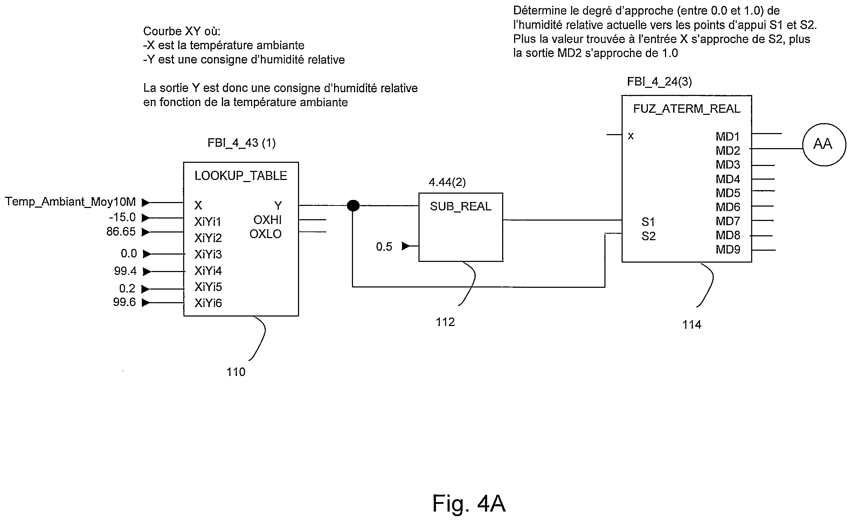

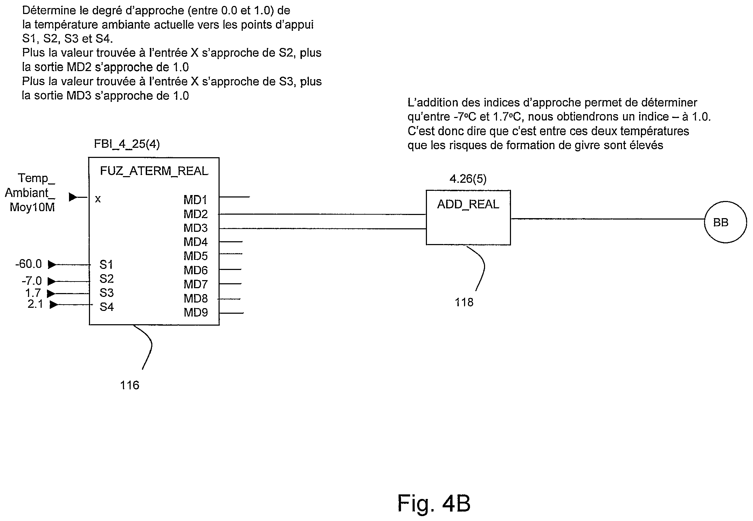

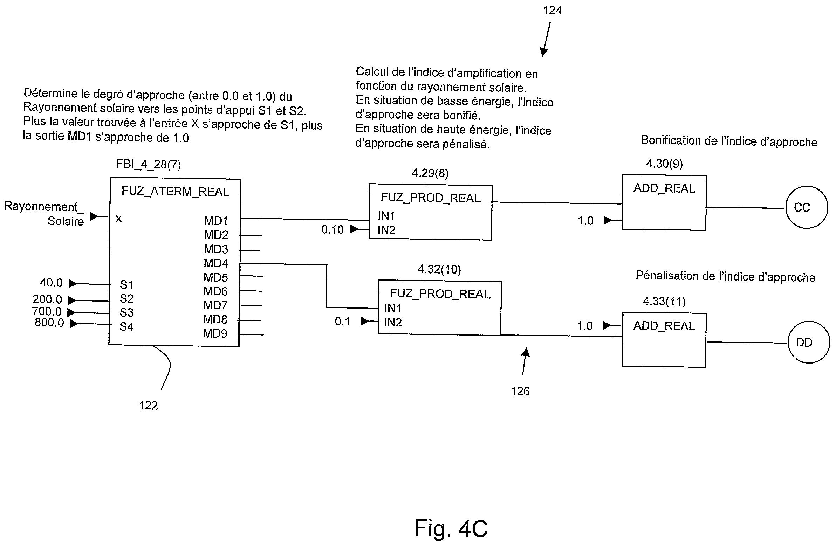

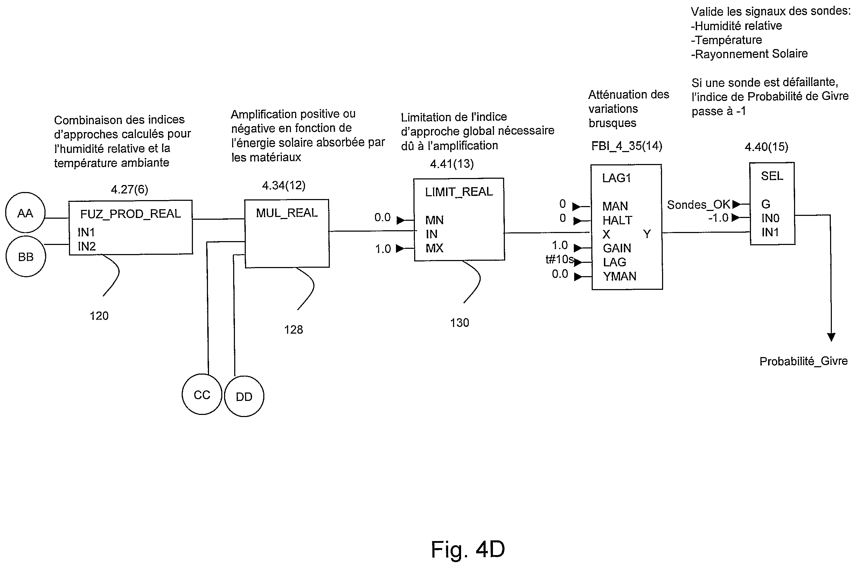

Préférablement, les conditions climatiques comprennent une température ambiante moyenne autour de l'éolienne, une humidité relative ambiante moyenne autour de l'éolienne, et un rayonnement solaire ambiant moyen autour de l'éolienne. De plus, tel qu'illustré dans les figures 4A à 4D, le premier calculateur 18 préférablement comprend :

- un premier moyen 110 pour calculer une première consigne d'humidité relative associée avec la température ambiante moyenne, ladite première consigne étant obtenue par interpolation d'une première courbe caractéristique de consignes caractéristiques d'humidité relative en fonction d'une température ambiante caractéristique;
- un deuxième moyen 112 pour calculer une deuxième consigne d'humidité relative résultant d'une soustraction d'une valeur de limite inférieure de la première consigne;
- un troisième moyen 114 pour calculer une première probabilité partielle de glaçage correspondant à un premier degré d'approche entre 0.0 et 1.0 de l'humidité moyenne ambiante vers la première consigne selon une opération de fuzzification pour obtenir des degrés d'appartenance de l'humidité moyenne ambiante à la première consigne et la deuxième consigne;

- un quatrième moyen 116 pour calculer un deuxième degré d'approche et un troisième degré d'approche entre 0.0 et 1.0 de la température ambiante moyenne vers une température inférieure limite et une température supérieure limite respectivement selon une opération de fuzzification pour obtenir des degrés d'appartenance de la température moyenne ambiante à une série de températures comprenant la température inférieure limite, la température supérieure limite, au moins une température additionnelle inférieure à la température inférieure limite et au moins une température additionnelle supérieure à la température supérieure limite;
- un cinquième moyen 118 pour calculer une deuxième probabilité partielle de glaçage en additionnant le deuxième degré d'approche et le troisième degré d'approche;
- un sixième moyen 120 pour calculer une troisième probabilité partielle de glaçage en multipliant la première probabilité partielle de glaçage et la deuxième probabilité partielle de glaçage;
- un septième moyen 122 pour calculer pour calculer un quatrième degré d'approche et un cinquième degré d'approche entre 0.0 et 1.0 du rayonnement solaire ambiant moyen vers un rayonnement solaire inférieur limite et un rayonnement solaire supérieur limite respectivement selon une opération de fuzzification pour obtenir des degrés d'appartenance du rayonnement solaire ambiant moyen à une série de valeurs de rayonnement solaire comprenant le rayonnement solaire inférieur limite et le rayonnement solaire supérieur limite et au moins deux autres valeurs de rayonnement solaire entre le rayonnement solaire inférieur limite et le rayonnement solaire supérieur limite;
- un huitième moyen 124 pour calculer un indice de bonification par rayonnement solaire selon la formule

$$\text{indice de bonification} = ((\text{quatrième degré d'approche}) \times 0.1) + 1.0;$$

- un neuvième moyen 126 pour calculer un indice de pénalisation par rayonnement solaire selon la formule

$$\text{indice de pénalisation} = 1.0 - ((\text{cinquième degré d'approche}) \times 0.1);$$

- un dixième moyen 128 pour calculer la probabilité de glaçage amplifiée en multipliant la troisième probabilité partielle de glaçage par l'indice de bonification et l'indice de pénalisation; et
- un onzième moyen 130 pour calculer la probabilité de glaçage globale qui est égale à la probabilité de glaçage amplifiée si la probabilité de glaçage amplifiée est égale ou inférieure à 1.0 et la probabilité de glaçage globale est égale à 1.0 si la probabilité de glaçage amplifiée est supérieure à 1.0.

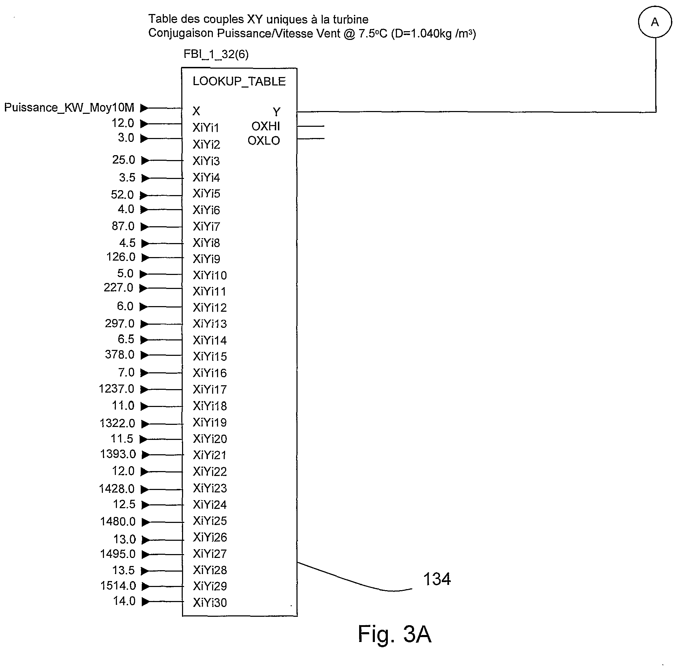

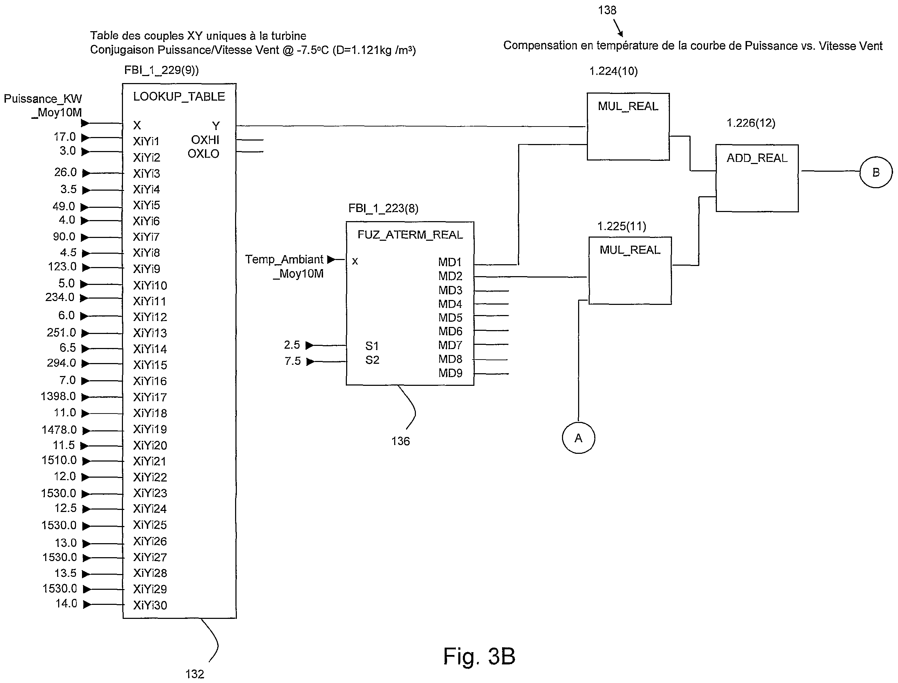

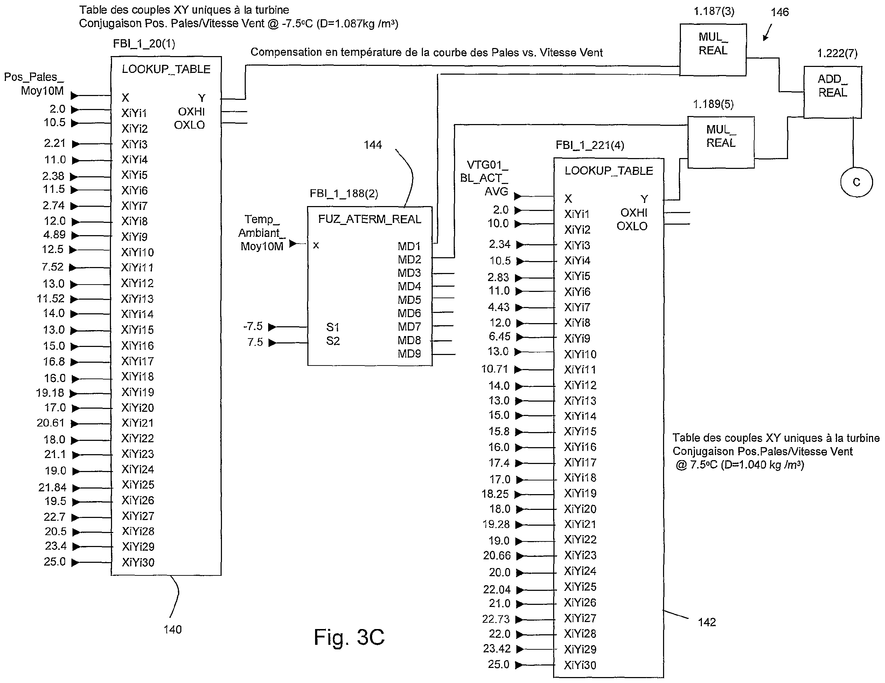

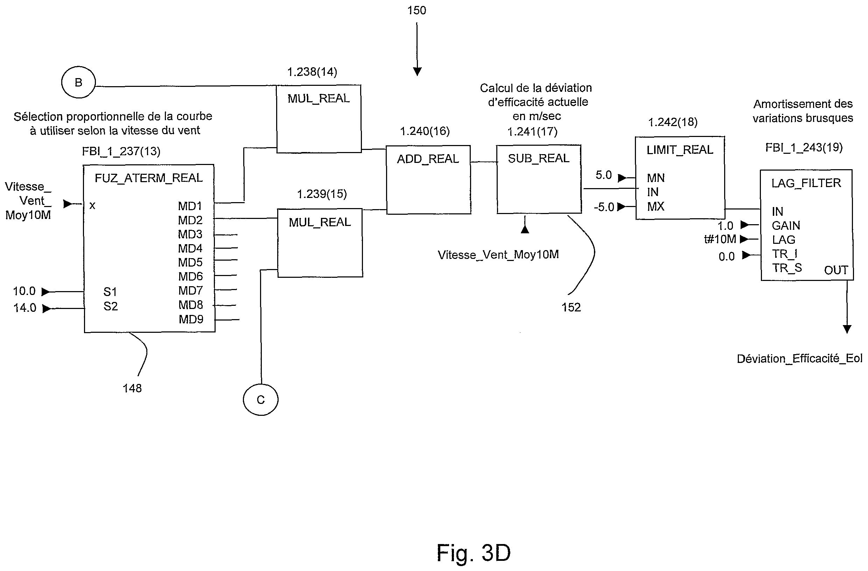

Tel qu'illustré dans les Figures 3A à 3D, préférablement, le deuxième calculateur 24 comprend :

- un douzième moyen 132 pour calculer une première vitesse de vent théorique associée avec la puissance moyenne générée par l'éolienne, ladite première vitesse de vent théorique étant obtenue par interpolation d'une deuxième courbe caractéristique de puissance générée en fonction de la vitesse de vent à une température la plus basse mesurée autour l'éolienne;
- un treizième moyen 134 pour calculer une deuxième vitesse de vent théorique associée avec la puissance moyenne générée par l'éolienne, ladite deuxième vitesse de vent théorique étant obtenue par interpolation d'une troisième courbe caractéristique de puissance générée en fonction de la vitesse de vent à une température la plus haute mesurée autour l'éolienne;
- un quatorzième moyen 136 pour calculer un sixième degré d'approche et un septième degré d'approche entre 0.0 et 1.0 de la température ambiante moyenne vers une première température critique et une deuxième température critique respectivement selon une opération de fuzzification pour obtenir des degrés d'appartenance de la température moyenne ambiante à la première température critique et la deuxième température critique;

- un quinzième moyen 138 pour calculer une première vitesse de vent théorique intermédiaire en multipliant le sixième degré d'approche par la première vitesse de vent théorique, une deuxième vitesse de vent théorique intermédiaire en multipliant le septième degré d'approche par la deuxième vitesse de vent théorique, et une troisième vitesse de vent théorique intermédiaire en additionnant la première vitesse de vent théorique intermédiaire et la deuxième vitesse de vent théorique intermédiaire;
- un seizième moyen 140 pour calculer une troisième vitesse de vent théorique associée avec la position moyenne des pales de l'éolienne, ladite troisième vitesse de vent théorique étant obtenue par interpolation d'une troisième courbe caractéristique de la position des pales en fonction de la vitesse de vent à la température la plus basse mesurée autour l'éolienne;
- un dix-septième moyen 142 pour calculer une quatrième vitesse de vent théorique associée avec la position moyenne des pales de l'éolienne, ladite quatrième vitesse de vent théorique étant obtenue par interpolation d'une quatrième courbe caractéristique de la position des pales en fonction de la vitesse de vent à la température la plus haute mesurée autour l'éolienne;
- un dix-huitième moyen 144 pour calculer un huitième degré d'approche et un neuvième degré d'approche entre 0.0 et 1.0 de la température ambiante moyenne vers une troisième température critique et une quatrième température critique respectivement selon une opération de fuzzification pour obtenir des degrés d'appartenance de la température moyenne ambiante à la troisième température critique et la quatrième température critique;
- un dix-neuvième moyen 146 pour calculer une quatrième vitesse de vent théorique intermédiaire en multipliant le huitième degré d'approche par la troisième vitesse de vent théorique, une cinquième vitesse de vent théorique intermédiaire en multipliant le neuvième degré d'approche par la quatrième vitesse de vent théorique, et une sixième vitesse de vent théorique intermédiaire en additionnant la quatrième vitesse de vent théorique intermédiaire et la cinquième vitesse de vent théorique intermédiaire;
- un vingtième moyen 148 pour calculer un dixième degré d'approche et un onzième degré d'approche entre 0.0 et 1.0 de la vitesse de vent moyenne autour de l'éolienne vers une première vitesse de vent critique et une deuxième vitesse de vent critique respectivement selon une opération de fuzzification pour obtenir des degrés d'appartenance de la vitesse de vent moyenne à la première vitesse de vent critique et la deuxième vitesse de vent critique;
- un vingt-et-unième moyen 150 pour calculer une septième vitesse de vent théorique intermédiaire en multipliant le dixième degré d'approche par la troisième vitesse de vent théorique intermédiaire, une huitième vitesse de vent théorique intermédiaire en multipliant l'onzième degré d'approche par la sixième vitesse de vent théorique intermédiaire, et une neuvième vitesse de vent théorique intermédiaire en additionnant la septième vitesse de vent théorique intermédiaire et la huitième vitesse de vent théorique intermédiaire; et
- un vingt-deuxième moyen 152 pour calculer la déviation entre l'efficacité actuelle et l'efficacité moyenne en soustrayant la vitesse de vent moyenne autour de l'éolienne de la neuvième vitesse de vent intermédiaire.

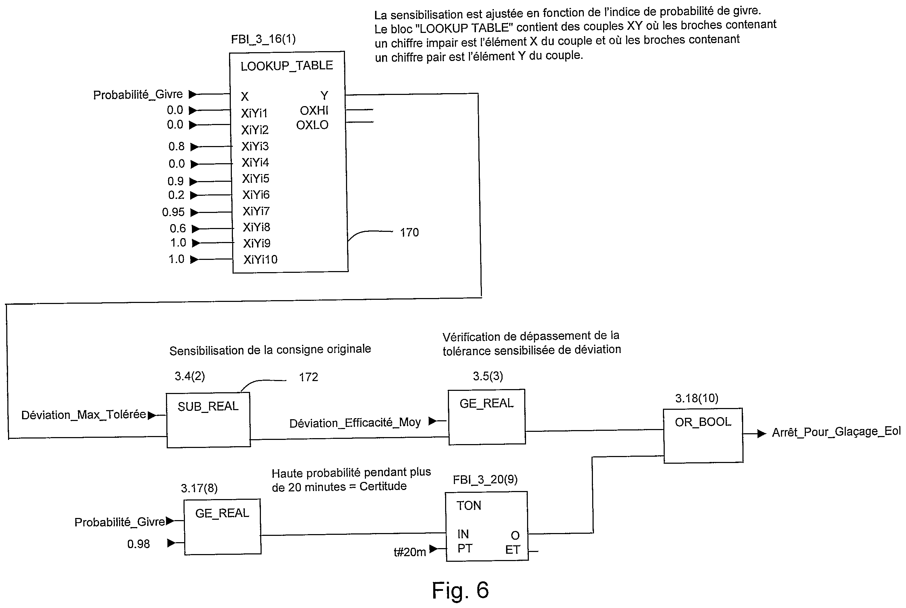

Préférablement, tel qu'illustré sur la Figure 6, le premier calculateur comprend un vingt-troisième moyen pour comparer la probabilité globale de glaçage avec une probabilité de dépassement, préférablement 98%, activer une minuterie si la valeur de la probabilité globale de glaçage est égale ou supérieure à la probabilité de dépassement, remettre à zéro la minuterie si la valeur de la probabilité globale de glaçage est inférieure à la probabilité de dépassement, et le contrôleur arrête l'éolienne si la minuterie demeure active pendant une durée au-delà d'une période de temps critique, préférablement 20 minutes.

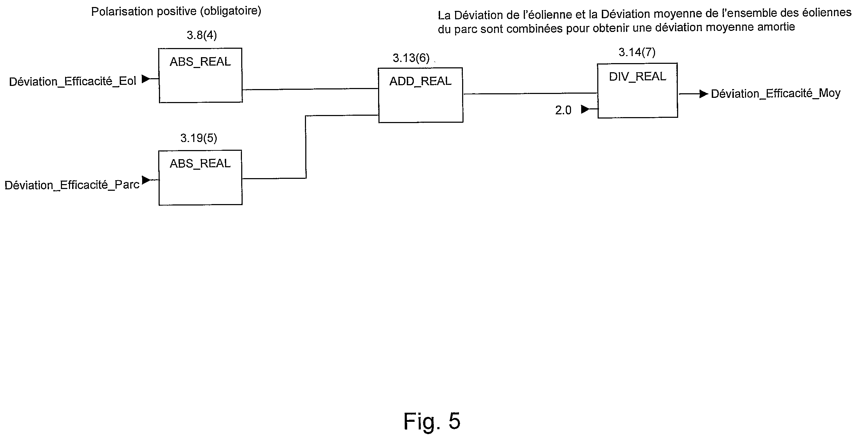

Préférablement, tel qu'illustré sur la Figure 5, le deuxième calculateur comprend un moyen 160 pour ajuster la déviation entre l'efficacité actuelle et l'efficacité moyenne pour l'éolienne avant de comparer la déviation à la tolérance de déviation, en additionnant à la déviation une moyenne de déviations entre l'efficacité actuelle et l'efficacité moyenne pour une série d'autres éoliennes adjacentes à l'éolienne comprenant le système de contrôle et en divisant le résultat de l'addition par deux. Ce processus permet d'ajouter un effet du parc dans son ensemble à la déviation qui sera ensuite utilisée pour vérifier s'il y a dépassement ou non de la tolérance.

Préférablement, la mémoire garde en mémoire des courbes d'efficacité de référence et une tolérance de déviation d'efficacité. De plus, le système comprend en outre des capteurs pour détecter une puissance moyenne générée par l'éolienne, une position des pales moyenne de l'éolienne, et une vitesse de vent moyenne autour de l'éolienne, et générer des signaux d'efficacité en conséquence. Le système comprend aussi un deuxième calculateur pour calculer une efficacité actuelle de l'éolienne à partir des signaux d'efficacité. Tel qu'illustré sur la Figure 6, le système comprend également un troisième calculateur comprenant un premier moyen 170 pour calculer un paramètre de sensibilisation associée avec la probabilité de glaçage globale, ledit paramètre de sensibilisation étant obtenu par interpolation d'une courbe caractéristique du paramètre de sensibilisation en fonction de la probabilité de glaçage, et un deuxième moyen 172 pour calculer une tolérance de déviation d'efficacité sensibilisée en soustrayant le paramètre de sensibilisation de la tolérance de déviation d'efficacité. Le contrôleur arrête l'éolienne lorsqu'une déviation entre l'efficacité actuelle et une efficacité moyenne calculée à partir des courbes d'efficacité de référence est supérieure à la tolérance de déviation d'efficacité sensibilisée.

L'invention a aussi pour objet une méthode pour contrôler une éolienne, comprenant les étapes de:

a) mesurer des conditions climatiques ambiantes, et générer des signaux météorologiques en conséquence;
b) garder dans une mémoire une tolérance de glaçage;
c) calculer une probabilité de glaçage globale à partir des signaux météorologiques; et
d) arrêter l'éolienne lorsque la probabilité de glaçage globale est supérieure à la tolérance de glaçage.

Préférablement, la méthode de contrôler l'éolienne comprend en outre les étapes de :

e) garder dans la mémoire des courbes d'efficacité de référence et une tolérance de déviation d'efficacité;
f) détecter une puissance moyenne générée par l'éolienne, une position des pales moyenne de l'éolienne, et une vitesse de vent moyenne autour de l'éolienne, et générer des signaux d'efficacité en conséquence;
g) calculer une efficacité actuelle de l'éolienne à partir des signaux d'efficacité;
h) arrêter l'éolienne lorsqu'une déviation entre l'efficacité actuelle et une efficacité moyenne calculée à partir des courbes d'efficacité de référence est supérieure à la tolérance de déviation d'efficacité.

Préférablement, selon cette méthode, les conditions climatiques comprennent une température ambiante moyenne autour de l'éolienne, une humidité relative ambiante moyenne autour de l'éolienne, et un rayonnement solaire ambiant moyen autour de l'éolienne et l'étape c) comprend les sous-étapes de:

i) calculer une première consigne d'humidité relative associée avec la température ambiante moyenne, ladite première consigne étant obtenue par interpolation d'une première courbe caractéristique de consignes caractéristiques d'humidité relative en fonction d'une température ambiante caractéristique;
ii) calculer une deuxième consigne d'humidité relative résultant d'une soustraction d'une valeur de limite inférieure de la première consigne;
iii) calculer une première probabilité partielle de glaçage correspondant à un premier degré d'approche entre 0.0 et 1.0 de l'humidité moyenne ambiante vers la première consigne selon une opération de fuzzification pour obtenir des degrés d'appartenance de l'humidité moyenne ambiante à la première consigne et la deuxième consigne;
iv) calculer un deuxième degré d'approche et un troisième degré d'approche entre 0.0 et 1.0 de la température ambiante moyenne vers une température inférieure limite et une température supérieure limite respectivement selon une opération de fuzzification pour obtenir des degrés d'appartenance de la température moyenne ambiante à une série de températures comprenant la température inférieure limite, la température supérieure limite, au moins une température additionnelle inférieure à la température inférieure limite et au moins une température additionnelle supérieure à la température supérieure limite;

v) calculer une deuxième probabilité partielle de glaçage en additionnant le deuxième degré d'approche et le troisième degré d'approche;

vi) calculer une troisième probabilité partielle de glaçage en multipliant la première probabilité partielle de glaçage et la deuxième probabilité partielle de glaçage;

vii) calculer pour calculer un quatrième degré d'approche et un cinquième degré d'approche entre 0.0 et 1.0 du rayonnement solaire ambiant moyen vers un rayonnement solaire inférieur limite et un rayonnement solaire supérieur limite respectivement selon une opération de fuzzification pour obtenir des degrés d'appartenance du rayonnement solaire ambiant moyen à une série de valeurs de rayonnement solaire comprenant le rayonnement solaire inférieur limite et le rayonnement solaire supérieur limite et au moins deux autres valeurs de rayonnement solaire entre le rayonnement solaire inférieur limite et le rayonnement solaire supérieur limite;

viii) calculer un indice de bonification par rayonnement solaire selon la formule

$$\text{indice de bonification} = ((\text{quatrième degré d'approche}) \times 0.1) + 1.0;$$

ix) calculer un indice de pénalisation par rayonnement solaire selon la formule

$$\text{indice de pénalisation} = 1.0 - ((\text{cinquième degré d'approche}) \times 0.1);$$

x) calculer la probabilité de glaçage amplifiée en multipliant la troisième probabilité partielle de glaçage par l'indice de bonification et l'indice de pénalisation; et

xi) calculer la probabilité de glaçage qui est égale à la probabilité de glaçage amplifiée si la probabilité de glaçage amplifiée est égale ou inférieure à 1.0 et la probabilité de glaçage est égale à 1.0 si la probabilité de glaçage amplifiée est supérieure à 1.0.

Préférablement, l'étape g) comprend les sous-étapes de:

xii) calculer une première vitesse de vent théorique associée avec la puissance moyenne générée par l'éolienne, ladite première vitesse de vent théorique étant obtenue par interpolation d'une deuxième courbe caractéristique de puissance générée en fonction de la vitesse de vent à une température la plus basse mesurée autour l'éolienne;

xiii) calculer une deuxième vitesse de vent théorique associée avec la puissance moyenne générée par l'éolienne, ladite deuxième vitesse de vent théorique étant obtenue par interpolation d'une troisième courbe caractéristique de puissance générée en fonction de la vitesse de vent à une température la plus haute mesurée autour l'éolienne;

xiv) calculer un sixième degré d'approche et un septième degré d'approche entre 0.0 et 1.0 de la température ambiante moyenne vers une première température critique et une deuxième température critique respectivement selon une opération de fuzzification pour obtenir des degrés d'appartenance de la température moyenne ambiante à la première température critique et la deuxième température critique;

xv) calculer une première vitesse de vent théorique intermédiaire en multipliant le sixième degré d'approche par la première vitesse de vent théorique, une deuxième vitesse de vent théorique intermédiaire en multipliant le septième degré d'approche par la deuxième vitesse de vent théorique, et une troisième vitesse de vent théorique intermédiaire en additionnant la première vitesse de vent théorique intermédiaire et la deuxième vitesse de vent théorique intermédiaire;

xvi) calculer une troisième vitesse de vent théorique associée avec la position moyenne des pales de l'éolienne, ladite troisième vitesse de vent théorique étant obtenue par interpolation d'une troisième courbe caractéristique de la position des pales en fonction de la vitesse de vent à la température la plus basse mesurée autour l'éolienne;

xvii) calculer une quatrième vitesse de vent théorique associée avec la position moyenne des pales de l'éolienne, ladite quatrième vitesse de vent théorique étant obtenue par interpolation d'une quatrième courbe caractéristique de la position des pales en fonction de la vitesse de vent à la température la plus haute mesurée autour l'éolienne;

xviii) calculer un huitième degré d'approche et un neuvième degré d'approche entre 0.0 et 1.0 de la température ambiante moyenne vers une troisième température critique et une quatrième température critique respectivement selon une opération de fuzzification pour obtenir des degrés d'appartenance de la température moyenne ambiante à la troisième température critique et la quatrième température critique;

xix) calculer une quatrième vitesse de vent théorique intermédiaire en multipliant le huitième degré d'approche par la troisième vitesse de vent théorique, une cinquième vitesse de vent théorique intermédiaire en multipliant le neuvième degré d'approche par la quatrième vitesse de vent théorique, et une sixième vitesse de vent théorique intermédiaire en additionnant la quatrième vitesse de vent théorique intermédiaire et la cinquième vitesse de vent théorique intermédiaire;

xx) calculer un dixième degré d'approche et un onzième degré d'approche entre 0.0 et 1.0 de la vitesse de vent moyenne autour de l'éolienne vers une première vitesse de vent critique et une deuxième vitesse de vent critique respectivement selon une opération de fuzzification pour obtenir des degrés d'appartenance de la vitesse de vent moyenne à la première vitesse de vent critique et la deuxième vitesse de vent critique;

xxi) calculer une septième vitesse de vent théorique intermédiaire en multipliant le dixième degré d'approche par la troisième vitesse de vent théorique intermédiaire, une huitième vitesse de vent théorique intermédiaire en multipliant l'onzième degré d'approche par la sixième vitesse de vent théorique intermédiaire, et une neuvième vitesse de vent théorique intermédiaire en additionnant la septième vitesse de vent théorique intermédiaire et la huitième vitesse de vent théorique intermédiaire; et

xxii) calculer la déviation entre l'efficacité actuelle et l'efficacité moyenne en soustrayant la vitesse de vent moyenne autour de l'éolienne de la neuvième vitesse de vent intermédiaire.

Préférablement, la méthode de contrôler l'éolienne selon l'invention comprend en outre l'étape d'ajuster la déviation entre l'efficacité actuelle et l'efficacité moyenne pour l'éolienne avant de comparer la déviation à la tolérance de déviation, en additionnant à la déviation une moyenne de déviations entre l'efficacité actuelle et l'efficacité moyenne pour une série d'autres éoliennes adjacentes à l'éolienne comprenant le système de contrôle et en divisant le résultat de l'addition par deux.

Préférablement, la méthode de contrôler l'éolienne selon l'invention, comprend en outre les étapes de :

e) garder dans la mémoire des courbes d'efficacité de référence et une tolérance de déviation d'efficacité;

f) détecter une puissance moyenne générée par l'éolienne, une position des pales moyenne de l'éolienne, et une vitesse de vent moyenne autour de l'éolienne, et générer des signaux d'efficacité en conséquence;

g) calculer une efficacité actuelle de l'éolienne à partir des signaux d'efficacité;

h) calculer un paramètre de sensibilisation associée avec la probabilité de glaçage globale, ledit paramètre de sensibilisation étant obtenu par interpolation d'une courbe caractéristique du paramètre de sensibilisation en fonction de la probabilité de glaçage;

i) calculer une tolérance de déviation d'efficacité sensibilisée en soustrayant le paramètre de sensibilisation de la tolérance de déviation d'efficacité; et

j) arrêter l'éolienne lorsqu'une déviation entre l'efficacité actuelle et une efficacité moyenne calculée à partir des courbes d'efficacité de référence est supérieure à la tolérance de déviation d'efficacité sensibilisée.

L'objectif est d'anticiper la formation de givre sur les pales d'une éolienne et d'en commander l'arrêt jusqu'à ce que les conditions climatiques favorisant cette formation de givre disparaissent.

Mise en oeuvre

Tel qu'illustré par la figure 1, le système doit se composer au moins d'un automate (ou tout autre système de caractéristiques semblables) dans lequel sera implanté le programme (mécanisme logiciel), d'une éolienne, des composantes nécessaires pour acheminer les données d'opération de l'éolienne vers l'automate et d'un ensemble d'équipements de météorologie comprenant une sonde de température, une sonde d'humidité relative et une sonde de mesure du rayonnement solaire (pyranomètre). Le tout doit être alimenté et inter-relié.

Le mécanisme logiciel effectue séquentiellement et répétitivement plusieurs tâches (processus) dont principalement celles-ci :

- Lecture des conditions climatiques et calculs des moyennes (processus CALCUL_MOYENNES)
- Mesure de l'efficacité de l'éolienne (processus MESURE_EFFICACITÉ)
- Calcul d'un indice de givre (processus CALCUL_PROB_GIVRE)
- Émission d'une commande d'arrêt si nécessaire (processus GESTION_ARRÊT)

Lecture des conditions climatiques et calculs des moyennes :

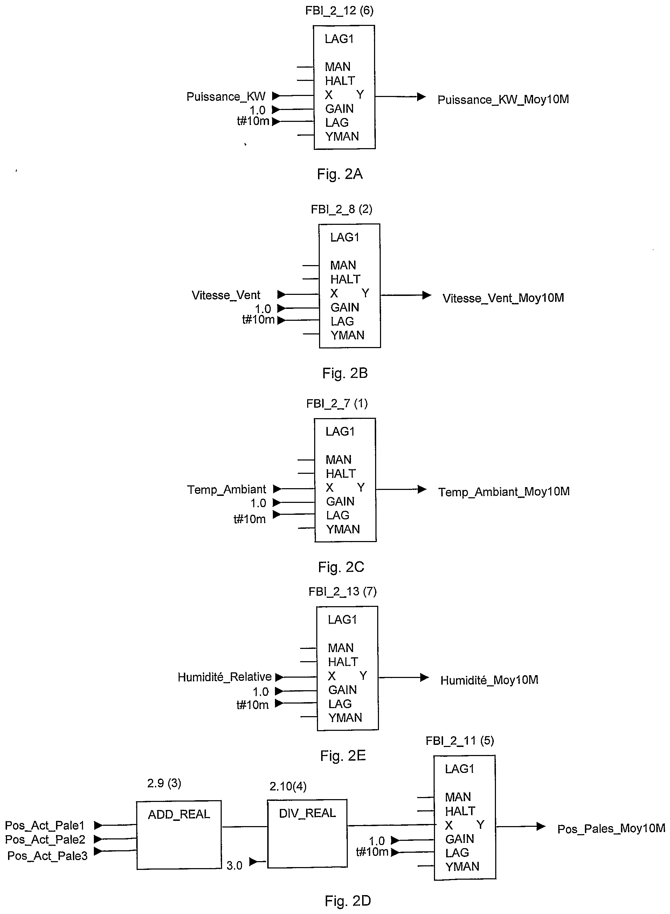

Tel qu'illustré dans les Figures 2A à 2E, le système par le processus CALCUL_MOYENNES fait des lectures en temps réel des conditions climatiques (humidité relative, température ambiante et rayonnement solaire). Il utilise ces lectures pour calculer des moyennes 10 minutes afin d'atténuer toute variation brusque.

Plus particulièrement, ce processus en boucle utilise les données en temps réel provenant de la base de données d'opération du parc (avec un accès aux données d'opération de chacune des éoliennes du parc) et calcule des moyennes de 10 minutes à partir des données en temps réel. Le but des moyennes 10 minutes est d'adoucir les variations dues aux bourrasques de vent et aux délais de communication des données.

Le tableau suivant présente les données d'entrées de ce processus :

| ENTRÉES | Description |
|---|---|
| Puissance_KW | Puissance actuelle livrée par l'éolienne en kW. Données provenant de la base de données du parc. |
| Vitesse_Vent | Vitesse du vent telle que vue par l'éolienne, en m/sec. Données provenant de la base de données du parc. |
| Pos_Act_Pale1 | Position actuelle de la pale #1 de l'éolienne, en degrés. Données provenant de la base de données du parc. |
| Pos_Act_Pale2 | Position actuelle de la pale #2 de l'éolienne, en degrés. Données provenant de la base de données du parc. |
| Pos_Act_Pale3 | Position actuelle de la pale #3 de l'éolienne, en degrés. Données provenant de la base de données du parc. |
| Temp_Ambiante | Température ambiante sur le site, en degrés Celcius. Données provenant de l'instrument de mesure du mât météorologique. |
| Humidité_Relative | Humidité relative ambiante sur le site, en %. Données provenant de l'instrument de mesure du mât météorologique. |

Le tableau suivant identifie des blocs fonctions dans les Figures 2A à 2E :

| Numéro de Figure | Code du bloc | Description |
|---|---|---|
| 2A | FBI_2_12 | Puissance de l'éolienne, calcul d'une moyenne 10 minutes |
| 2B | FBI_2_8 | Vitesse du vent vue par l'éolienne, calcul d'une moyenne 10 minutes |
| 2C | FBI_2_7 | Température ambiante sur le site, calcul d'une moyenne 10 minutes |
| 2D | FBI_2_9 à FBI_2_11 | Position des pales de l'éolienne, calcul d'une moyenne 10 minutes |
| 2E | FBI_2_13 | Humidité relative ambiante sur le site, calcul d'une moyenne 10 minutes |

Mesure de l'efficacité de l'éolienne:

Tel qu'illustré dans les Figures 4A à 4D, le système par le processus MESURE_EFFICACITÉ reçoit les données d'opération des éoliennes en provenance de la base de données du parc dans le but de les comparer avec une courbe de production référentielle. La courbe de production référentielle est dynamiquement calculée à partir d'une compilation moyenne sur une longue période du comportement de chacune des éoliennes en fonction de la vitesse du vent, de la position des pales, de la puissance produite et de la température ambiante. À l'aide de cette courbe de production référentielle, il devient possible d'estimer avec précision ce que devrait être l'efficacité réelle de l'éolienne dans les conditions d'opération actuelles et donc de quantifier toute déviation d'efficacité en temps réel, et ce, pour chacune des éoliennes du parc.

Plus particulièrement, ce processus en boucle mesure la déviation de l'efficacité à partir des moyennes 10 minutes calculées dans les processus CALCUL_MOYENNES et des courbes XY représentant le comportement typique de l'éolienne en fonction de la vitesse du vent.

La première étape exécutée par le processus est de trouver, par la méthode de corrélation, quelle est la vitesse du vent théoriquement associée à la puissance actuelle et/ou à la position des pales actuelle.

A partir d'une collection de données construites sur une longue période d'enregistrement, quatre courbes de comportement typique de l'éolienne ont été recréées.

Deux courbes de puissance en fonction de la vitesse du vent sont utilisées:

A) Une courbe de puissance à la température la plus basse mesurée sur le site.
B) Une courbe de puissance à la température la plus élevée mesurée sur le site.

Puisque la puissance de l'éolienne plafonne à partir d'une certaine vitesse de vent (dans l'exemple ci-dessous: à partir

de 12.5 m/sec la puissance plafonne à 1530 KW), le système doit transférer sur les courbes suivantes la position des pales en fonction de la vitesse du vent :

C) Une courbe de position des pales à la température la plus basse mesurée sur le site.
D) Une courbe de position des pales à la température la plus élevée mesurée sur le site.

Le système évalue en continu la température ambiante actuelle ainsi que la vitesse du vent actuelle afin de déterminer vers laquelle de ces quatre courbes le système doit tendre afin de trouver la bonne vitesse du vent théoriquement associée à la puissance actuelle et/ou à la position des pales actuelle.
Les blocs LOOKUP_TABLE contiennent les quatre courbes de puissance et de position des pales.
Les blocs FUZ_ATERM_REAL déterminent le degré d'appartenance de la valeur trouvée à l'entrée X aux points d'appui trouvés en S1 et S2. Les degrés d'appartenance (entre 0.0 et 1.0) se retrouvent sur les sorties MD1 et MD2.
Le bloc LIMIT_REAL a pour fonction de limiter en minimum et en maximum la valeur trouvée à l'entrée IN. La valeur de sortie sera donc égale à IN si la valeur de IN est à l'intérieur des limites MIN et MAX. Sinon, la valeur limitée à MIN ou à MAX.
Les autres blocs de type MUL_REAL, ADD_REAL et SUB_REAL sont des blocs mathématiques standards.

**[0035]** La deuxième étape exécutée par le processus est de calculer la déviation de l'efficacité actuelle simplement en soustrayant la vitesse du vent théorique trouvée de la vitesse du vent actuelle. La déviation de l'efficacité mesurée sera donc exprimée en mètre/seconde. Cette déviation de l'efficacité mesurée est ensuite passée dans un filtre (LAG_FILTER) dont la fonction est d'adoucir toute variation brusque.

**[0036]** Le tableau suivant présente les données d'entrées de ce processus :

| ENTRÉES | Description |
|---|---|
| Puissance_KW_Moy. 10M | Puissance moyenne 10 minutes livrée par l'éolienne en KW, telle que calculée dans le processus CALCUL_MOYENNES. |
| Vitesse_Vent-Moy. 10M | Vitesse moyenne 10 minutes du vent en mètre/seconde, telle que calculée dans le processus CALCUL_MOYENNES. |
| Pos_Pales_Moy. 10 M | Position moyenne 10 minutes des pales de l'éolienne en degrés, telle que calculée dans le processus CALCUL_MOYENNES. |
| Temp_Ambiant_Moy. 10 M | Température moyenne 10 minutes en degrés Celsius, telle que calculée dans le processus CALCUL_MOYENNES. |

**[0037]** Comme sortie on obtient Déviation_Efficacité_Éol., une déviation de l'efficacité mesurée pour cette éolienne en mètre/seconde.

**[0038]** Le tableau suivant identifie des blocs fonctions dans les Figures 4A à 4D :

| Numéro de Figure | Code du bloc | Description |
|---|---|---|
| 4A | FBI_4_43 | Courbe XY où: |
| | | - X est la température ambiante<br>- Y est une consigne d'humidité relative<br>La sortie Y est donc une consigne d'humidité relative en fonction de la température ambiante. |
| 4A | FBI_4_24 | Détermine le degré d'approche (entre 0,0 et 1.0) de l'humidité relative actuelle vers les points d'appui S1 et S2. Plus la valeur trouvée à l'entrée X s'approche de S2, plus la sortie MD2 s'approche de 1.0. |
| 4B | FBI_4_25 | Détermine le degré d'approche (entre 0.0 et 1.0) de la température ambiante actuelle vers les points d'appui S1, S2, S3 et S4. Plus la valeur trouvée à l'entrée X s'approche de S2, plus la sortie MD2 s'approche de 1.0. Plus la valeur trouvée à l'entrée X s'approche de S3, plus la sortie MD3 s'approche de 1.0. |
| 4B | FBI_4_26 | L'addition des indices d'approche permet de déterminer qu'entre -7 ºC et 1.7 ºC nous obtiendrons un indice = à 1.0. C'est donc dire que c'est entre ces deux températures que les risques de formation de givre sont élevés. |

(suite)

| Numéro de Figure | Code du bloc | Description |
|---|---|---|
| 4D | FBI_4_27 | Combinaison des indices d'approche déterminée pour l'humidité relative et la température ambiante. |
| 4C | FBI_4_28 | Détermine le degré d'approche (entre 0.0 et 1.0) du rayonnement solaire vers les points d'appui S1 et S2. Plus la valeur trouvée à l'entrée X s'approche de S1, plus la sortie MD1 s'approche |
| | | de 1.0 |
| 4C | 4_29 et 4_32 | Calcul d'un indice d'amplification en fonction du rayonnement solaire. En situation de basse énergie, l'indice d'approche sera bonifié. En situation de haute énergie, l'indice d'approche sera pénalisé. |
| 4C | 4_30 | Bonification de l'indice d'approche. |
| 4C | 4_33 | Pénalisation de l'indice d'approche. |
| 4D | 4_41 | Limitation de l'indice d'approche global |
| 4D | 4_40 | Valide les signaux de: humidité relative; température; et rayonnement solaire. Si une sonde est défectueuse, l'indice de probabilité passe à -1. |

Tel qu'illustré dans la Figure 5, afin de s'assurer que la déviation perçue sur l'éolienne est également perceptible sur l'ensemble du parc, la déviation d'efficacité de l'éolienne est combinée à la déviation d'efficacité moyenne calculée pour l'ensemble des éoliennes du parc. C'est cette dernière combinaison qui est utilisée par le système pour déterminer si l'éolienne doit être arrêtée pour une déviation hors tolérance. Ainsi, selon le processus illustré sur la Figure 5, les déviations font l'objet d'une polarisation positive obligatoire. Ensuite, la déviation de l'éolienne et la déviation moyenne de l'ensemble des éoliennes du parc sont combinées obtenir une déviation moyenne amortie.

Calcul d'un indice de givre :

Tel qu'illustré dans les Figures 3A à 3D, le système par le processus CALCUL_PROB_GIVRE utilise les données climatiques moyennes 10 minutes pour les passer dans des fonctions mathématiques, préférablement effectuées par un procédé à base de logique floue, dont le résultat final est un indice de risque de glaçage. Une étude sur le givre a été réalisée afin de dégager les conditions climatiques favorisant la formation du givre sur les pales d'une éolienne. Le système vérifie donc en continu les conditions climatiques et calcule un indice d'approche des conditions favorables à la formation du givre.

Plus particulièrement, ce processus en boucle calcule en continu un indice de probabilité de givre en fonction des données climatiques lues en temps réel sur le site à partir des sondes météorologiques installées sur un mât météorologique préférablement implanté au centre du parc d'éoliennes à surveiller.

A l'aide des lectures de la température ambiante, de l'humidité relative ambiante et du rayonnement solaire, le système peut estimer les risques de formation de givre sur les pales des éoliennes du parc.

Suite à une étude sur le comportement des conditions climatiques conduisant à la formation de givre sur les pales d'une éolienne, il a été possible de déterminer que l'humidité relative, la température ambiante, ainsi que le rayonnement solaire jouaient les rôles clés dans le processus. Il a également été possible de dégager les différentes combinaisons de ces facteurs clés pour lesquels il est possible que du givre se forme sur les pales du éolienne.

Le processus en boucle suivant utilise une courbe en température/humidité et des blocs de fuzzification afin de recréer les différentes combinaisons des conditions climatiques favorisant la formation de givre sur les pales d'une éolienne. Les sorties des blocs de fuzzification FUZ_ATERM_REAL indiquent le degré d'approche vers les conditions climatiques favorisant la formation de givre. Tous les degrés d'approche sont ensuite combinés afin de créer l'indice global de probabilité de givre.

Le tableau suivant présente les données d'entrées de ce processus :

| ENTRÉES | Description |
|---|---|
| Humidité_Moy 10M | Humidité relative moyenne 10 minutes en % telle que calculée dans le processus CALCUL_MOYENNES. |

(suite)

| ENTRÉES | Description |
|---------|-------------|
| Temp_Ambiant_Moy 10M | Température moyenne 10 minutes en degrés Celcius, telle que calculée dans le processus CALCUL_MOYENNES. |
| Sondes_OK | Bit de validation des signaux des sondes météorologiques. Les signaux sont validés par un processus externe afin de détecter tout signal erratique. Le cas échéant, le bit Sondes_OK passe à 0 obligeant l'indice de probabilité de givre à passer à -1. Le système hôte peut alors entreprendre d'envoyer une alarme à un système superviseur. |

Comme donnée de sortie, on obtient Probabilité_Givre, un indice de probabilité de formation de givre sur les pales d'une éolienne exprimé en pourcentage. Cet indice sera utilisé dans un autre processus pour sensibiliser (diminuer) la tolérance à la déviation d'efficacité (tel qu'illustré sur la Figure 6) ou encore pour déclencher l'arrêt de l'éolienne au moment où l'interprétation de l'indice permet de passer de "probabilité de givre" à "certitude de givre".

Le tableau suivant identifie des blocs fonctions dans les Figures 3A à 3D :

| Numéro de Figure | Code du bloc | Description |
|------------------|--------------|-------------|
| 3A | FBI_1_32 | Table des couples XY uniques à la turbine. Conjugaison Puissance / Vitesse Vent @ |
| | | 7.5 ºC (D= 1.040 kg/M$^3$) |
| 3B | FBI_1_228 | Table des couples XY uniques à la turbine. Conjugaison Puissance / Vitesse Vent @-7.5 ºC (D=1.121 kg/M$^3$) |
| 3B | 1_224, 1_225 et 1_226 | Compensation en température de la courbe de Puissance vs. Vitesse Vent. |
| 3C | FBI_1_20 | Table des couples XY uniques à la turbine. Conjugaison Pos. Pales / Vitesse Vent @-7.5 ºC (D=1.087 kg/M$^3$) |
| 3C | FBI_1_221 | Table des couples XY uniques à la turbine. Conjugaison Pos. Pales / Vitesse Vent @ 7.5 ºC (D=1.040 kg/M$^3$) |
| 3C | FBI_1_188 | Compensation en température de la courbe des Pales vs. Vitesse. |
| 3D | FBI_1_237 | Sélection proportionnelle de la courbe à utiliser selon la vitesse du vent. |
| 3D | 1_241 | Calcul de la déviation d'efficacité actuelle en m/sec. |
| 3D | FBI_1_243 | Amortissement des variations brusques |

Émission d'une commande d'arrêt

Tel qu'illustré dans les Figures 5 et 6, le système par le processus GESTION-ARRÊT vérifie en temps réel les indices de probabilité de givre et de déviation d'efficacité de l'ensemble des éoliennes du parc. Lorsque la moyenne (calculée par la combinaison de la moyenne de déviation d'efficacité des éoliennes du parc et de la déviation d'efficacité de l'éolienne surveillée) dépasse la limite tolérée, une commande d'arrêt est émise vers l'éolienne. La limite de déviation d'efficacité tolérée est ajustée en fonction de l'indice de probabilité de givre. Plus l'indice de probabilité de givre est élevé, moins grande sera la tolérance à la déviation d'efficacité. Ceci a pour effet de commander l'arrêt de l'éolienne au moindre signe d'accumulation de givre sur ses pales.

Il est également possible que le système commande préventivement l'arrêt de l'éolienne si l'indice de probabilité de givre affiche une très haute probabilité depuis plus de 20 minutes. L'arrêt préventif de l'éolienne devrait limiter l'accumulation de givre sur ses pales. Conséquemment, le temps d'arrêt pour dégivrage devrait être minimisé ainsi que les pertes de production associées à un arrêt prolongé.

Plus particulièrement, ce processus en boucle utilise la mesure de la déviation d'efficacité et l'indice de probabilité de givre afin de déterminer si l'éolienne doit être arrêtée.

La première étape exécutée par le processus est de traiter les déviations d'efficacité de l'éolienne et du parc afin de les polariser positivement (parce qu'il est effectivement possible que les déviations d'efficacité soient négatives), et de calculer une nouvelle déviation d'efficacité qui est en fait une moyenne des deux déviations d'efficacité. Le but de cette manoeuvre est d'imputer un "effet parc" à la mesure de la déviation de l'efficacité propre à l'éolienne avant de tempérer une déviation causée par une défaillance d'un équipement servant à la lecture d'une donnée-clé (puissance, position des pales, vitesse du vent). L'imputation de l'"effet parc" viendra atténuer cette erreur en s'assurant que plusieurs éoliennes sont affectées d'une déviation d'efficacité significative.

La deuxième étape exécutée par le processus est d'utiliser l'indice de probabilité de givre pour:

A) sensibiliser (abaisser) la consigne de tolérance à la déviation d'efficacité. Le bloc LOOKUP_TABLE contient une courbe de sensibilisation en fonction de l'indice de probabilité de givre. Plus l'indice est élevé (à l'entrée X), plus l'indice de sensibilisation sera également élevé jusqu'à l'atteinte de 1.0 mètre/seconde.
B) déclencher l'arrêt de l'éolienne si l'indice atteint un niveau de "certitude" de givre.

La dernière étape exécutée par le processus est de gérer le déclenchement de l'arrêt de l'éolienne dans les cas où:

A) la déviation de l'efficacité mesurée surpasse la consigne de tolérance.
B) l'indice de probabilité de givre affiche un niveau de "certitude" de givre.

Le tableau suivant présente les données d'entrées de ce processus :

| ENTRÉES | Description |
|---|---|
| Déviation_Efficacité_Éol | Déviation de l'efficacité de l'éolienne, en mètre par seconde, telle que mesurée par le processus MESURE_EFFICACITÉ. |
| Déviation_Efficacité_Parc | Déviation de l'efficacité du parc, en mètre par seconde. C'est en fait une moyenne de toutes les Déviation_Efficacité_Éol 1, 2, 3, ..., constituant le parc. |
| Déviation_Efficacité_Moy | Déviation de l'efficacité moyenne calculée à partir des déviations d'efficacité de l'éolienne et du parc en mètre par seconde. |
| Probabilité_Givre | Indice de probabilité de givre en % tel que calculé dans le processus CALCUL_PROB_GIVRE. |
| Déviation_Tolérée | Consigne de tolérance maximale à la déviation. Cette consigne est ajustée en tenant compte de plusieurs facteurs propres à l'éolienne et peut se situer entre 1.0 et 5.0 mètre/seconde. |
| Déviation_Efficacité_Moy | Déviation de l'efficacité moyenne calculée à partir des déviations d'efficacité de l'éolienne et du parc en mètre par seconde. |

Comme donnée de sortie, on obtient Arrêt_Pour_Glaçage_Éol, un bit de commande d'arrêt de l'éolienne. Ce bit sera envoyé à un processus gérant les commandes de départ/arrêt de l'éolienne propre au système de contrôle de l'éolienne et exclu de la présente demande de brevet.

Le tableau suivant identifie des blocs fonctions dans les Figures 5 et 6 :

| Numéro de Figure | Code du bloc | Description |
|---|---|---|
| 5 | 3_8 et 3_19 | Polarisation positive (Obligatoire) |
| 5 | 3_13 | La Déviation de l'éolienne et la Déviation moyenne de l'ensemble des éoliennes du parc sont combinées pour obtenir une déviation moyenne amortie. |
| 6 | FBI_3_16 | La sensibilisation est ajustée en fonction de l'indice de probabilité de givre. Le bloc "Lookup Table" contient des couples XY où les broches contenant un chiffre impair est l'élément X du couple où les broches contenant un chiffre pair est l'élément Y du couple. |
| 6 | 3_4 | Sensibilisation de la consigne originale. |

(suite)

| Numéro de Figure | Code du bloc | Description |
|---|---|---|
| 6 | 3_5 | Vérification de dépassement de la |
| | | tolérance sensibilisée de déviation. |
| 6 | 3_17 et FBI_3_20 | Haute probabilité pendant plus de 20 minutes = Certitude. |

Exemples de calculs

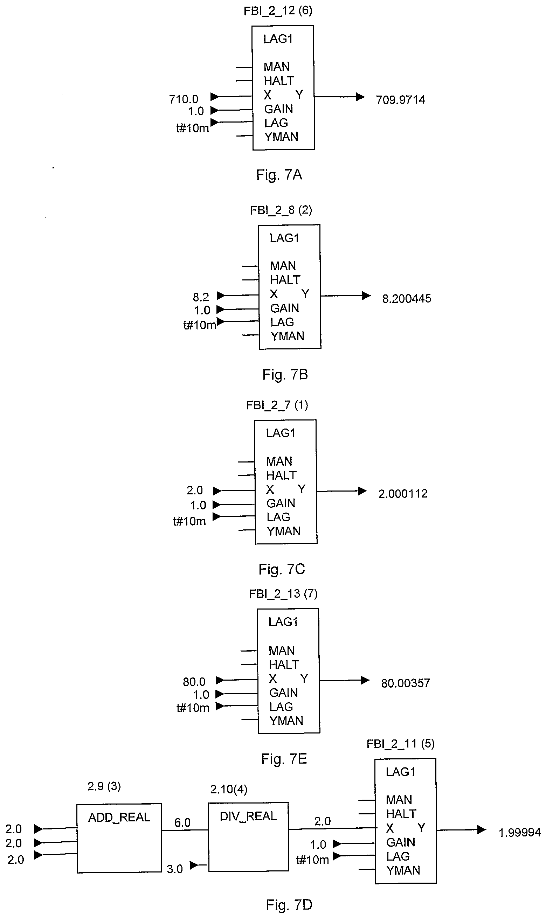

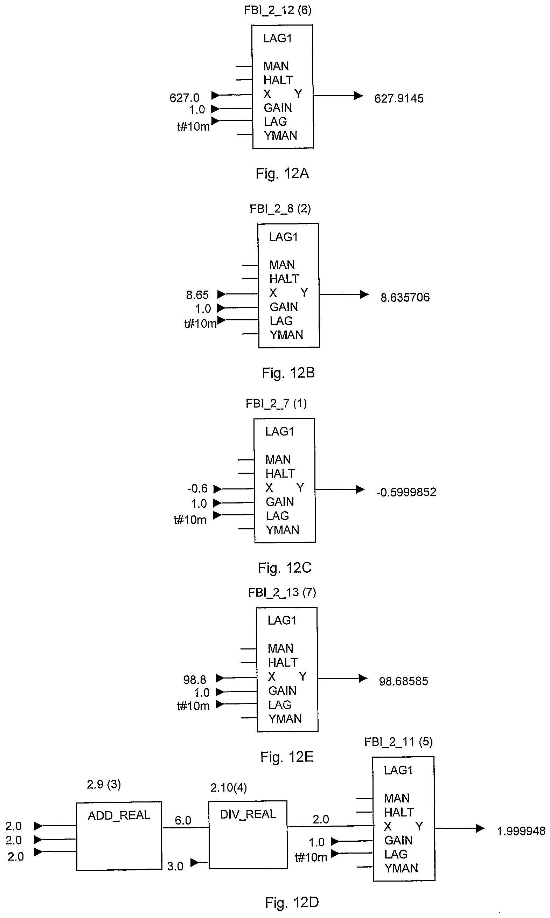

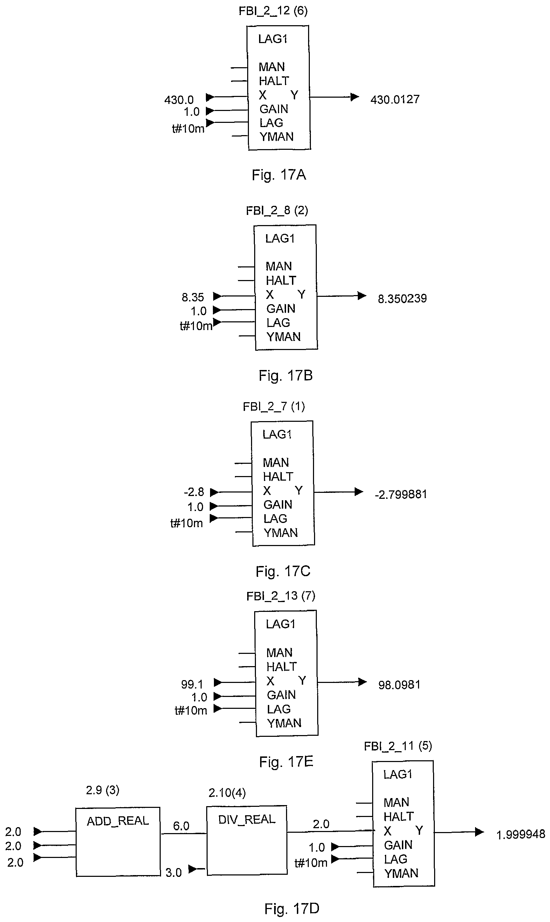

Les sections qui suivent montrent des exemples de calculs effectués par le système à travers plusieurs heures d'opération. Les détails des calculs sont illustrés dans les figures 7A à 21.

État Initial (Figures 7A-11)

Les conditions météorologiques de départ sont:

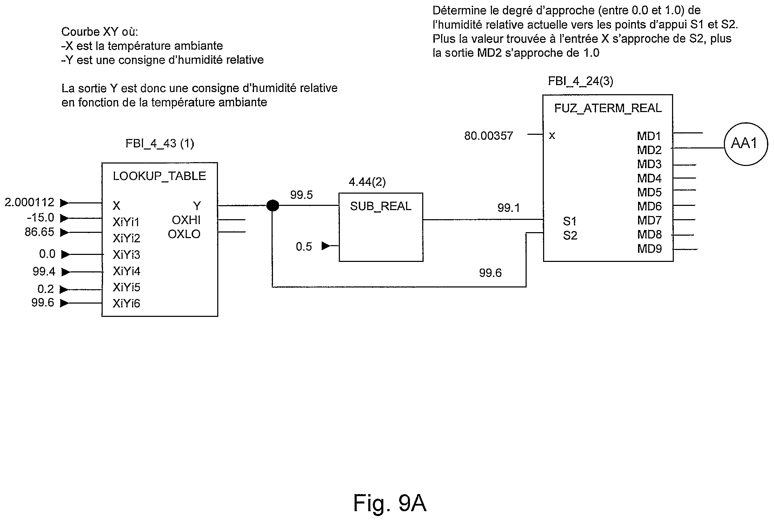

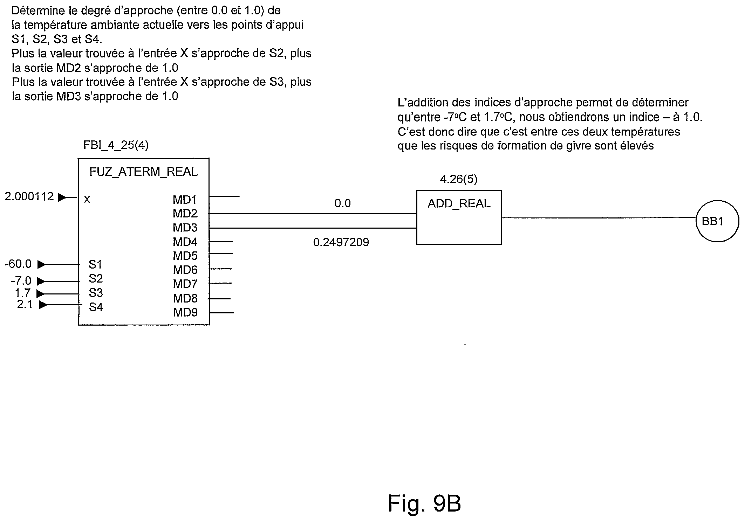

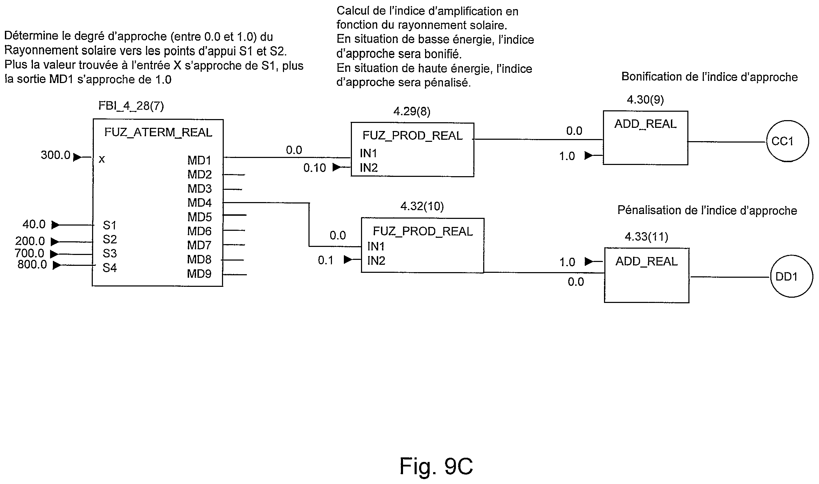

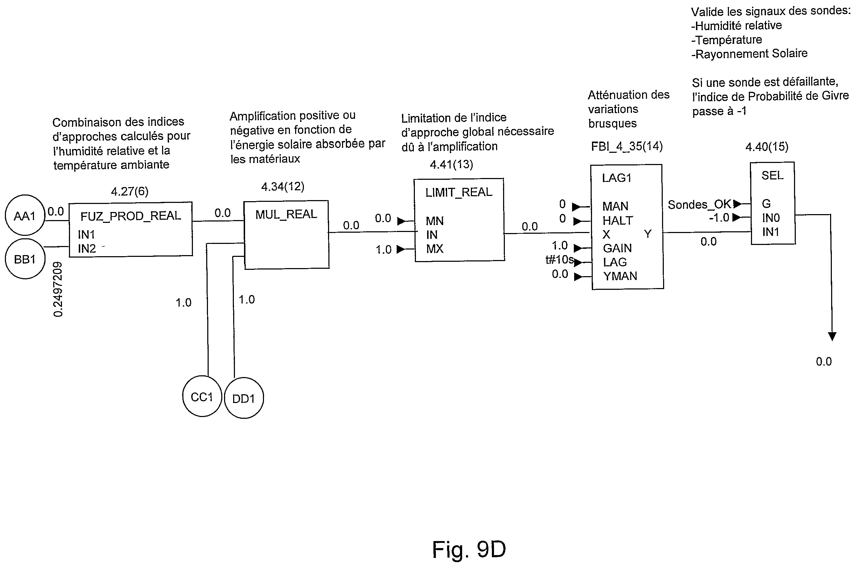

Température Ambiante : 2 °C
Humidité Relative : 80%
Rayonnement Solaire : 300 Watts/M$^2$
Résultat : Risque de Glaçage estimé = 0.00% (Calcul selon les Figures 9A-9D)

Les conditions d'opération de départ d'une éolienne :

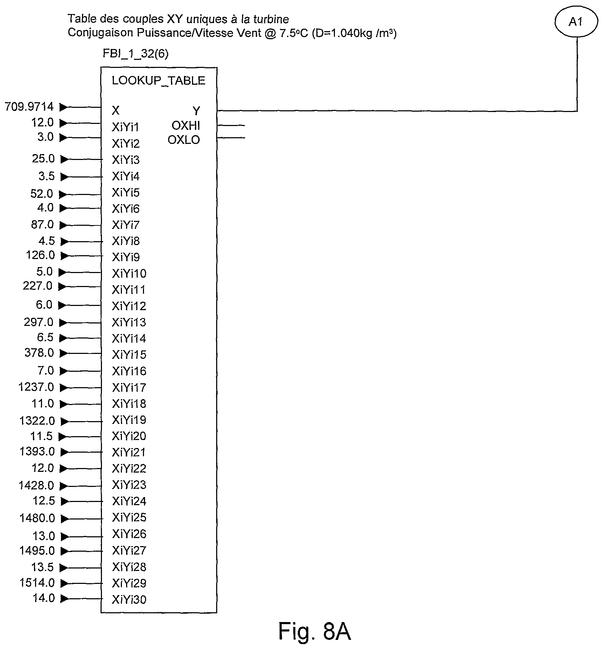

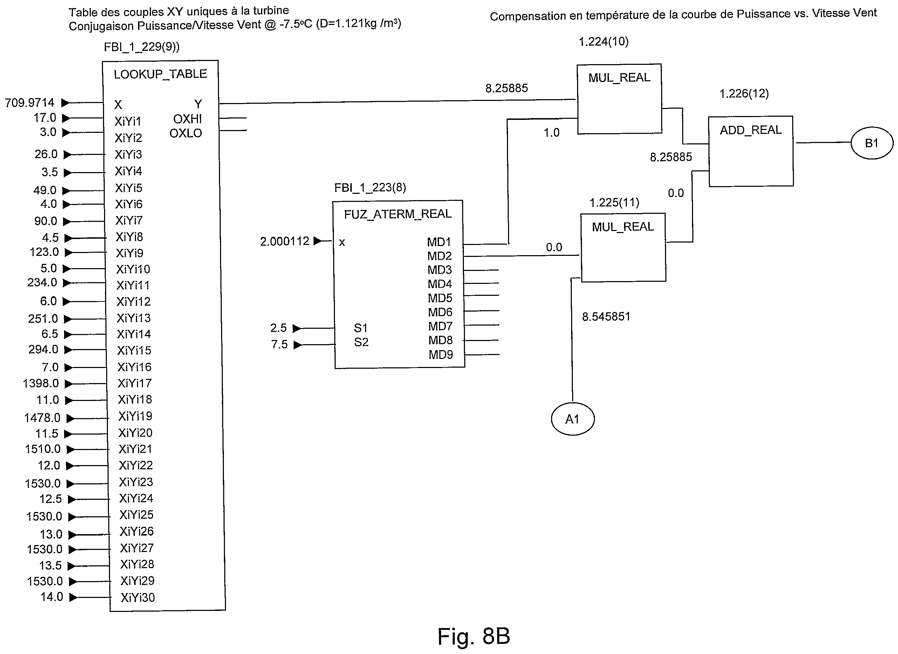

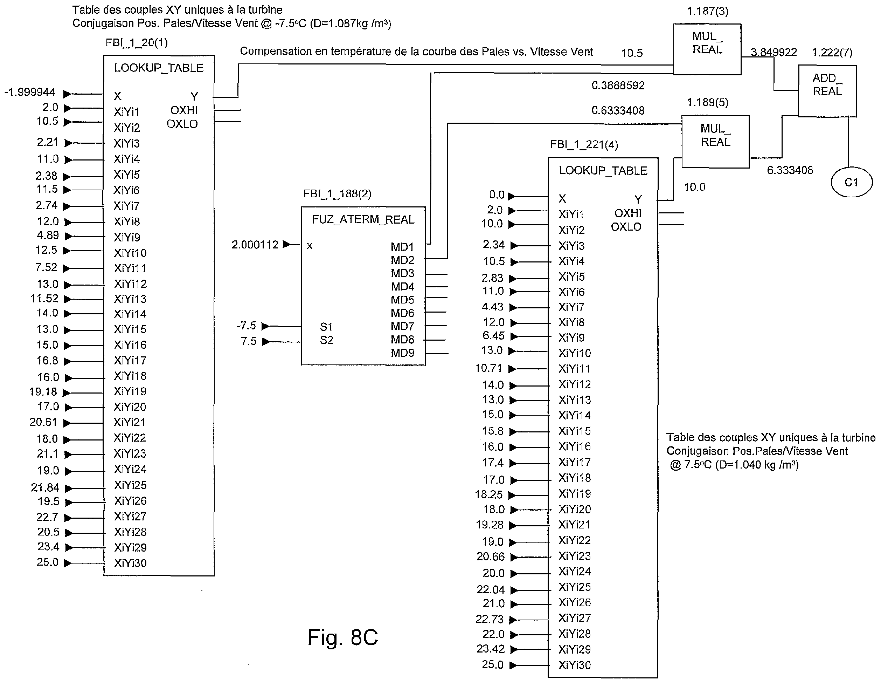

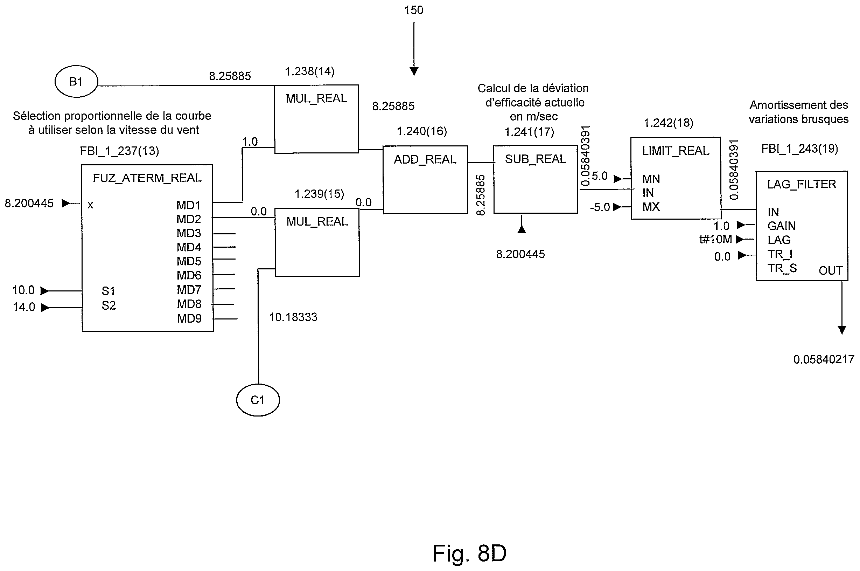

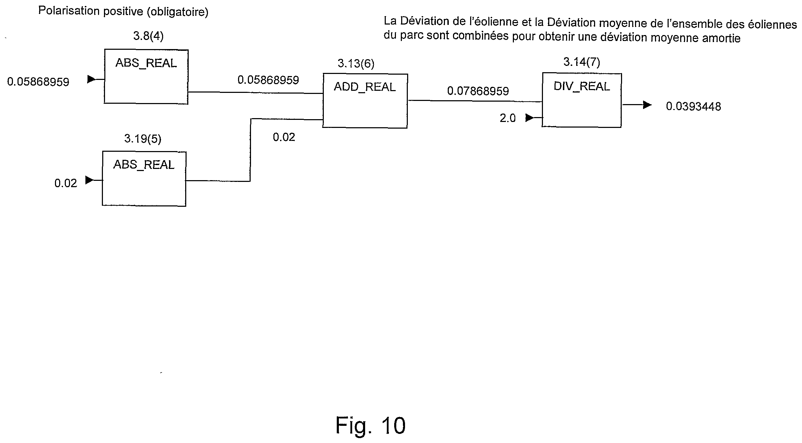

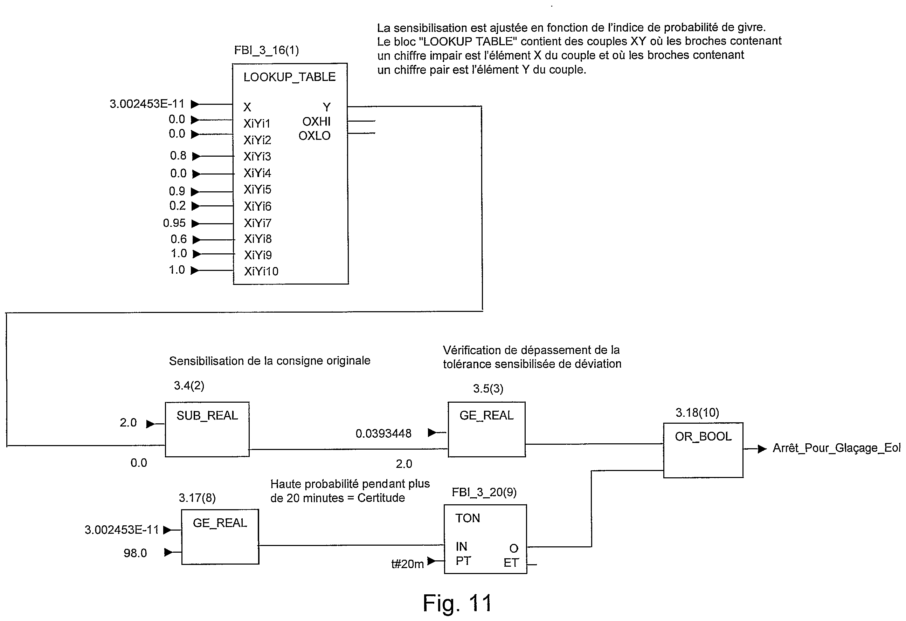

Vitesse du vent : 8.2 Mètre/sec
Position des pales : 2°
Puissance produite : 710 KWatts
Vitesse de vent théorique à 710 KWatts : 8.258 Mètre/sec
Déviation d'efficacité de l'éolienne : +0.058 Mètre/sec (Calcul selon les Figures 8A-8D)
Moyenne des déviations de production de l'ensemble des éoliennes du parc : +0.02 Mètre/sec
Moyenne de déviation utilisée : +0.039 Mètre/sec (Calcul selon la Figure 10)
Tolérance de base à la déviation : 2.0 Mètre/sec (Calcul selon la Figure 11)
Sensibilisation de la tolérance : 0.0 Mètre/sec (Calcul selon la Figure 11).
Tolérance effective à la déviation : 2.0 Mètre/sec (Calcul selon la Figure 11)

Dans ces conditions normales d'opération, l'éolienne produit selon les estimations théoriques, à l'intérieur de marges d'erreurs acceptables.

Évolution après 4 heures d'opération

Les conditions météorologiques sont maintenant :

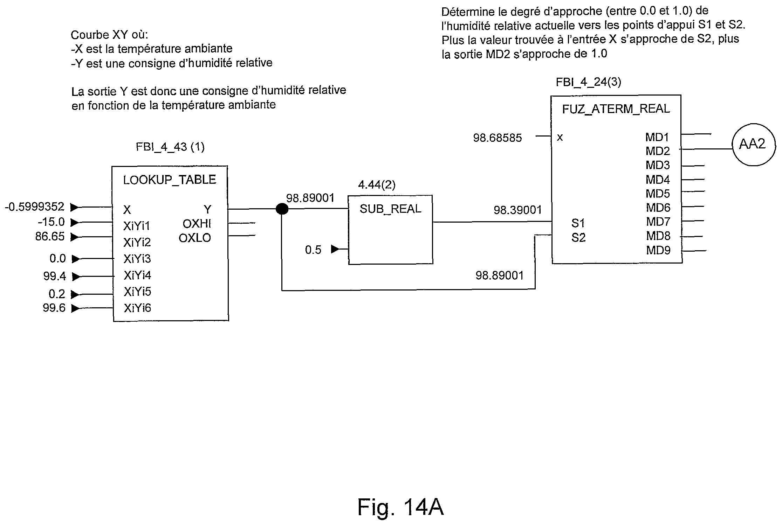

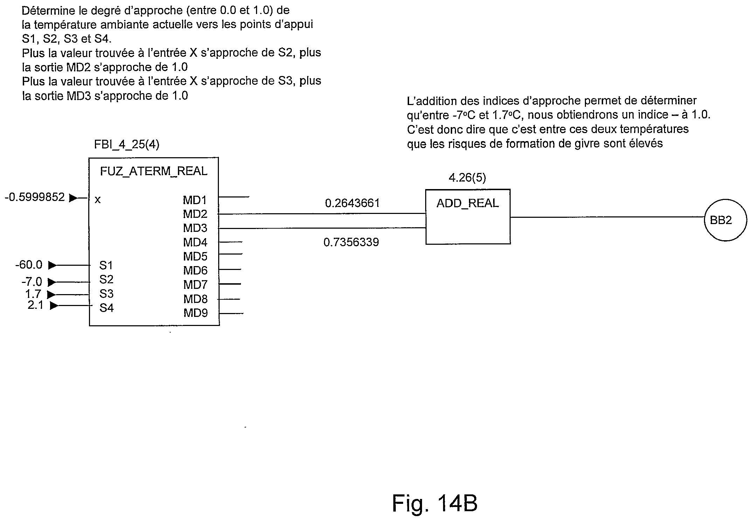

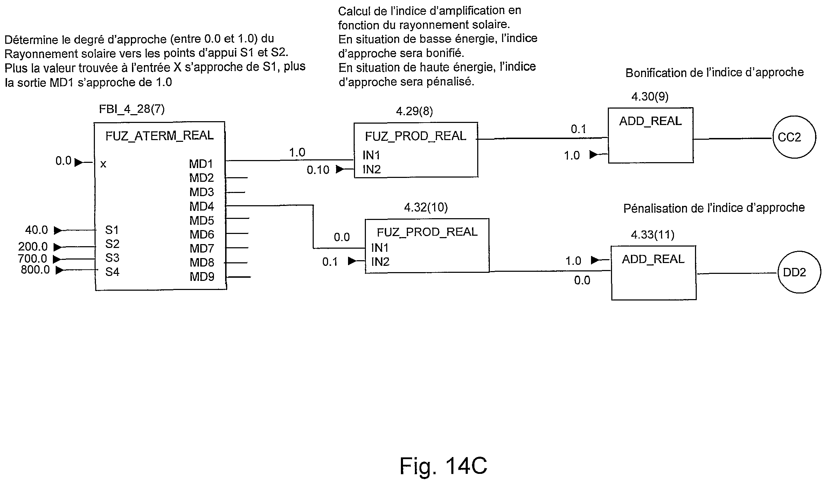

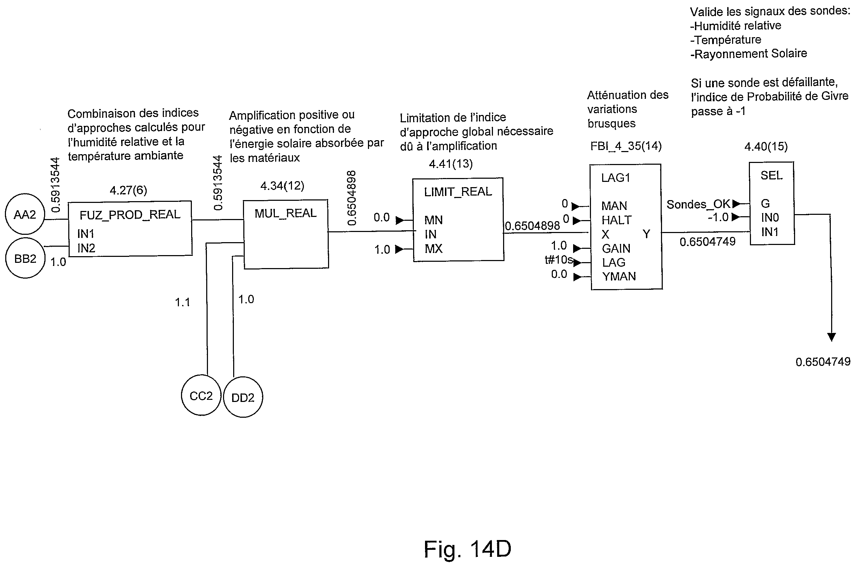

Température Ambiante : -0.6°C
Humidité Relative : 98.68%
Rayonnement Solaire : 0 Watts/M$^2$
Résultat : Risque de Glaçage estimé = 65.04% (Calcul selon les Figures 14A-14D)

Les conditions d'opération de l'éolienne sont maintenant :

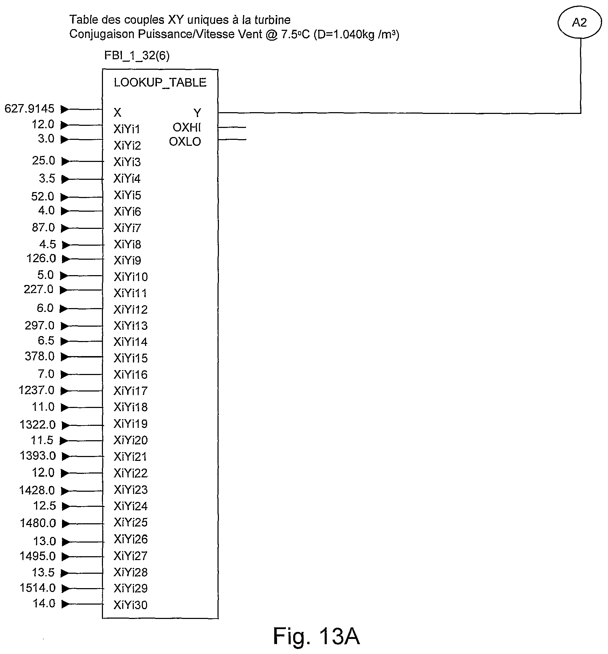

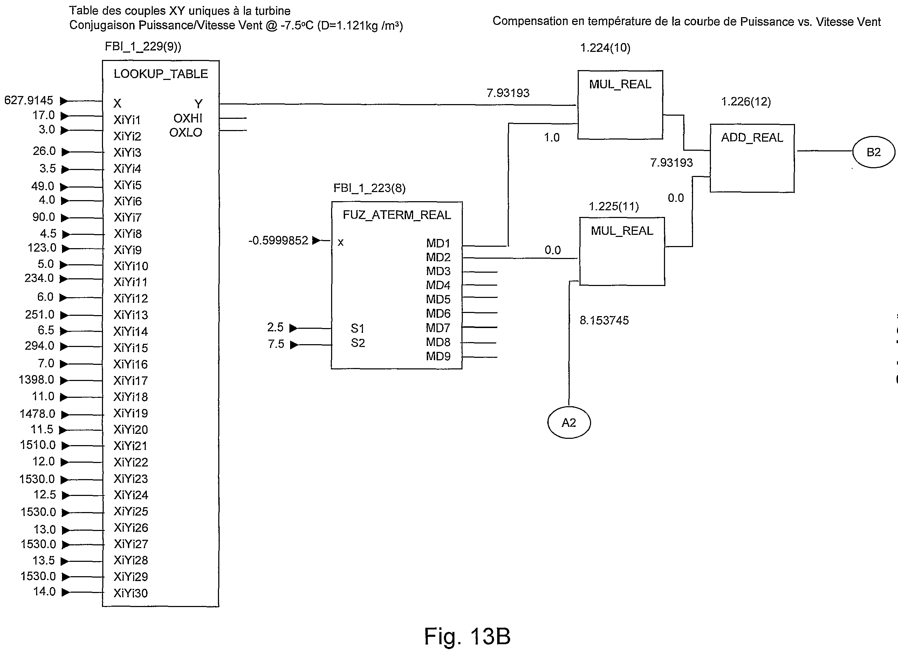

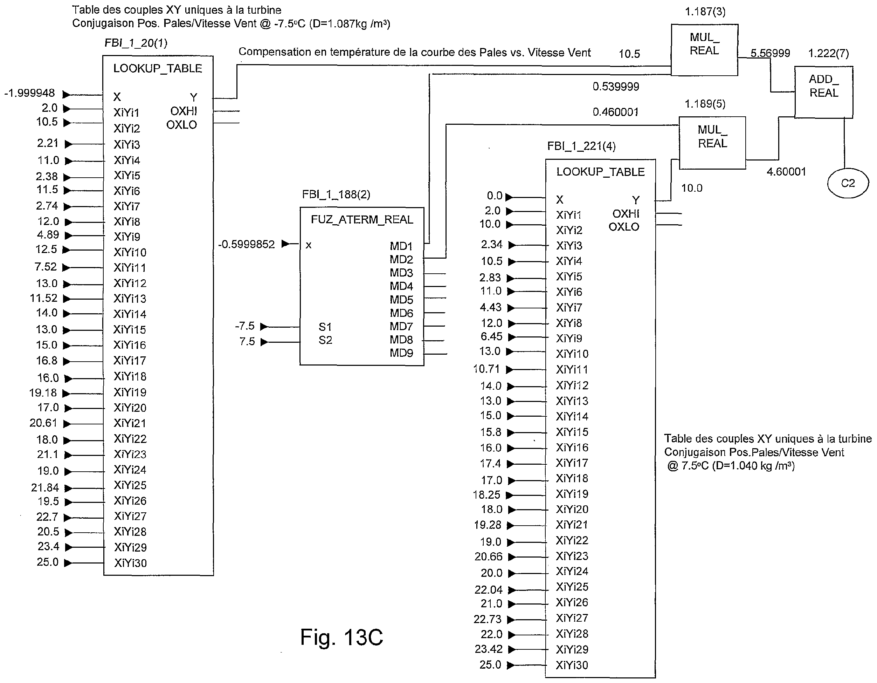

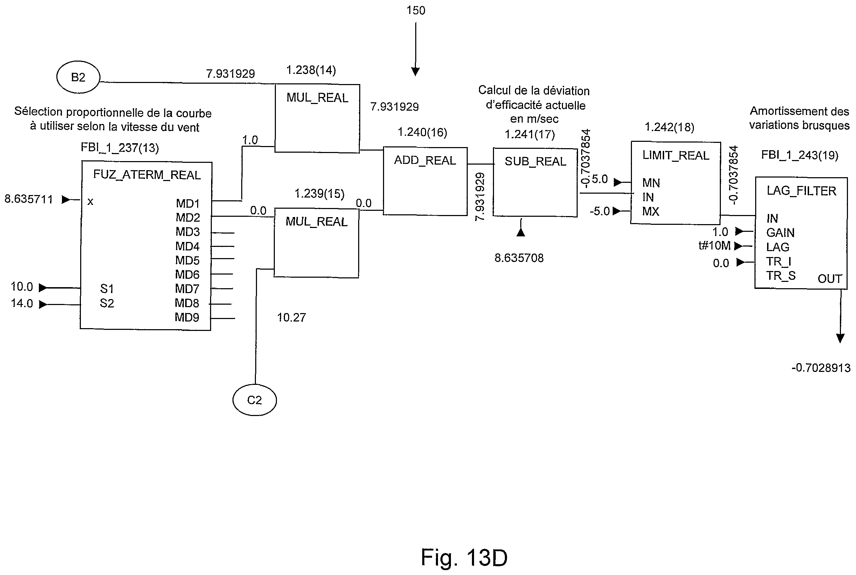

Vitesse du vent : 8.65 Mètre/sec
Position des pales : 2°
Puissance produite : 627 KWatts
Vitesse de vent théorique à 627 KWatts : 7.93 Mètre/sec
Déviation d'efficacité : -0.702 Mètre/sec (Calcul selon les Figures 13A-13D)

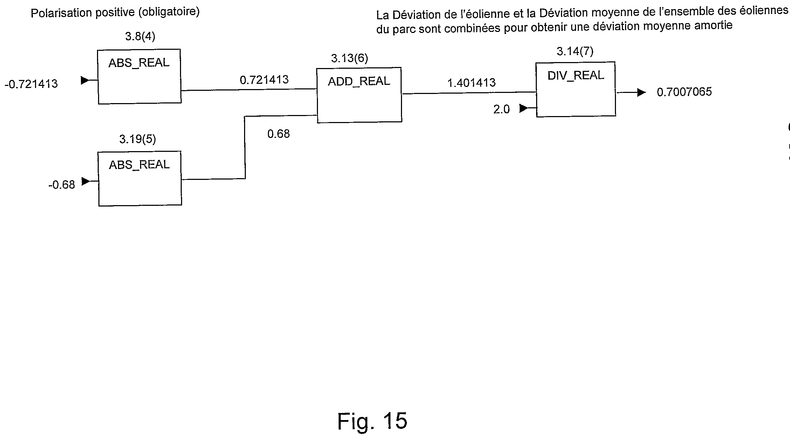

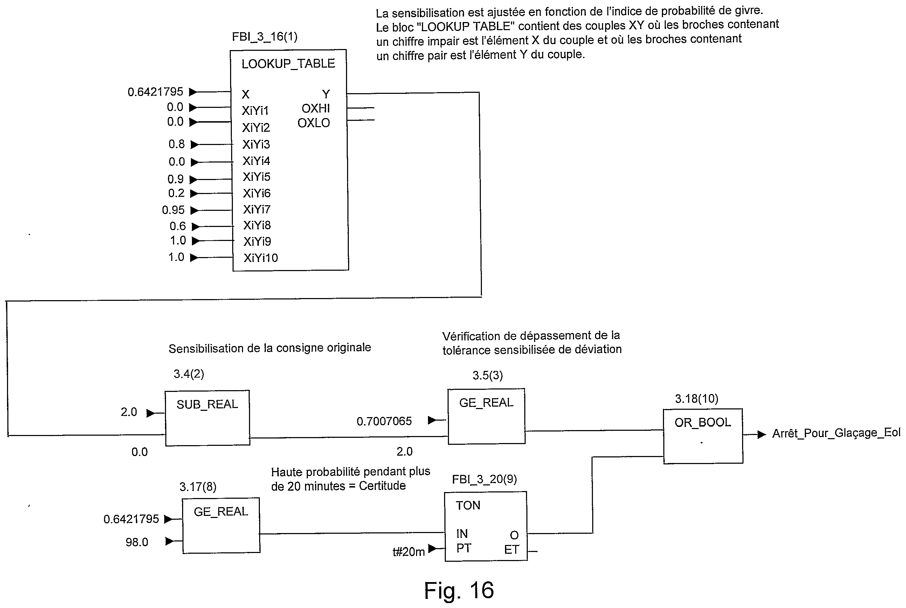

Moyenne des déviations de production de l'ensemble des éoliennes du parc : -0.68 Mètre/sec
Moyenne de déviation utilisée : -0.70 Mètre/sec (Calcul selon la Figure 15)
Tolérance de base à la déviation : 2.0 Mètre/sec (Calcul selon la Figure 16)
Sensibilisation de la tolérance : 0.0 Mètre/sec (Calcul selon la Figure 16)
Tolérance effective à la déviation : 2.0 Mètre/sec (Calcul selon la Figure 16)

Après 4 heures d'opération, les mesures météorologiques indiquent un accroissement de l'humidité relative et une baisse de la température. Les conditions favorables à un glaçage des pales se réunissent rapidement. Le système évalue actuellement les risques de glaçage à 83%. Le système a donc abaissé la tolérance à la déviation d'efficacité à 0.85 m/sec afin de sensibiliser le déclenchement et l'arrêt de l'éolienne. Il est possible qu'il y ait déjà une très légère accumulation de givre sur les pales puisqu'il y a une déviation d'efficacité ressentie de -0.72 m/sec. À ce stade, cette accumulation est imperceptible à l'oeil, du pied de l'éolienne.

Évolution après 6 heures d'opération

Les conditions météorologiques sont maintenant :

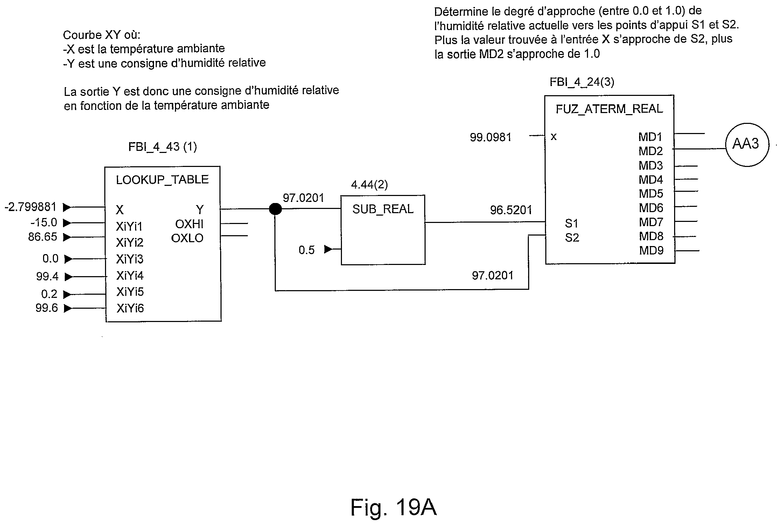

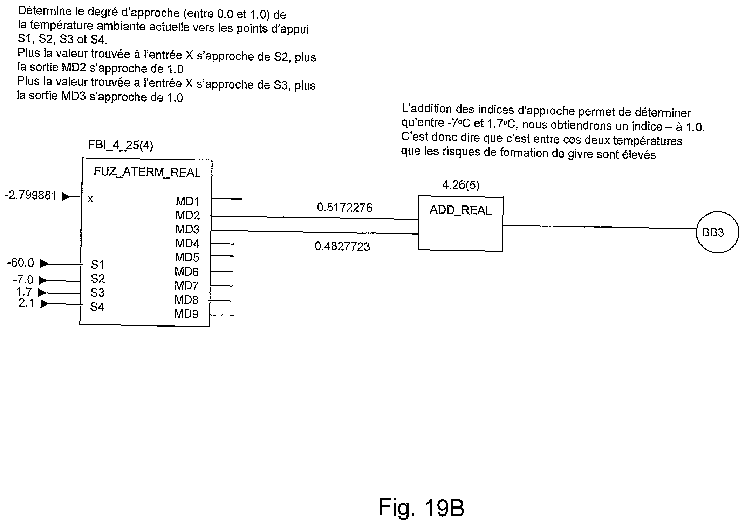

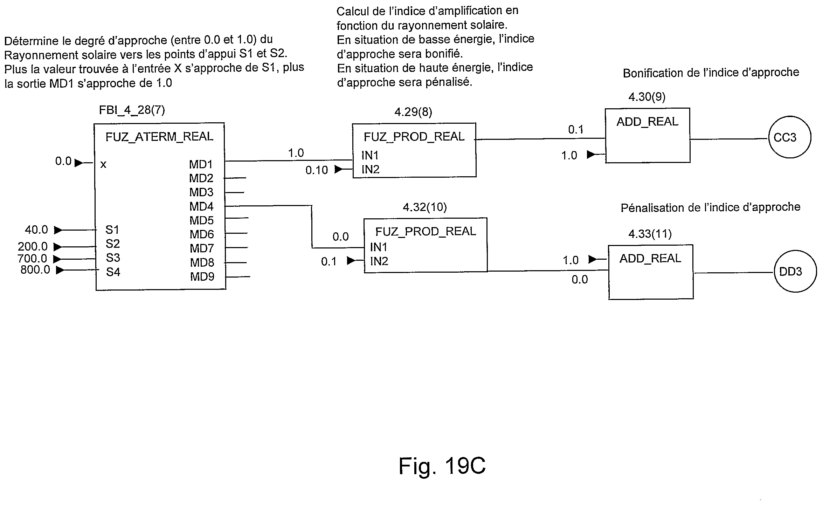

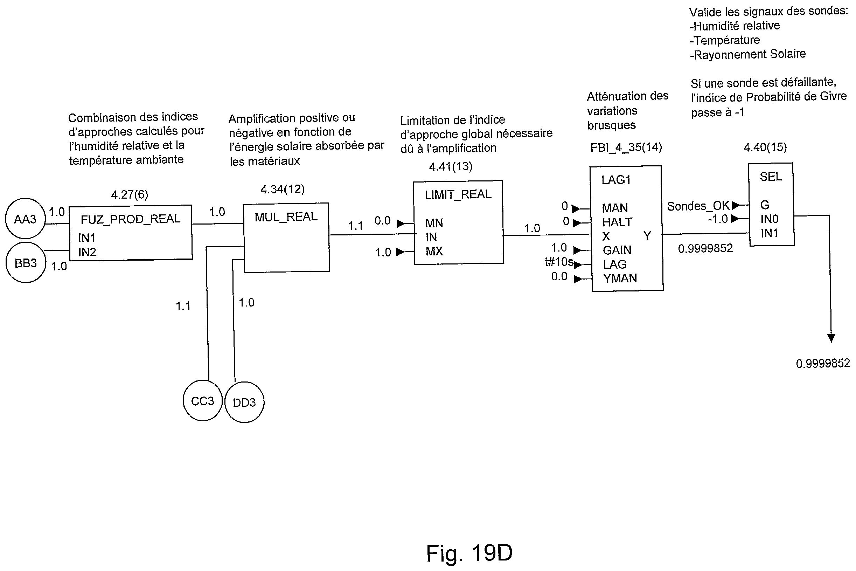

Température Ambiante : -2.8°C
Humidité Relative : 99.1 %
Rayonnement Solaire : 0 Watts/M$^2$
Résultat : Risque de Glaçage estimé = 100.0% (Calcul selon les Figures 19A-19D)

Les conditions d'opération de l'éolienne sont maintenant :

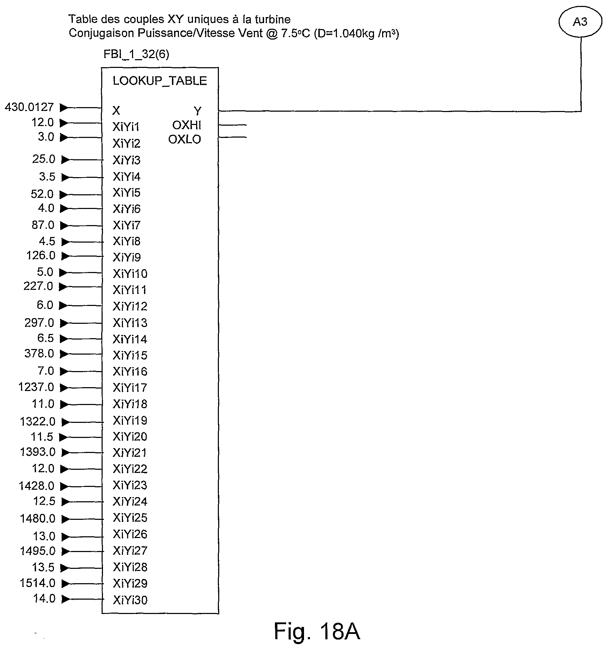

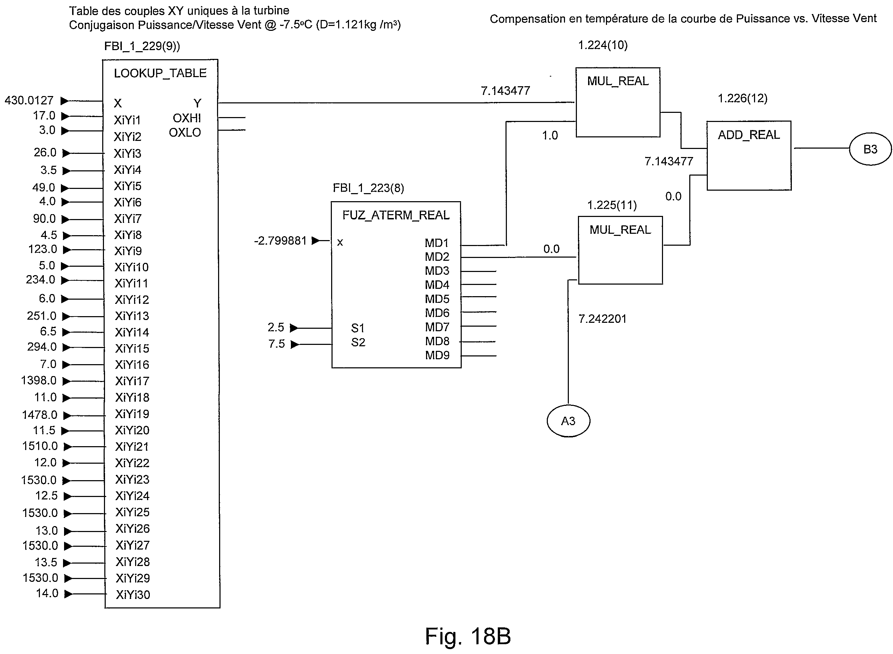

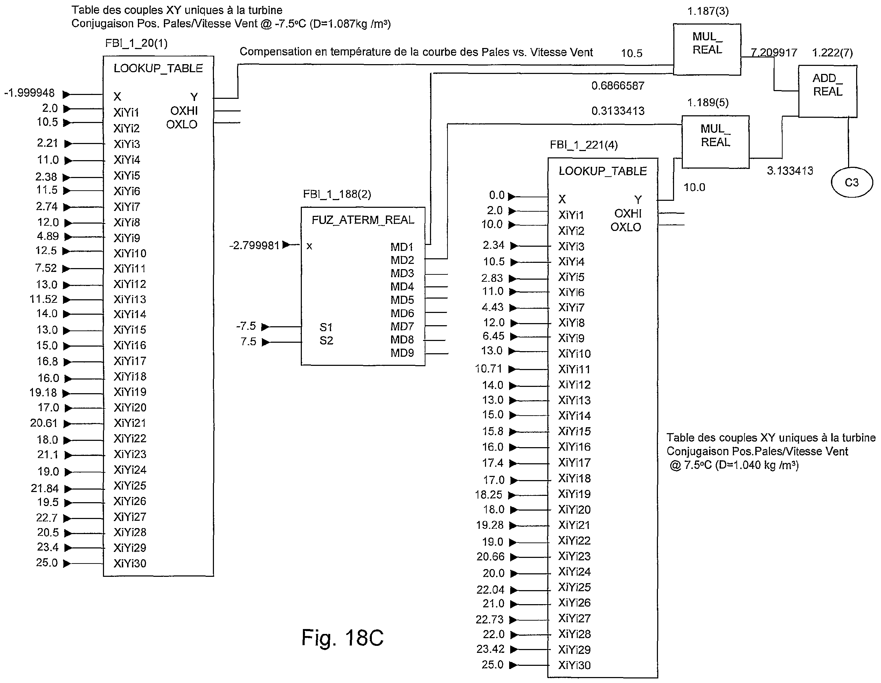

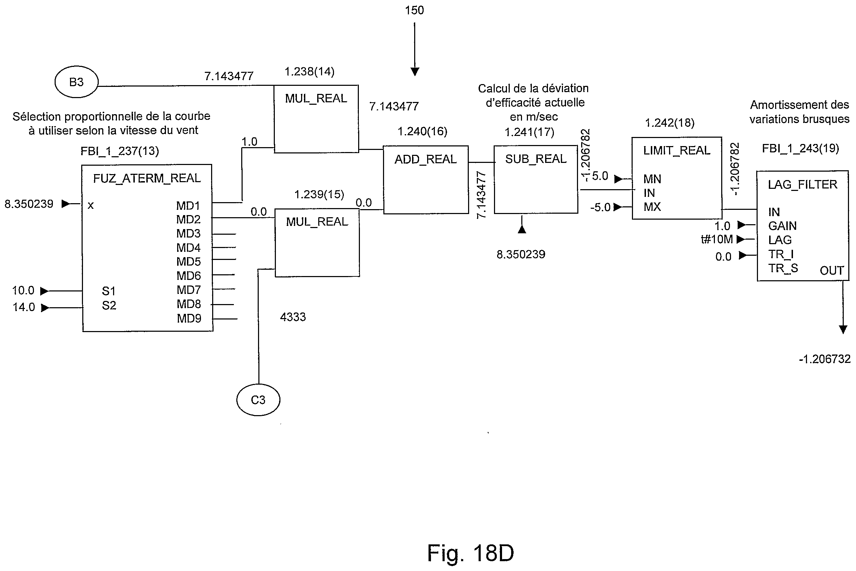

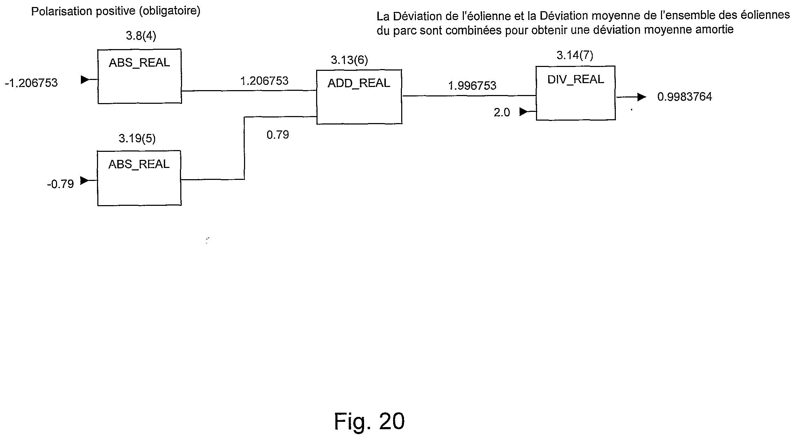

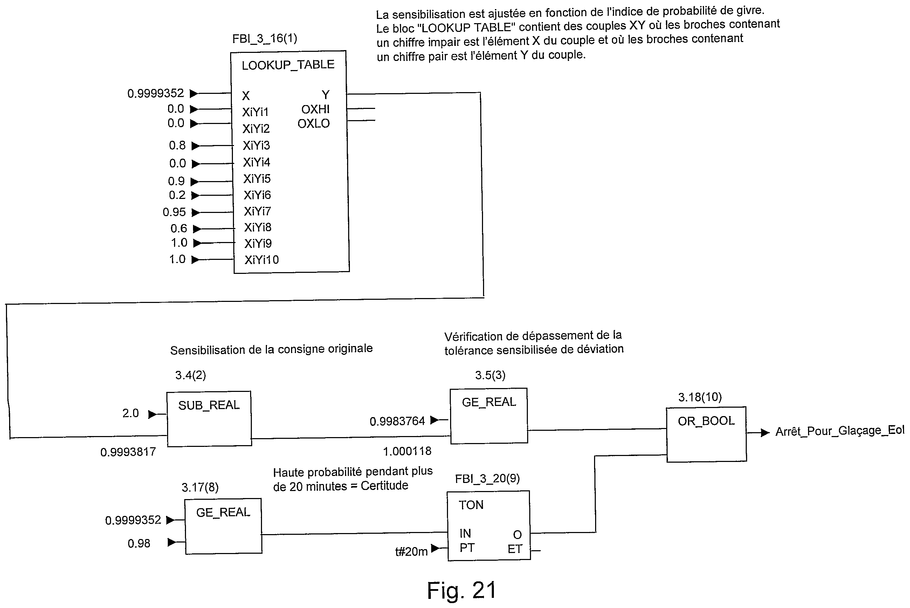

Vitesse du vent : 8.35 Mètre/sec
Position des pales : 2°
Puissance produite : 430 KWatts
Vitesse de vent théorique à 430 KWatts : 7.14 Mètre/sec
Déviation d'efficacité : -1.20 Mètre/sec (Calcul selon les Figures 18A-18D)
Moyenne des déviations de production de l'ensemble des éoliennes du parc : -0.79 Mètre/sec
Moyenne de déviation utilisée : -0.995 Mètre/sec (Calcul selon la Figure 20)
Tolérance de base à la déviation : 2.0 Mètre/sec (Calcul selon la Figure 21)
Sensibilisation de la tolérance : 1.0 Mètre/sec (Calcul selon la Figure 21)
Tolérance effective à la déviation : 1.0 Mètre/sec (Calcul selon la Figure 21)

Après 6 heures d'opération, les mesures météorologiques indiquent un nouvel accroissement de l'humidité relative et une constante baisse de la température ambiante. La déviation d'efficacité devient importante et dépasse même la tolérance. Il y a définitivement accumulation de givre sur les pales de l'éolienne. C'est à ce moment que le système prend la décision d'arrêter l'éolienne afin d'éviter une trop grande accumulation et ainsi annuler tout risque de blessure ou de dommage au moment du détachement en morcellement du givre et aussi dans le but de réduire la période de déglaçage des pales lorsque les conditions météorologiques le permettront.
Il serait également possible de commander l'arrêt de l'éolienne au moment où l'indice de probabilité de givre atteint 98%, sans égard à la tolérance à la déviation de la production dans le but d'éviter toute formation de givre sur les pales de l'éolienne.

Autres considérations dans le fonctionnement du système

Le système selon le mode de réalisation préféré l'invention permet la détection et la prévention de formation de glace sur les pales d'une éolienne ou d'un parc d'éoliennes et permet de minimiser les pertes de production associées au glaçage des pales. L'invention permet de détecter les périodes propices à la formation de glaçage sur les pales en mesurant les conditions climatiques en vigueur sur le site et plus particulièrement la température ambiante, le taux d'humidité relative, la vitesse du vent et la radiation solaire.
Préférablement, le système selon le mode de réalisation préféré l'invention procède à l'acquisition des données grâce à un automate industriel raccordé à la fois à une station météo et à l'ensemble des éoliennes du parc par un réseau de communication.
Préférablement, le système évalue la perte de performance de chacune des éoliennes et combine les conditions du site à celles de l'éolienne préférablement avec des équations de logique floue, afin d'obtenir une appréciation de la criticité de l'arrêt de la machine.

Préférablement, le système évalue en permanence l'ensemble des paramètres qui lui sont transmis afin de quantifier les chances de glaçage.

De préférence, il devient également possible de mesurer les risques encourus à démarrer et/ou à laisser fonctionner une éolienne en combinant par logique l'indice de risque de glaçage à un indice de déviation de l'efficacité de l'éolienne.

De préférence, dans son application la plus simple, un niveau de criticité peut être utilisé pour envoyer un signal d'arrêt à partir d'un certain seuil ou peut être acheminé à une matrice comportant des paramètres environnementaux, géographiques et spatiaux propres à l'éolienne. Dans tous les cas, l'arrêt préventif de la turbine permet de limiter la quantité de glace accumulée sur les pales de celle-ci pendant la période de glaçage. Elle permet également de limiter les risques liés à la projection de glace par les pales. L'arrêt de l'éolienne, avant l'atteinte des limites de glaçage, permet en outre un redémarrage instantané lorsque la période de glaçage est terminée.

Le système selon le mode de réalisation préféré de l'invention permet donc un arrêt plus rapide des éoliennes limitant ainsi la quantité de glace accumulée sur les pales et un redémarrage rapide, sans attendre une période de température au dessus de deux degrés Celsius, permettant au givre accumulé pendant l'opération dans des conditions de givrage de fondre.

Le système selon le mode de réalisation préféré de l'invention détecte, par la mesure de quelques paramètres clés, les conditions propices au glaçage, c'est-à-dire un nuage glaçant. Lorsqu'un nuage glaçant est détecté, les machines sont préférablement arrêtées dès que les premiers symptômes de glaçage apparaissent. Dans des cas extrêmes, l'arrêt pourra se faire sans même attendre des symptômes de perte de production.

Préférablement, les conditions reliées au givre des éoliennes sont liées intimement à l'humidité relative et à la température. Lorsque, par exemple, l'humidité est inférieure à 85 %, les risques de givre sont très faibles. Les risques augmentent de façon très importante lorsque le taux d'humidité dépasse les 85 %. Lorsque l'humidité dépasse les 95 %, le nuage givrant est quasi assuré. Dans tous les cas cités précédemment la température de l'air doit être inférieure à deux degrés Celsius.

Par contre, l'expérience montre que le givrage est moins probable à très basse température. D'autre part, le taux de radiation solaire permet de filtrer certains faux événements, survenant surtout de jour, puisqu'une radiation solaire importante en plein jour diminue les risques de nuage givrant.

LISTE DES ÉQUIPEMENTS TYPIQUES

Les éléments matériels utilisés consistent préférablement en un automate industriel compatible IEC-1131-3. Dans le cas du prototype du mode de réalisation préféré, un automate Momentum de Modicon avec les différentes interfaces suivantes a été utilisé :

- processeur : Modicon Momentum 171-CCC-960-30 IEC;
- carte d'entrée : Modicon Momentum 170-ADM-390-30 (10E/8S Relais);
- carte de communication : Modicon Momentum 172-JNN-210-32;
- logiciel de programmation : Modicon Concept V2.5;
- sondes combinées de température & d'humidité : Vaisala HMT330-7T0B004BCAE100A01CABAA1;
- détecteur de radiation solaire : Kipp & Zonen CMP3 + Ventilation CV2;
- lot d'interfaces matériel et/ou logiciel pour acheminer les données d'opération des éoliennes vers l'automate Momentum.

Description des principaux blocs de fonction utilisés

Le détail des principaux blocs utilisés et leur fonction de transfert peuvent être trouvés dans la documentation du logiciel de programmation Concept 2.5 de Schneider Electric - Modicon où on explique comment les blocs FUZ_PROD_*** font un produit flou, les blocs FUZ_ATERM_INT et FUZ_ATERM_REAL font la fuzzification de tous les termes et les blocs LAG1 font des décalages de temps. Certains détails sur les blocs sont fournis ci-dessous comme référence.

Blocs ADD, SUB, MUL, DIV

Ces blocs effectuent les fonctions mathématiques de base.

Bloc LOOKUP TABLE

Description fonctionnelle:

Ce bloc-fonction linéarise les courbes caractéristiques par interpolation. Le bloc-fonction fonctionne avec distance entre points d'appui variables. Le nombre des entrées XiYi peut être augmenté par modification de la taille verticale du cadre de bloc à 30. Ceci correspond à 15 paires de points d'appui. Le nombre des entrées doit être d'ordre pair. Les valeurs X doivent être en ordre ascendant. Comme paramètres supplémentaires, il est possible de planifier EN et ENO.

<center>Description des paramètres :</center>

| Paramètres | Type de données | Signification |
|---|---|---|
| XiYi1 | REAL | Coordonnées X 1 er point d'appui |
| XiYi2 | REAL | Coordonnées Y 1 er point d'appui |
| XiYin | REAL | Coordonnées X avec point d'appui |
| XiYim | REAL | Coordonnées Y avec point d'appui |
| X | REAL | Grandeur d'entrée |
| Y | REAL | Grandeur de sortie |
| QXHI | BOOL | Affichage: X > Xm |
| QXLO | BOOL | Affichage X < X1 |

Deux entrées se suivant respectivement (XiYi) représentent une paire de points d'appui. La première entrée XiYi correspond à X1, la suivante à Y1, celle qui suit à X2, etc. Pour la valeur d'entrée au choix se trouvant en X et se situant entre ces points d'appui, la valeur de sortie Y correspondante est interpolée en considérant de manière linéaire le tracé polygonal entre les points d'appui. Pour X < X1 Y = Y1 Pour X > Xm Y = Ym. Quand la valeur à l'entrée X dépasse la valeur du dernier point d'appui Xm, la sortie QXHI devient "1 ". Quand la valeur à l'entrée X n'atteint pas la valeur du dernier point d'appui X1, la sortie QXHO devient "1 ".

Principe de l'interpolation :

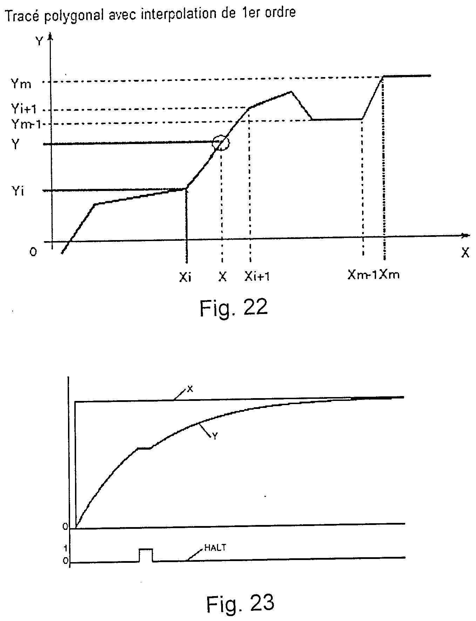

La Figure 22 est un graphique illustrant un tracé polygonal avec interpolation de premier ordre.
Pour un point Y, on a l'algorithme suivant : pour Xi £ X £ Xi+1 et i = 1 ... (m-1) Condition : X1 £ X2 £ ... £ Xi £ Xi+1 £ ... £ Xm-1 £ Xm. Les valeurs X doivent être en ordre ascendant. Deux valeurs X se suivant peuvent être identiques. Il en résulte une possibilité de courbe discontinue. On a alors le cas particulier :Y = 0.5 x (Yi + Yi+1)pour Xi = X = Xi+1 et i = 1 ... (m-1)

Bloc LAG1

Description de la fonction :

Ce bloc-fonction représente un terme de retard de premier ordre. Ce bloc-fonction possède les modes de fonctionnement suivants : Manuel, Pause et Automatique. Les paramètres supplémentaires EN et ENO peuvent être configurés.
La fonction de transfert est la suivante :

$$G(s) = gain \times \frac{1}{1 + s \times lag}$$

La formule de calcul est la suivante :

$$Y = Y_{(old)} + \frac{dt}{LAG + dt} \times \left( gain \times \frac{X_{(old)} + X_{(new)}}{2} - Y_{(old)} \right)$$

<center>17</center>

Signification des tailles

Tailles Signification

$X_{(old)}$    Valeur de l'entrée X du cycle précédent

$Y_{(old)}$    Valeur de la sortie Y du cycle précédent

dt    Temps entre le cycle actuel et le cycle précédent

Description des paramètres du module :

| Paramètres | Type de données | Signification |
| --- | --- | --- |
| MAN | BOOL | "1 " = mode Manuel |
| HALT | BOOL | "1 " = mode Pause |
| X | REAL | Valeur d'entrée |
| GAIN | REAL | Gain |
| LAG | TIME | Constante du temps de retard |
| YMAN | REAL | Valeur manuelle |
| Y | REAL | Sortie |

Paramétrage :

On paramètre le bloc-fonction en déterminant le gain GAIN ainsi que la constante de temps du retard LAG. La sortie Y suit avec retard l'échelon du signal d'entrée X (saut de 0 à 1.0 à l'entrée X). Elle se rapproche de la valeur selon une fonction exponentielle.

Modes de fonctionnement :

Trois modes de fonctionnement peuvent être sélectionnés à l'aide des entrées MAN et HALT :

| Mode de fonctionnement | MAN | HALT | Signification |
| --- | --- | --- | --- |
| Automatique | 0 | 0 | Le bloc-fonction est traité de la manière décrite dans Paramétrage. |
| Manuel | 1 | 0 ou 1 | La valeur manuelle YMAN est transmise directement à la sortie Y. |
| Pause | 0 | 1 | La sortie Y conserve la dernière valeur calculée. La sortie n'est plus modifiée mais peut toutefois être écrasée par l'utilisateur. |

Exemple:

Le diagramme sur la Figure 23 montre un exemple de réponse à l'échelon de l'élément LAG : l'entrée X saute à une nouvelle valeur et la sortie Y suit l'entrée X selon une fonction exponentielle. Réponse à l'échelon du Bloc Fonction LAG1 lorsque GAIN = 1

Bloc LAG FILTER

Description de la fonction :

Ce bloc-fonction représente un terme de retard de premier ordre. Ce bloc-fonction possède les modes de fonctionnement suivants :

- Tracking
- Automatique

Les paramètres supplémentaires EN et ENO peuvent être configurés.

Formule:

La fonction de transfert est la suivante :

$$G(s) = GAIN \times \frac{1}{1 + s \times LAG}$$

La formule de calcul est la suivante :

$$OUT = OUT_{(old)} + \frac{dt}{LAG + dt} \times \left( GAIN \times \frac{IN_{(old)} + IN_{(new)}}{2} - OUT_{(old)} \right)$$

Signification des tailles :

| Tailles | Signification |
|---|---|
| $IN_{(old)}$ | Valeur de l'entrée IN du cycle précédent |
| $OUT_{(old)}$ | Valeur de la sortie OUT du cycle précédent |
| dt | Temps entre le cycle actuel et le cycle précédent |

Description des paramètres du module

| Paramètres | Types de données | Signification |
|---|---|---|
| IN | REAL | Valeur d'entrée |
| GAIN | REAL | Gain |
| LAG | TIME | Constante du temps de retard |
| TR_I | REAL | Entrée d'initialisation |
| TR_S | BOOL | Type d'initialisation"1" = mode Tracking"0" = mode Automatique |
| OUT | REAL | Sortie |

Paramétrage :

On paramètre le bloc-fonction en déterminant le gain GAIN ainsi que la constante de temps du retard LAG. La sortie OUT suit avec retard l'échelon du signal d'entrée IN (saut de 0 à 1.0 à l'entrée IN). Elle se rapproche de la valeur exp(-t/LAG) GAIN $\times$ X selon une fonction exponentielle.

Modes de fonctionnement :

Deux modes de fonctionnement peuvent être sélectionnés par l'entrée TR_S :

| Mode de fonctionnement | TR S | Signification |
|---|---|---|
| Automatique | 0 | Le bloc-fonction est traité de la manière décrite dans Paramétrage. |
| Tracking | 1 | La valeur de Tracking TR_I est transmise directement à la sortie OUT. |

Exemple:

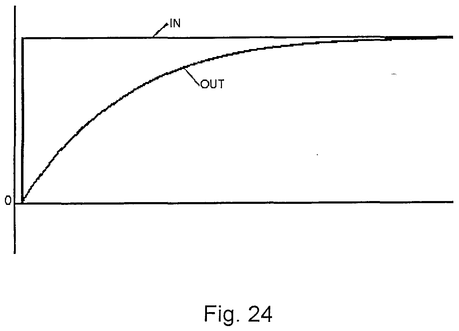

Le diagramme sur la Figure 24 donne l'exemple d'une réponse indicielle du bloc-fonction LAG_FILTER : l'entrée IN saute à une nouvelle valeur et la sortie OUT suit l'entrée IN selon une fonction exponentielle. Réponse indicielle du bloc-fonction LAG_FILTER à GAIN = 1

Bloc LIMIT REAL

Description de la fonction :

La fonction transmet, à la sortie, la valeur d'entrée inchangée (IN), si celle-ci n'est pas inférieure à la valeur minimum (MN) ni supérieure à la valeur maximum (MX). Si la valeur d'entrée (IN) est inférieure à la valeur minimum (MN), cette dernière est transmise à la sortie. Si la valeur d'entrée (IN) est supérieure à la valeur maximum (MX), cette dernière est transmise à la sortie. Le traitement concerne les types de données du groupe ANY_ELEM. Les types de données de toutes les valeurs d'entrée et celui de la valeur de sortie doivent être identiques. Pour le traitement des différents types de données, l'on dispose respectivement d'une fonction particulière. EN et ENO peuvent être gérés comme paramètres supplémentaires.

Formule:

$$OUT = IN, \text{ si } (IN \geq MN) \text{ \& } (IN \leq MX) OUT = MN, \text{ si } (IN < MN) OUT = MX, \text{ si } (IN > MX)$$

Description des paramètres du bloc :

| Paramètres | Types de données | Signification |
|---|---|---|
| MN | INT, DINT, UINT, UDINT, REAL, TIME, BOOL, BYTE, WORD | Valeur limite inférieure |
| IN | NT, DINT, UINT, UDINT, REAL, TIME, BOOL, BYTE, WORD | Entrée |
| MX | INT, DINT, UINT, UDINT, REAL, TIME, BOOL, BYTE, WORD | Valeur limite supérieure |
| OUT | INT, DINT, UINT, UDINT, REAL, TIME, BOOL, BYTE, WORD | Sortie |

Bloc SEL

Description de la fonction :

La fonction sert au choix binaire entre deux valeurs d'entrée. En fonction de l'état de l'entrée G, l'entrée transmise à la sortie OUT est soit IN0 soit IN1. G = 0 -> OUT = IN0 G = 1 -> OUT = IN1. Les types de données des valeurs d'entrée IN0 et IN1 et de la valeur de sortie OUT doivent être identiques. EN et ENO peuvent être gérés comme paramètres supplémentaires.

Description des paramètres du bloc :

| Paramètres | Types de données | Signification |
|---|---|---|
| G | BOOL | Entrée de sélection |
| IN0 | ANY | Entrée 0 |
| IN1 | ANY | Entrée 1 |
| OUT | ANY | Sortie |

Bloc FUZ ATERM REAL

Description de la fonction :

Le bloc-fonction fuzzifie jusqu'à 9 termes des variables linguistiques (entrée X) et indique chaque degré d'appartenance (sorties MD1 ... MD9). La gamme de valeur à la sortie pour le type de données INT comprend 0 ... 10 000 et pour le type de données REAL 0 ... 1. Les fonctions d'appartenance sont définies par les points d'appui (entrées extensibles S1 ... S9).
Le bloc-fonction travaille avec une simplification propre à la définition des fonctions d'appartenance :

- rampes pour la première et la dernière fonction d'appartenance
- triangles pour les fonctions d'appartenance entre la première et la dernière
- la somme de deux degrés d'appartenance de deux termes linguistiques successifs est toujours 1 (10 000)
- la somme des degrés d'appartenance de tous les termes linguistiques pour chaque valeur d'entrée X est toujours 1 (10 000)

Le nombre des points d'appui (S1 ... Sx) peut être élevé à 9 max. par un agrandissement vertical du cadre de bloc. Il n'est pas possible de configurer d'autres points d'appui.

Le nombre de degrés d'appartenance calculé correspond au nombre de fonctions d'appartenance. Si la configuration comprend moins de neuf fonctions d'appartenance, les sorties restantes adoptent la valeur 0. (p.ex. pour 4 fonctions d'appartenance, on compte 4 degrés d'appartenance pour MD1 ... MD4 et MD5 ... MD9 sont à 0). Les types de données de toutes les valeurs d'entrée et celles des valeurs de sortie doivent être identiques. Un bloc-fonction propre est à chaque fois disponible pour l'élaboration des différents types de données.

Comme paramètres supplémentaires, on peut configurer EN et ENO.

<div style="text-align:center">Description des paramètres du bloc :</div>

| Paramètres | Type de données | Signification |
|---|---|---|
| X | INT, REAL | Variable linguistique |
| S1 | INT, REAL | Point d'appui S1 |
| S2 | INT, REAL | Point d'appui S2 |
| : | : | : |
| S9 | INT, REAL | Point d'appui S9 |
| MD1 | INT, REAL | Sortie degré d'appartenance MD1 (Membership Degree) |
| MD2 | INT, REAL | Sortie degré d'appartenance MD2 (Membership Degree) |
| : | : | : |
| MD9 | INT, REAL | Sortie degré d'appartenance MD9 (Membership Degree) |

Description des paramètres :

Avec le bloc-fonction FUZ_ATERM, tous les termes d'une variable linguistique peuvent être fuzzifiés en même temps. Les fonctions d'appartenance sont déterminées par des points d'appui (S1, S2, S3,...). Le concept de cette fuzzification permet de définir les extrémités de plusieurs fonctions d'appartenance avec un point d'appui à la fois. Ces fonctions d'appartenance se présentent sous forme de rampes et de triangles, la somme des différents degrés d'appartenance étant toujours 100 %. Ces corrélations sont présentées aux diagrammes temporels suivants :

Diagramme de cycles :

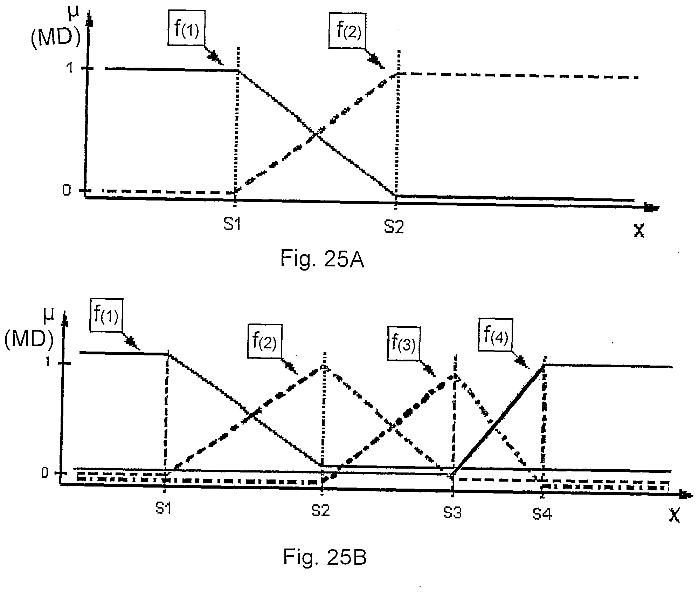

Les Figures 25A et 25B sont des graphiques illustrant des diagrammes de cycles du bloc-fonction FUZ_ATERM_REAL avec 2 fonctions d'appartenance (2 points d'appui, 2 degrés d'appartenance) et 4 fonctions d'appartenance (4 points d'appui, 4 degrés d'appartenance) respectivement.

Bloc FUZ PROD REAL

Description de la fonction :

La fonction forme le produit (sortie MD) des degrés d'appartenance (entrées extensibles MD1 ... MDx). En outre, la fonction effectue (pour le calcul des entiers) une multiplication en tenant compte de la gamme de valeur du degré d'appartenance (0 ... 10 000). Les gammes de valeur aux entrées et à la sortie comprennent pour le type de données INT 0 ... 10 000 et pour le type de données REAL 0 ... 1. Le nombre des entrées peut être augmenté. Comme paramètres supplémentaires, on peut configurer EN et ENO.

<div style="text-align:center">Description des paramètres du bloc :</div>

| Paramètre | Types de données | Signification |
|---|---|---|
| MD1 | INT, REAL | 1. degré d'appartenance (Membership Degree) |
| MD2 | INT, REAL | 2. degré d'appartenance (Membership Degree) |
| : | : | : |

(suite)

| Paramètre | Types de données | Signification |
|---|---|---|
| MDx | INT, REAL | x. degré d'appartenance (Membership Degree) |
| MD | INT, REAL | Sortie produit (fuzzy) |

Description de la fonction :

Dans l'arithmétique Real, on atteint la formation du produit du degré d'appartenance par une simple multiplication.

| Règle | Exemple |
|---|---|
| (0 ... 1)*(1 ... 1) = (0 ... 1) | 0.3*0.6 = 0.18 |

Dans l'arithmétique des entiers , une correction doit être effectuée, conditionnée par une remise à échelle de la gamme des valeurs :

| Règle | Exemple |
|---|---|
| (0 ... 10 000)*(0 ... 10 000) = (0 ... 10 000) | 3 000 * 6 000 = 1 800 (!) |

Il va de soi que de nombreuses modifications pourraient être apportées au mode de réalisation préférentiel qui vient d'être décrit sans pour autant sortir du cadre de la présente invention. Il est bien entendu que les composantes et configurations ne sont pas toutes essentielles à l'invention et ne devraient pas être prises dans un sens restrictif pour limiter la portée de la présente invention. Le système doit pouvoir s'adapter aux configurations proposées par les différents manufacturiers d'éoliennes afin de conserver toutes ses fonctionnalités. La liste des composantes ne peut donc être considérée comme exhaustive ni limitative.

De plus, dans le contexte de la présente description, les expressions "turbine" et "éolienne" ainsi que toute autre expression équivalente peuvent être utilisées de façon interchangeable, tel qu'il serait apparent pour une personne de l'art.

Par ailleurs, d'autres composantes, d'autres types de coopération entre les composantes ainsi que d'autres configurations matérielles pourraient être utilisées pour mettre en oeuvre le système pour contrôler une éolienne.

**Revendications**

1. Un système pour contrôler une éolienne, comprenant :

- des instruments météorologiques pour mesurer des conditions climatiques ambiantes incluant une température ambiante moyenne, une humidité relative ambiante moyenne et un rayonnement solaire ambiant moyen, autour de l'éolienne, et générer des signaux météorologiques en conséquence;
- une mémoire pour garder en mémoire une tolérance de glaçage;
- un premier calculateur pour calculer une probabilité de glaçage globale ajustée en fonction du rayonnement solaire ambiant moyen, de la température ambiante moyenne, et de l'humidité relative ambiante moyenne; et
- un contrôleur pour arrêter l'éolienne lorsque la probabilité de glaçage globale est supérieure à la tolérance de glaçage,
dans lequel le premier calculateur comprend :

- un premier moyen pour calculer une première consigne d'humidité relative associée avec la température ambiante moyenne, ladite première consigne étant obtenue par interpolation d'une première courbe caractéristique de consignes caractéristiques d'humidité relative en fonction d'une température ambiante caractéristique;
- un deuxième moyen pour calculer une deuxième consigne d'humidité relative résultant d'une soustraction d'une valeur de limite inférieure de la première consigne;
- un troisième moyen pour calculer une première probabilité partielle de glaçage correspondant à un premier degré d'approche entre 0.0 et 1.0 de l'humidité moyenne ambiante vers la première consigne selon une opération de fuzzification pour obtenir des degrés d'appartenance de l'humidité moyenne ambiante à la première consigne et la deuxième consigne;

- un quatrième moyen pour calculer un deuxième degré d'approche et un troisième degré d'approche entre 0.0 et 1.0 de la température ambiante moyenne vers une température inférieure limite et une température supérieure limite respectivement selon une opération de fuzzification pour obtenir des degrés d'appartenance de la température moyenne ambiante à une série de températures comprenant la température inférieure limite, la température supérieure limite, au moins une température additionnelle inférieure à la température inférieure limite et au moins une température additionnelle supérieure à la température supérieure limite;

- un cinquième moyen pour calculer une deuxième probabilité partielle de glaçage en additionnant le deuxième degré d'approche et le troisième degré d'approche;

- un sixième moyen pour calculer une troisième probabilité partielle de glaçage en multipliant la première probabilité partielle de glaçage et la deuxième probabilité partielle de glaçage;

- un septième moyen pour calculer un quatrième degré d'approche et un cinquième degré d'approche entre 0.0 et 1.0 du rayonnement solaire ambiant moyen vers un rayonnement solaire inférieur limite et un rayonnement solaire supérieur limite respectivement selon une opération de fuzzification pour obtenir des degrés d'appartenance du rayonnement solaire ambiant moyen à une série de valeurs de rayonnement solaire comprenant le rayonnement solaire inférieur limite et le rayonnement solaire supérieur limite et au moins deux autres valeurs de rayonnement solaire entre le rayonnement solaire inférieur limite et le rayonnement solaire supérieur limite;

- un huitième moyen pour calculer un indice de bonification par rayonnement solaire selon la formule

$$\text{indice de bonification} = ((\text{quatrième degré d'approche}) \times 0.1) + 1.0;$$

- un neuvième moyen pour calculer un indice de pénalisation par rayonnement solaire selon la formule

$$\text{indice de pénalisation} = 1.0 - ((\text{cinquième degré d'approche}) \times 0.1);$$

- un dixième moyen pour calculer une probabilité de glaçage amplifiée en multipliant la troisième probabilité partielle de glaçage par l'indice de bonification et l'indice de pénalisation; et

- un onzième moyen pour calculer la probabilité de glaçage globale qui est égale à la probabilité de glaçage amplifiée si la probabilité de glaçage amplifiée est égale ou inférieure à 1.0 et la probabilité de glaçage globale est égale à 1.0 si la probabilité de glaçage amplifiée est supérieure à 1.0.

2. Le système selon la revendication 1, dans lequel la mémoire garde en mémoire des courbes d'efficacité de référence et une tolérance de déviation d'efficacité, le système comprenant en outre :

- des capteurs pour détecter une puissance moyenne générée par l'éolienne, une position des pales moyenne de l'éolienne, et une vitesse de vent moyenne autour de l'éolienne, et générer des signaux d'efficacité en conséquence;et

- un deuxième calculateur pour calculer une efficacité actuelle de l'éolienne à partir des signaux d'efficacité, le contrôleur arrêtant l'éolienne lorsqu'une déviation entre l'efficacité actuelle et une efficacité moyenne calculée à partir des courbes d'efficacité de référence est supérieure à la tolérance de déviation d'efficacité,

dans lequel la tolérance de déviation d'efficacité est ajustée en fonction de la probabilité de glaçage globale.

3. Le système selon la revendication 1 ou 2, dans lequel :

- le deuxième calculateur comprend :

- un douzième moyen pour calculer une première vitesse de vent théorique associée avec la puissance moyenne générée par l'éolienne, ladite première vitesse de vent théorique étant obtenue par interpolation d'une deuxième courbe caractéristique de puissance générée en fonction de la vitesse de vent à une température la plus basse mesurée autour l'éolienne;

- un treizième moyen pour calculer une deuxième vitesse de vent théorique associée avec la puissance moyenne générée par l'éolienne, ladite deuxième vitesse de vent théorique étant obtenue par interpolation d'une troisième courbe caractéristique de puissance générée en fonction de la vitesse de vent à une température la plus haute mesurée autour l'éolienne;

- un quatorzième moyen pour calculer un sixième degré d'approche et un septième degré d'approche entre 0.0 et 1.0 de la température ambiante moyenne vers une première température critique et une deuxième température critique respectivement selon une opération de fuzzification pour obtenir des degrés d'appartenance de la température moyenne ambiante à la première température critique et la deuxième température critique;

- un quinzième moyen pour calculer une première vitesse de vent théorique intermédiaire en multipliant le sixième degré d'approche par la première vitesse de vent théorique, une deuxième vitesse de vent théorique intermédiaire en multipliant le septième degré d'approche par la deuxième vitesse de vent théorique, et une troisième vitesse de vent théorique intermédiaire en additionnant la première vitesse de vent théorique intermédiaire et la deuxième vitesse de vent théorique intermédiaire;

- un seizième moyen pour calculer une troisième vitesse de vent théorique associée avec la position moyenne des pales de l'éolienne, ladite troisième vitesse de vent théorique étant obtenue par interpolation d'une troisième courbe caractéristique de la position des pales en fonction de la vitesse de vent à la température la plus basse mesurée autour l'éolienne;

- un dix-septième moyen pour calculer une quatrième vitesse de vent théorique associée avec la position moyenne des pales de l'éolienne, ladite quatrième vitesse de vent théorique étant obtenue par interpolation d'une quatrième courbe caractéristique de la position des pales en fonction de la vitesse de vent à la température la plus haute mesurée autour l'éolienne;

- un dix-huitième moyen pour calculer un huitième degré d'approche et un neuvième degré d'approche entre 0.0 et 1.0 de la température ambiante moyenne vers une troisième température critique et une quatrième température critique respectivement selon une opération de fuzzification pour obtenir des degrés d'appartenance de la température moyenne ambiante à la troisième température critique et la quatrième température critique;

- un dix-neuvième moyen pour calculer une quatrième vitesse de vent théorique intermédiaire en multipliant le huitième degré d'approche par la troisième vitesse de vent théorique, une cinquième vitesse de vent théorique intermédiaire en multipliant le neuvième degré d'approche par la quatrième vitesse de vent théorique, et une sixième vitesse de vent théorique intermédiaire en additionnant la quatrième vitesse de vent théorique intermédiaire et la cinquième vitesse de vent théorique intermédiaire;

- un vingtième moyen pour calculer un dixième degré d'approche et un onzième degré d'approche entre 0.0 et 1.0 de la vitesse de vent moyenne autour de l'éolienne vers une première vitesse de vent critique et une deuxième vitesse de vent critique respectivement selon une opération de fuzzification pour obtenir des degrés d'appartenance de la vitesse de vent moyenne à la première vitesse de vent critique et la deuxième vitesse de vent critique;

- un vingt-et-unième moyen pour calculer une septième vitesse de vent théorique intermédiaire en multipliant le dixième degré d'approche par la troisième vitesse de vent théorique intermédiaire, une huitième vitesse de vent théorique intermédiaire en multipliant l'onzième degré d'approche par la sixième vitesse de vent théorique intermédiaire, et une neuvième vitesse de vent théorique intermédiaire en additionnant la septième vitesse de vent théorique intermédiaire et la huitième vitesse de vent théorique intermédiaire; et

- un vingt-deuxième moyen pour calculer la déviation entre l'efficacité actuelle et l'efficacité moyenne en soustrayant la vitesse de vent moyenne autour de l'éolienne de la neuvième vitesse de vent intermédiaire.

4. Une méthode pour contrôler une éolienne, comprenant les étapes de:

a) mesurer des conditions climatiques ambiantes, incluant une température ambiante moyenne, une humidité relative ambiante moyenne et un rayonnement solaire ambiant moyen, autour de l'éolienne, et générer des signaux météorologiques en conséquence;
b) garder dans une mémoire une tolérance de glaçage;
c) calculer une probabilité de glaçage globale ajustée en fonction du rayonnement solaire ambiant moyen, de la température ambiante moyenne, et de l'humidité relative ambiante moyenne; et
d) arrêter l'éolienne lorsque la probabilité de glaçage globale est supérieure à la tolérance de glaçage, dans laquelle l'étape c) comprend les sous-étapes de:

i) calculer une première consigne d'humidité relative associée avec la température ambiante moyenne, ladite première consigne étant obtenue par interpolation d'une première courbe caractéristique de consignes caractéristiques d'humidité relative en fonction d'une température ambiante caractéristique;
ii) calculer une deuxième consigne d'humidité relative résultant d'une soustraction d'une valeur de limite inférieure de la première consigne;

iii) calculer une première probabilité partielle de glaçage correspondant à un premier degré d'approche entre 0.0 et 1.0 de l'humidité moyenne ambiante vers la première consigne selon une opération de fuzzification pour obtenir des degrés d'appartenance de l'humidité moyenne ambiante à la première consigne et la deuxième consigne;

iv) calculer un deuxième degré d'approche et un troisième degré d'approche entre 0.0 et 1.0 de la température ambiante moyenne vers une température inférieure limite et une température supérieure limite respectivement selon une opération de fuzzification pour obtenir des degrés d'appartenance de la température moyenne ambiante à une série de températures comprenant la température inférieure limite, la température supérieure limite, au moins une température additionnelle inférieure à la température inférieure limite et au moins une température additionnelle supérieure à la température supérieure limite;

v) calculer une deuxième probabilité partielle de glaçage en additionnant le deuxième degré d'approche et le troisième degré d'approche;

vi) calculer une troisième probabilité partielle de glaçage en multipliant la première probabilité partielle de glaçage et la deuxième probabilité partielle de glaçage;

vii) calculer un quatrième degré d'approche et un cinquième degré d'approche entre 0.0 et 1.0 du rayonnement solaire ambiant moyen vers un rayonnement solaire inférieur limite et un rayonnement solaire supérieur limite respectivement selon une opération de fuzzification pour obtenir des degrés d'appartenance du rayonnement solaire ambiant moyen à une série de valeurs de rayonnement solaire comprenant le rayonnement solaire inférieur limite et le rayonnement solaire supérieur limite et au moins deux autres valeurs de rayonnement solaire entre le rayonnement solaire inférieur limite et le rayonnement solaire supérieur limite;

viii) calculer un indice de bonification par rayonnement solaire selon la formule

$$\text{indice de bonification} = ((\text{quatrième degré d'approche}) \times 0.1) + 1.0;$$

ix) calculer un indice de pénalisation par rayonnement solaire selon la formule

$$\text{indice de pénalisation} = 1.0 - ((\text{cinquième degré d'approche}) \times 0.1);$$

x) calculer une probabilité de glaçage amplifiée en multipliant la troisième probabilité partielle de glaçage par l'indice de bonification et l'indice de pénalisation; et

xi) calculer la probabilité de glaçage globale qui est égale à la probabilité de glaçage amplifiée si la probabilité de glaçage amplifiée est égale ou inférieure à 1.0 et la probabilité de glaçage globale est égale à 1.0 si la probabilité de glaçage amplifiée est supérieure à 1.0.

5. La méthode de contrôler l'éolienne selon la revendication 4, comprenant en outre les étapes de :

e) garder dans la mémoire des courbes d'efficacité de référence et une tolérance de déviation d'efficacité;
f) détecter une puissance moyenne générée par l'éolienne, une position des pales moyenne de l'éolienne, et une vitesse de vent moyenne autour de l'éolienne, et générer des signaux d'efficacité en conséquence;
g) calculer une efficacité actuelle de l'éolienne à partir des signaux d'efficacité;
h) arrêter l'éolienne lorsqu'une déviation entre l'efficacité actuelle et une efficacité moyenne calculée à partir des courbes d'efficacité de référence est supérieure à la tolérance de déviation d'efficacité,

dans laquelle la tolérance de déviation d'efficacité est ajustée en fonction de la probabilité de glaçage globale.

6. La méthode de contrôler l'éolienne selon la revendication 4 ou 5, dans laquelle l'étape g) comprend les sous-étapes de:

xii) calculer une première vitesse de vent théorique associée avec la puissance moyenne générée par l'éolienne, ladite première vitesse de vent théorique étant obtenue par interpolation d'une deuxième courbe caractéristique de puissance générée en fonction de la vitesse de vent à une température la plus basse mesurée autour l'éolienne;
xiii) calculer une deuxième vitesse de vent théorique associée avec la puissance moyenne générée par l'éolienne, ladite deuxième vitesse de vent théorique étant obtenue par interpolation d'une troisième courbe caractéristique de puissance générée en fonction de la vitesse de vent à une température la plus haute mesurée autour l'éolienne;

xiv) calculer un sixième degré d'approche et un septième degré d'approche entre 0.0 et 1.0 de la température ambiante moyenne vers une première température critique et une deuxième température critique respectivement selon une opération de fuzzification pour obtenir des degrés d'appartenance de la température moyenne ambiante à la première température critique et la deuxième température critique;

xv) calculer une première vitesse de vent théorique intermédiaire en multipliant le sixième degré d'approche par la première vitesse de vent théorique, une deuxième vitesse de vent théorique intermédiaire en multipliant le septième degré d'approche par la deuxième vitesse de vent théorique, et une troisième vitesse de vent théorique intermédiaire en additionnant la première vitesse de vent théorique intermédiaire et la deuxième vitesse de vent théorique intermédiaire;

xvi) calculer une troisième vitesse de vent théorique associée avec la position moyenne des pales de l'éolienne, ladite troisième vitesse de vent théorique étant obtenue par interpolation d'une troisième courbe caractéristique de la position des pales en fonction de la vitesse de vent à la température la plus basse mesurée autour l'éolienne;

xvii) calculer une quatrième vitesse de vent théorique associée avec la position moyenne des pales de l'éolienne, ladite quatrième vitesse de vent théorique étant obtenue par interpolation d'une quatrième courbe caractéristique de la position des pales en fonction de la vitesse de vent à la température la plus haute mesurée autour l'éolienne;

xviii) calculer un huitième degré d'approche et un neuvième degré d'approche entre 0.0 et 1.0 de la température ambiante moyenne vers une troisième température critique et une quatrième température critique respectivement selon une opération de fuzzification pour obtenir des degrés d'appartenance de la température moyenne ambiante à la troisième température critique et la quatrième température critique;

xix) calculer une quatrième vitesse de vent théorique intermédiaire en multipliant le huitième degré d'approche par la troisième vitesse de vent théorique, une cinquième vitesse de vent théorique intermédiaire en multipliant le neuvième degré d'approche par la quatrième vitesse de vent théorique, et une sixième vitesse de vent théorique intermédiaire en additionnant la quatrième vitesse de vent théorique intermédiaire et la cinquième vitesse de vent théorique intermédiaire;

xx) calculer un dixième degré d'approche et un onzième degré d'approche entre 0.0 et 1.0 de la vitesse de vent moyenne autour de l'éolienne vers une première vitesse de vent critique et une deuxième vitesse de vent critique respectivement selon une opération de fuzzification pour obtenir des degrés d'appartenance de la vitesse de vent moyenne à la première vitesse de vent critique et la deuxième vitesse de vent critique;

xxi) calculer une septième vitesse de vent théorique intermédiaire en multipliant le dixième degré d'approche par la troisième vitesse de vent théorique intermédiaire, une huitième vitesse de vent théorique intermédiaire en multipliant l'onzième degré d'approche par la sixième vitesse de vent théorique intermédiaire, et une neuvième vitesse de vent théorique intermédiaire en additionnant la septième vitesse de vent théorique intermédiaire et la huitième vitesse de vent théorique intermédiaire; et

xxii) calculer la déviation entre l'efficacité actuelle et l'efficacité moyenne en soustrayant la vitesse de vent moyenne autour de l'éolienne de la neuvième vitesse de vent intermédiaire.

7. Le système selon la revendication 3, dans lequel le premier calculateur comprend un vingt-troisième moyen pour comparer la probabilité de glaçage globale avec une probabilité de dépassement, activer une minuterie si la valeur de la probabilité de glaçage globale est égale ou supérieure à la probabilité de dépassement, remettre à zéro la minuterie si la valeur de la probabilité de glaçage globale est inférieure à la probabilité de dépassement, et le contrôleur arrête l'éolienne si la minuterie demeure active pendant une durée au-delà d'une période de temps critique.

8. Le système selon la revendication 2 ou 3, dans lequel le deuxième calculateur comprend un moyen pour ajuster la déviation entre l'efficacité actuelle et l'efficacité moyenne pour l'éolienne avant de comparer la déviation à la tolérance de déviation, en additionnant à la déviation une moyenne de déviations entre l'efficacité actuelle et l'efficacité moyenne pour une série d'autres éoliennes adjacentes à l'éolienne comprenant le système de contrôle et en divisant le résultat de l'addition par deux.

9. Le système selon la revendication 1, dans lequel la mémoire garde en mémoire des courbes d'efficacité de référence et une tolérance de déviation d'efficacité, le système comprenant en outre :

- des capteurs pour détecter une puissance moyenne générée par l'éolienne, une position des pales moyenne de l'éolienne, et une vitesse de vent moyenne autour de l'éolienne, et générer des signaux d'efficacité en conséquence;et
- un deuxième calculateur pour calculer une efficacité actuelle de l'éolienne à partir des signaux d'efficacité; et

- un troisième calculateur comprenant :

- un premier moyen pour calculer un paramètre de sensibilisation associée avec la probabilité de glaçage globale, ledit paramètre de sensibilisation étant obtenu par interpolation d'une courbe caractéristique du paramètre de sensibilisation en fonction de la probabilité de glaçage; et
- un deuxième moyen pour calculer une tolérance de déviation d'efficacité sensibilisée en soustrayant le paramètre de sensibilisation de la tolérance de déviation d'efficacité;

le contrôleur arrêtant l'éolienne lorsqu'une déviation entre l'efficacité actuelle et une efficacité moyenne calculée à partir des courbes d'efficacité de référence est supérieure à la tolérance de déviation d'efficacité sensibilisée.

10. La méthode de contrôler l'éolienne selon l'une quelconque des revendications 4 à 6, comprenant en outre les étapes de comparer la probabilité de glaçage globale avec une probabilité de dépassement, activer une minuterie si la valeur de la probabilité de glaçage globale est égale ou supérieure à la probabilité de dépassement, remettre à zéro la minuterie si la valeur de la probabilité de glaçage globale est inférieure à la probabilité de dépassement, et arrêter l'éolienne si la minuterie demeure active pendant une durée au-delà d'une période de temps critique.

11. La méthode de contrôler l'éolienne selon la revendication 5 ou 6, comprenant en outre l'étape d'ajuster la déviation entre l'efficacité actuelle et l'efficacité moyenne pour l'éolienne avant de comparer la déviation à la tolérance de déviation, en additionnant à la déviation une moyenne de déviations entre l'efficacité actuelle et l'efficacité moyenne pour une série d'autres éoliennes adjacentes à l'éolienne comprenant le système de contrôle et en divisant le résultat de l'addition par deux.

12. La méthode de contrôler l'éolienne selon la revendication 4, comprenant en outre les étapes de :

e) garder dans la mémoire des courbes d'efficacité de référence et une tolérance de déviation d'efficacité;
f) détecter une puissance moyenne générée par l'éolienne, une position des pales moyenne de l'éolienne, et une vitesse de vent moyenne autour de l'éolienne, et générer des signaux d'efficacité en conséquence;
g) calculer une efficacité actuelle de l'éolienne à partir des signaux d'efficacité;
h) calculer un paramètre de sensibilisation associée avec la probabilité de glaçage globale, ledit paramètre de sensibilisation étant obtenu par interpolation d'une courbe caractéristique du paramètre de sensibilisation en fonction de la probabilité de glaçage;
i) calculer une tolérance de déviation d'efficacité sensibilisée en soustrayant le paramètre de sensibilisation de la tolérance de déviation d'efficacité; et
j) arrêter l'éolienne lorsqu'une déviation entre l'efficacité actuelle et une efficacité moyenne calculée à partir des courbes d'efficacité de référence est supérieure à la tolérance de déviation d'efficacité sensibilisée.

**Patentansprüche**

1. Ein System zum Steuern einer Windturbine, umfassend:

- meteorologische Instrumente zum Messen der klimatischen Bedingungen in der Umgebung, einschließlich einer mittleren Temperatur in der Umgebung, einer relativen Feuchtigkeit in der Umgebung und einer mittleren Sonneneinstrahlung in der Umgebung um die Windturbine herum, und zum Erzeugen von entsprechenden meteorologischen Signalen,
- einen Speicher um eine Vereisungstoleranz zu bewahren,
- einen ersten Rechner zum Berechnen einer allgemeinen Vereisungswahrscheinlichkeit, abgeglichen in Abhängigkeit von der mittleren Sonneneinstrahlung in der Umgebung, von der mittleren Temperatur in der Umgebung und von der relativen Feuchtigkeit in der Umgebung, und
- ein Kontrollgerät, um die Windturbine anzuhalten, wenn die allgemeine Vereisungswahrscheinlichkeit über der Vereisungstoleranz liegt,
wobei der erste Rechner umfasst:

- ein erstes Mittel zum Berechnen eines ersten Sollwerts der relativen Feuchtigkeit in Verbindung mit der mittleren Temperatur in der Umgebung, wobei der erste Sollwert durch Interpolation einer ersten charakteristischen Kurve von Sollwerten, die für die relative Feuchtigkeit charakteristisch sind, in Abhängigkeit von einer charakteristischen Temperatur in der Umgebung ermittelt wird,

- ein zweites Mittel zum Berechnen eines zweiten Sollwerts der relativen Feuchtigkeit, resultierend aus einer Subtraktion eines unteren Grenzwerts vom ersten Sollwert,
- ein drittes Mittel zum Berechnen einer ersten Vereisungsteilwahrscheinlichkeit, die einem ersten Näherungswert zwischen 0,0 und 1,0 der mittleren Feuchtigkeit in der Umgebung in Richtung erster Sollwert gemäß einer Fuzzifizierungsoperation entspricht, um Zugehörigkeitsgrade der mittleren Feuchtigkeit in der Umgebung zum ersten Sollwert und zum zweiten Sollwert zu erhalten,
- ein viertes Mittel zum Berechnen eines zweiten Näherungswert und eines dritten Näherungswert zwischen 0,0 und 1,0 der mittleren Temperatur in der Umgebung in Richtung einer unteren Grenztemperatur und einer oberen Grenztemperatur jeweils gemäß einer Fuzzifizierungsoperation, um Zugehörigkeitsgrade der mittleren Temperatur in der Umgebung zu einer Temperaturreihe zu erhalten, umfassend die untere Grenztemperatur, die obere Grenztemperatur, mindestens eine zusätzliche Temperatur unter der unteren Grenztemperatur und mindestens eine zusätzliche Temperatur über der oberen Grenztemperatur,
- ein fünftes Mittel zum Berechnen einer zweiten Vereisungsteilwahrscheinlichkeit durch Addieren des zweiten Näherungswerts und des dritten Näherungswerts,
- ein sechstes Mittel zum Berechnen einer dritten Vereisungsteilwahrscheinlichkeit durch Multiplizieren der ersten Vereisungsteilwahrscheinlichkeit und der zweiten Vereisungsteilwahrscheinlichkeit,
- ein siebentes Mittel zum Berechnen eines vierten Näherungswerts und eines fünften Näherungswerts zwischen 0,0 und 1,0 der mittleren Sonneneinstrahlung in der Umgebung in Richtung einer unteren Grenz-Sonneneinstrahlung und einer oberen Grenz-Sonneneinstrahlung jeweils gemäß einer Fuzzifizierungsoperation, um Zugehörigkeitsgrade der mittleren Sonneneinstrahlung in der Umgebung zu einer Sonneneinstrahlungswertereihe zu erhalten, umfassend die untere Grenz-Sonneneinstrahlung und die obere Grenz-Sonneneinstrahlung und mindestens zwei andere Sonneneinstrahlungswerte zwischen der unteren Grenz-Sonneneinstrahlung und der oberen Grenz-Sonneneinstrahlung,
- ein achtes Mittel zum Berechnen eines Bonuswerts durch Sonneneinstrahlung gemäß der Formel

$$\text{Bonuswert} = ((\text{vierter Näherungswert}) \times 0{,}1) + 1{,}0,$$

- ein neuntes Mittel zum Berechnen eines Maluswerts durch Sonneneinstrahlung gemäß der Formel

$$\text{Maluswert} = 1{,}0 - ((\text{fünfter Näherungswert}) \times 0{,}1),$$

- ein zehntes Mittel zum Berechnen einer verstärkten Vereisungswahrscheinlichkeit durch Multiplizieren der dritten Vereisungsteilwahrscheinlichkeit mit dem Bonuswert und dem Maluswert, und
- ein elftes Mittel zum Berechnen der allgemeinen Vereisungswahrscheinlichkeit, die gleich der verstärkten Vereisungswahrscheinlichkeit ist, wenn die verstärkte Vereisungswahrscheinlichkeit gleich oder unter 1,0 ist und die allgemeine Vereisungswahrscheinlichkeit gleich 1,0 ist, wenn die verstärkte Vereisungswahrscheinlichkeit über 1,0 ist.

2. Das System nach Anspruch 1, wobei der Speicher Referenz-Effizienzkurven und eine Effizienzabweichungstoleranz bewährt, wobei das System ferner umfasst:

- Sensoren, um eine mittlere, von der Windturbine erzeugte Leistung, eine mittlere Position der Schaufeln der Windturbine und eine mittlere Windgeschwindigkeit um die Windturbine zu ermitteln und um entsprechende Effizienzsignale zu erzeugen, und
- einen zweiten Rechner zum Berechnen einer aktuellen Effizienz der Windturbine auf der Basis der Effizienzsignale, wobei das Kontrollgerät die Windturbine anhält, wenn eine Abweichung zwischen der aktuellen Effizienz und einer auf der Basis der Referenz-Effizienzkurven berechneten mittleren Effizienz größer als die Effizienzabweichungstoleranz ist,

wobei die Effizienzabweichungstoleranz in Abhängigkeit von der allgemeinen Vereisungswahrscheinlichkeit abgeglichen wird.

3. Das System nach Anspruch 1 oder 2, wobei:

- der zweite Rechner umfasst:

- ein zwölftes Mittel zum Berechnen einer ersten theoretischen Windgeschwindigkeit, zugeordnet der von der Windturbine erzeugten mittleren Leistung, wobei die erste theoretische Windgeschwindigkeit durch Interpolation einer zweiten charakteristischen Leistungskurve, erzeugt in Abhängigkeit von der Windgeschwindigkeit bei einer niedrigsten Temperatur, gemessen um die Windturbine, ermittelt wird,

- ein dreizehntes Mittel zum Berechnen einer zweiten theoretischen Windgeschwindigkeit, zugeordnet der von der Windturbine erzeugten mittleren Leistung, wobei die zweite theoretische Windgeschwindigkeit durch Interpolation einer dritten charakteristischen Leistungskurve, erzeugt in Abhängigkeit von der Windgeschwindigkeit bei einer höchsten Temperatur, gemessen um die Windturbine, ermittelt wird,

- ein vierzehntes Mittel zum Berechnen eines sechsten Näherungswerts und eines siebenten Näherungswert zwischen 0,0 und 1,0 der mittleren Temperatur in der Umgebung in Richtung einer ersten kritischen Temperatur und einer zweiten kritischen Temperatur jeweils gemäß einer Fuzzifizierungsoperation, um Zugehörigkeitsgrade der mittleren Temperatur in der Umgebung zur ersten kritischen Temperatur und zur zweiten kritischen Temperatur zu erhalten,

- ein fünfzehntes Mittel zum Berechnen einer ersten theoretischen Übergangs-Windgeschwindigkeit durch Multiplizieren des sechsten Näherungswerts mit der ersten theoretischen Windgeschwindigkeit, einer zweite theoretischen Übergangs-Windgeschwindigkeit durch Multiplizieren des siebenten Näherungswert mit der zweiten theoretischen Windgeschwindigkeit und einer dritten theoretischen Übergangs-Windgeschwindigkeit durch Addieren der ersten theoretischen Übergangs-Windgeschwindigkeit und der zweiten theoretischen Übergangs-Windgeschwindigkeit,

- ein sechzehntes Mittel zum Berechnen einer dritten theoretischen Windgeschwindigkeit, zugeordnet der mittleren Position der Schaufeln der Windturbine, wobei die dritte theoretische Windgeschwindigkeit durch Interpolation einer drittes charakteristischen Kurve der Position der Schaufeln in Abhängigkeit von der Windgeschwindigkeit bei der niedrigsten Temperatur, gemessen um die Windturbine, ermittelt wird,

- ein siebzehntes Mittel zum Berechnen einer vierten theoretischen Windgeschwindigkeit, zugeordnet der mittleren Position der Schaufeln der Windturbine, wobei die vierte theoretische Windgeschwindigkeit durch Interpolation einer vierten charakteristischen Kurve der Position der Schaufeln in Abhängigkeit von der Windgeschwindigkeit bei der höchsten Temperatur, gemessen um die Windturbine, ermittelt wird,

- ein achtzehntes Mittel zum Berechnen eines achten Näherungswerts und eines neunten Näherungswerts zwischen 0,0 und 1,0 der mittleren Temperatur in der Umgebung in Richtung einer dritten kritischen Temperatur und einer vierten kritischen Temperatur jeweils gemäß einer Fuzzifizierungsoperation, um Zugehörigkeitsgrade der mittleren Temperatur in der Umgebung zur dritten kritischen Temperatur und zur vierten kritischen Temperatur zu erhalten,

- ein neunzehntes Mittel zum Berechnen einer vierten theoretischen Übergangs-Windgeschwindigkeit durch Multiplizieren des achten Näherungswerts mit der dritten theoretischen Windgeschwindigkeit, einer fünften theoretischen Übergangs-Windgeschwindigkeit durch Multiplizieren des neunten Näherungswerts mit der vierten theoretischen Windgeschwindigkeit und einer sechsten theoretischen Übergangs-Windgeschwindigkeit durch Addieren der vierten theoretischen Übergangs-Windgeschwindigkeit und der fünften theoretischen Übergangs-Windgeschwindigkeit,

- ein zwanzigstes Mittel zum Berechnen eines zehnten Näherungswert und eines elften Näherungswert zwischen 0,0 und 1,0 der mittleren Windgeschwindigkeit um die Windturbine in Richtung einer ersten kritischen Windgeschwindigkeit und einer zweiten kritischen Windgeschwindigkeit jeweils gemäß einer Fuzzifizierungsoperation, um Zugehörigkeitsgrade der mittlere Windgeschwindigkeit zur ersten kritischen Windgeschwindigkeit und zur zweiten kritischen Windgeschwindigkeit zu erhalten,

- ein einundzwanzigstes Mittel zum Berechnen einer siebenten theoretischen Übergangs-Windgeschwindigkeit durch Multiplizieren des zehnten Näherungswerts mit der dritten theoretischen Übergangs-Windgeschwindigkeit, einer achten theoretischen Übergangs-Windgeschwindigkeit durch Multiplizieren des elften Näherungswerts mit der sechsten theoretischen Übergangs-Windgeschwindigkeit und einer neunten theoretischen Übergangs-Windgeschwindigkeit durch Addieren der siebenten theoretischen Übergangs-Windgeschwindigkeit und der achten theoretischen Übergangs-Windgeschwindigkeit, und

- ein zweiundzwanzigstes Mittel zum Berechnen der Abweichung zwischen der aktuellen Effizienz und der mittleren Effizienz durch Subtraktion der mittleren Windgeschwindigkeit um die Windturbine von der neunten Übergangs-Windgeschwindigkeit.

4. Ein Verfahren zum Steuern einer Windturbine, umfassend die folgenden Schritte:

a) Messen der klimatischen Bedingungen in der Umgebung, einschließlich einer mittleren Temperatur in der Umgebung, einer relativen Feuchtigkeit in der Umgebung und einer mittleren Sonneneinstrahlung in der Umgebung um die Windturbine herum, und zum Erzeugen von entsprechenden meteorologischen Signalen,

b) Speichern in einem Speicher einer Vereisungstoleranz,

c) Berechnen einer allgemeine Vereisungswahrscheinlichkeit, abgeglichen in Abhängigkeit von der mittleren Sonneneinstrahlung in der Umgebung, von der mittleren Temperatur in der Umgebung und von der relativen Feuchtigkeit in der Umgebung, und a

d) Anhalten der Windturbine, wenn die allgemeine Vereisungswahrscheinlichkeit über der Vereisungstoleranz liegt,

wobei der Schritt c) die folgenden Unterschritte umfasst:

i) Berechnen eines ersten Sollwerts der relativen Feuchtigkeit in Verbindung mit der mittleren Temperatur in der Umgebung, wobei der erste Sollwert durch Interpolation einer ersten charakteristischen Kurve von Sollwerten, die für die relative Feuchtigkeit charakteristisch sind, in Abhängigkeit von einer charakteristischen Temperatur in der Umgebung ermittelt wird,

ii) Berechnen eines zweiten Sollwerts der relativen Feuchtigkeit, resultierend aus einer Subtraktion eines unteren Grenzwerts vom ersten Sollwert,

iii) Berechnen einer ersten Vereisungsteilwahrscheinlichkeit, die einem ersten Näherungswert zwischen 0,0 und 1,0 der mittleren Feuchtigkeit in der Umgebung in Richtung erster Sollwert gemäß einer Fuzzifizierungsoperation entspricht, um Zugehörigkeitsgrade der mittleren Feuchtigkeit in der Umgebung zum ersten Sollwert und zum zweiten Sollwert zu erhalten,

iv) Berechnen eines zweiten Näherungswert und eines dritten Näherungswert zwischen 0,0 und 1,0 der mittleren Temperatur in der Umgebung in Richtung einer unteren Grenztemperatur und einer oberen Grenztemperatur jeweils gemäß einer Fuzzifizierungsoperation, um Zugehörigkeitsgrade der mittleren Temperatur in der Umgebung zu einer Temperaturreihe zu erhalten, umfassend die untere Grenztemperatur, die obere Grenztemperatur, mindestens eine zusätzliche Temperatur unter der unteren Grenztemperatur und mindestens eine zusätzliche Temperatur über der oberen Grenztemperatur,

v) Berechnen einer zweiten Vereisungsteilwahrscheinlichkeit durch Addieren des zweiten Näherungswerts und des dritten Näherungswerts,

vi) Berechnen einer dritten Vereisungsteilwahrscheinlichkeit durch Multiplizieren der ersten Vereisungsteilwahrscheinlichkeit und der zweiten Vereisungsteilwahrscheinlichkeit,

vii) Berechnen eines vierten Näherungswerts und eines fünften Näherungswerts zwischen 0,0 und 1,0 der mittleren Sonneneinstrahlung in der Umgebung in Richtung einer unteren Grenz-Sonneneinstrahlung und einer oberen Grenz-Sonneneinstrahlung jeweils gemäß einer Fuzzifizierungsoperation, um Zugehörigkeitsgrade der mittleren Sonneneinstrahlung in der Umgebung zu einer Sonneneinstrahlungswertereihe zu erhalten, umfassend die untere Grenz-Sonneneinstrahlung und die obere Grenz-Sonneneinstrahlung und mindestens zwei andere Sonneneinstrahlungswerte zwischen der unteren Grenz-Sonneneinstrahlung und der oberen Grenz-Sonneneinstrahlung,

viii) Berechnen eines Bonuswerts durch Sonneneinstrahlung gemäß der Formel

$$\text{Bonuswert} = ((\text{vierter Näherungswert}) \times 0{,}1) + 1{,}0,$$

ix) Berechnen eines Maluswerts durch Sonneneinstrahlung gemäß der Formel

$$\text{Maluswert} = 1{,}0 - ((\text{fünfter Näherungswert}) \times 0{,}1),$$

x) Berechnen einer verstärkten Vereisungswahrscheinlichkeit durch Multiplizieren der dritten Vereisungsteilwahrscheinlichkeit mit dem Bonuswert und dem Maluswert, und

xi) Berechnen der allgemeinen Vereisungswahrscheinlichkeit, die gleich der verstärkten Vereisungswahrscheinlichkeit ist, wenn die verstärkte Vereisungswahrscheinlichkeit gleich oder unter 1,0 ist und die Vereisungswahrscheinlichkeit gleich 1,0 ist, wenn die verstärkte Vereisungswahrscheinlichkeit über 1,0 ist.

5. Das Verfahren zum Steuern der Windturbine nach Anspruch 4, umfassend ferner die folgenden Schritte:

e) Speichern im Speicher der Referenz-Effizienzkurven und einer Effizienzabweichungstoleranz,

f) Erfassen einer von der Windturbine erzeugten mittleren Leistung, einer mittleren Position der Schaufeln der Windturbine und einer mittleren Windgeschwindigkeit um die Windturbine, und Erzeugen entsprechender Effizienzsignale,

g) Berechnen einer aktuellen Effizienz der Windturbine auf der Basis der Effizienzsignale,

h) Anhalten der Windturbine, wenn eine Abweichung zwischen der aktuellen Effizienz und einer berechneten mittleren Effizienz auf der Basis der Referenz-Effizienzkurven größer als die Effizienzabweichungstoleranz ist,

wobei die Effizienzabweichungstoleranz in Abhängigkeit von der allgemeinen Vereisungswahrscheinlichkeit abgeglichen wird.

6. Das Verfahren zum Steuern der Windturbine nach Anspruch 4 oder 5, wobei der Schritt g) die folgenden Unterschritte umfasst:

xii) Berechnen einer ersten theoretischen Windgeschwindigkeit, zugeordnet der von der Windturbine erzeugten mittleren Leistung, wobei die erste theoretische Windgeschwindigkeit durch Interpolation einer zweiten charakteristischen Leistungskurve, erzeugt in Abhängigkeit von der Windgeschwindigkeit bei einer niedrigsten Temperatur, gemessen um die Windturbine, ermittelt wird,

xiii) Berechnen einer zweiten theoretischen Windgeschwindigkeit, zugeordnet der von der Windturbine erzeugten mittleren Leistung, wobei die zweite theoretische Windgeschwindigkeit durch Interpolation einer dritten charakteristischen Leistungskurve, erzeugt in Abhängigkeit von der Windgeschwindigkeit bei einer höchsten Temperatur, gemessen um die Windturbine, ermittelt wird,

xiv) Berechnen eines sechsten Näherungswerts und eines siebenten Näherungswert zwischen 0,0 und 1,0 der mittleren Temperatur in der Umgebung in Richtung einer ersten kritischen Temperatur und einer zweiten kritischen Temperatur jeweils gemäß einer Fuzzifizierungsoperation, um Zugehörigkeitsgrade der mittleren Temperatur in der Umgebung zur ersten kritischen Temperatur und zur zweiten kritischen Temperatur zu erhalten,

xv) Berechnen einer ersten theoretischen Übergangs-Windgeschwindigkeit durch Multiplizieren des sechsten Näherungswerts mit der ersten theoretischen Windgeschwindigkeit, einer zweite theoretischen Übergangs-Windgeschwindigkeit durch Multiplizieren des siebenten Näherungswert mit der zweiten theoretischen Windgeschwindigkeit und einer dritten theoretischen Übergangs-Windgeschwindigkeit durch Addieren der ersten theoretischen Übergangs-Windgeschwindigkeit und der zweiten theoretischen Übergangs-Windgeschwindigkeit,

xvi) Berechnen einer dritten theoretischen Windgeschwindigkeit, zugeordnet der mittleren Position der Schaufeln der Windturbine, wobei die dritte theoretische Windgeschwindigkeit durch Interpolation einer drittes charakteristischen Kurve der Position der Schaufeln in Abhängigkeit von der Windgeschwindigkeit bei der niedrigsten Temperatur, gemessen um die Windturbine, ermittelt wird,

xvii) Berechnen einer vierten theoretischen Windgeschwindigkeit, zugeordnet der mittleren Position der Schaufeln der Windturbine, wobei die vierte theoretische Windgeschwindigkeit durch Interpolation einer vierten charakteristischen Kurve der Position der Schaufeln in Abhängigkeit von der Windgeschwindigkeit bei der höchsten Temperatur, gemessen um die Windturbine, ermittelt wird,

xviii) Berechnen eines achten Näherungswerts und eines neunten Näherungswerts zwischen 0,0 und 1,0 der mittleren Temperatur in der Umgebung in Richtung einer dritten kritischen Temperatur und einer vierten kritischen Temperatur jeweils gemäß einer Fuzzifizierungsoperation, um Zugehörigkeitsgrade der mittleren Temperatur in der Umgebung zur dritten kritischen Temperatur und zur vierten kritischen Temperatur zu erhalten,

xix) Berechnen einer vierten theoretischen Übergangs-Windgeschwindigkeit durch Multiplizieren des achten Näherungswerts mit der dritten theoretischen Windgeschwindigkeit, einer fünften theoretischen Übergangs-Windgeschwindigkeit durch Multiplizieren des neunten Näherungswerts mit der vierten theoretischen Windgeschwindigkeit und einer sechsten theoretischen Übergangs-Windgeschwindigkeit durch Addieren der vierten theoretischen Übergangs-Windgeschwindigkeit und der fünften theoretischen Übergangs-Windgeschwindigkeit,

xx) Berechnen eines zehnten Näherungswert und eines elften Näherungswert zwischen 0,0 und 1,0 der mittleren Windgeschwindigkeit um die Windturbine in Richtung einer ersten kritischen Windgeschwindigkeit und einer zweiten kritischen Windgeschwindigkeit jeweils gemäß einer Fuzzifizierungsoperation, um Zugehörigkeitsgrade der mittlere Windgeschwindigkeit zur ersten kritischen Windgeschwindigkeit und zur zweiten kritischen Windgeschwindigkeit zu erhalten,

xxi) Berechnen einer siebenten theoretischen Übergangs-Windgeschwindigkeit durch Multiplizieren des zehnten Näherungswerts mit der dritten theoretischen Übergangs-Windgeschwindigkeit, einer achten theoretischen Übergangs-Windgeschwindigkeit durch Multiplizieren des elften Näherungswerts mit der sechsten theoretischen Übergangs-Windgeschwindigkeit und einer neunten theoretischen Übergangs-Windgeschwindigkeit durch Addieren der siebenten theoretischen Übergangs-Windgeschwindigkeit und der achten theoretischen Übergangs-Windgeschwindigkeit, und

xxii) Berechnen der Abweichung zwischen der aktuellen Effizienz und der mittleren Effizienz durch Subtraktion der mittleren Windgeschwindigkeit um die Windturbine von der neunten Übergangs-Windgeschwindigkeit.

7. Das System nach Anspruch 3, wobei der erste Rechner ein dreiundzwanzigstes Mittel zum Vergleichen der allgemeinen Vereisungswahrscheinlichkeit mit einer Überschreitungswahrscheinlichkeit umfasst, eine Zeitschaltuhr aktiviert, wenn der Wert der allgemeinen Vereisungswahrscheinlichkeit gleich oder über der Überschreitungswahrscheinlichkeit ist, die Zeitschaltuhr auf Null stellt, wenn der Wert der allgemeinen Vereisungswahrscheinlichkeit unter der Überschreitungswahrscheinlichkeit ist und das Kontrollgerät die Windturbine anhält, wenn die Zeitschaltuhr während einer Dauer über einer kritischen Zeitperiode aktiv bleibt.

8. Das System nach einem der Ansprüche 2 oder 3, wobei der zweite Rechner ein Mittel umfasst, um die Abweichung zwischen der aktuellen Effizienz und der mittleren Effizienz für die Windturbine abzugleichen, bevor die Abweichung gegenüber der Abweichungstoleranz verglichen wird, durch Addieren zur Abweichung eines Abweichungsmittels zwischen der aktuellen Effizienz und der mittleren Effizienz für eine Reihe anderer benachbarter Windturbinen der Windturbine, umfassend das Steuersystem, und durch Dividieren des Ergebnisses der Addition durch zwei.

9. Das System nach Anspruch 1, wobei der Speicher Referenz-Effizienzkurven und eine Effizienzabweichungstoleranz bewährt, wobei das System ferner umfasst:

- Sensoren, um eine mittlere, von der Windturbine erzeugte Leistung, eine mittlere Position der Schaufeln der Windturbine und eine mittlere Windgeschwindigkeit um die Windturbine zu ermitteln und um entsprechende Effizienzsignale zu erzeugen, und
- einen zweiten Rechner zum Berechnen einer aktuellen Effizienz der Windturbine auf der Basis der Effizienzsignale, und
- einen dritten Rechner, umfassend:

- ein erstes Mittel zum Berechnen eines Sensibilisierungsparameters, der der allgemeine Vereisungswahrscheinlichkeit zugeordnet ist, wobei der Sensibilisierungsparameter durch Interpolation einer charakteristischen Kurve des Sensibilisierungsparameters in Abhängigkeit von der Vereisungswahrscheinlichkeit ermittelt wird,
- ein zweites Mittel zum Berechnen einer sensibilisierten Effizienzabweichungstoleranz durch Subtrahieren des Sensibilisierungsparameters von der Effizienzabweichungstoleranz,

wobei das Kontrollgerät die Windturbine anhält, wenn eine Abweichung zwischen der aktuellen Effizienz und einer berechneten mittleren Effizienz auf der Basis der Referenz-Effizienzkurven größer als die sensibilisierte Effizienzabweichungstoleranz ist.

10. Das Verfahren zum Steuern der Windturbine nach einem der Ansprüche 4 bis 5, umfassend ferner die Schritte des Vergleichens der allgemeinen Vereisungswahrscheinlichkeit mit einer Überschreitungswahrscheinlichkeit, des Aktivierens einer Zeitschaltuhr, wenn der Wert der allgemeinen Vereisungswahrscheinlichkeit gleich oder über der Überschreitungswahrscheinlichkeit ist, des Stellens der Zeitschaltuhr auf Null, wenn der Wert der allgemeinen Vereisungswahrscheinlichkeit unter der Überschreitungswahrscheinlichkeit ist und des Anhaltens der Windturbine, wenn die Zeitschaltuhr während einer Dauer über einer kritischen Zeitperiode aktiv bleibt.

11. Das Verfahren zum Steuern der Windturbine nach einem der Ansprüche 5 oder 6, umfassend ferner den Schritt des Abgleichs der Abweichung zwischen der aktuellen Effizienz und der mittleren Effizienz für die Windturbine, bevor die Abweichung gegenüber der Abweichungstoleranz verglichen wird, durch Addieren zur Abweichung eines Abweichungsmittels zwischen der aktuellen Effizienz und der mittleren Effizienz für eine Reihe anderer benachbarter Windturbinen der Windturbine, umfassend das Steuersystem, und durch Dividieren des Ergebnisses der Addition durch zwei.

12. Das Verfahren zum Steuern der Windturbine nach Anspruch 5, umfassend ferner die folgenden Schritte:

e) Speichern im Speicher der Referenz-Effizienzkurven und einer Effizienzabweichungstoleranz,
f) Erfassen einer von der Windturbine erzeugten mittleren Leistung, einer mittleren Position der Schaufeln der Windturbine und einer mittleren Windgeschwindigkeit um die Windturbine, und Erzeugen entsprechender Effizienzsignale,
g) Berechnen einer aktuellen Effizienz der Windturbine auf der Basis der Effizienzsignale,
h) Berechnen eines Sensibilisierungsparameters, der der allgemeine Vereisungswahrscheinlichkeit zugeordnet ist, wobei der Sensibilisierungsparameter durch Interpolation einer charakteristischen Kurve des Sensibilisierungsparameters in Abhängigkeit von der Vereisungswahrscheinlichkeit ermittelt wird,

i) Berechnen einer sensibilisierten Effizienzabweichungstoleranz durch Subtrahieren des Sensibilisierungsparameters von der Effizienzabweichungstoleranz, und

j) Anhalten der Windturbine, wenn eine Abweichung zwischen der aktuellen Effizienz und einer berechneten mittleren Effizienz auf der Basis der Referenz-Effizienzkurven größer als die sensibilisierte Effizienzabweichungstoleranz ist.

## Claims

1. A system for controlling a wind turbine, comprising:

   - meteorological instruments for measuring ambient climate conditions, including an average ambient temperature, an average ambient relative humidity and an average ambient solar influx, and generating meteorological signals related thereto;
   - a memory for keeping in memory an icing tolerance;
   - a first calculator for calculating an overall icing probability adjusted as a function of the average ambient solar influx, the average ambient temperature, and the average ambient relative humidity; and
   - a controller for stopping the wind turbine when the overall icing probability is greater than the icing tolerance,

   wherein the first calculator comprises:

   - first means for calculating a first relative humidity variable associated with the average ambient temperature, said first variable being obtained through interpolation of a first characteristic curve of characteristic variables of relative humidity as a function of a characteristic ambient temperature;
   - second means for calculating a second relative humidity variable resulting from the subtraction of a lower limit value from the first variable;
   - third means for calculating a first partial probability of icing corresponding to a first degree of approach between 0.0 and 1.0 of the ambient average humidity towards the first variable according to a fuzzification operation to obtain membership degrees of the ambient average humidity to the first variable and second variable;
   - fourth means for calculating a second degree of approach and a third degree of approach between 0.0 and 1.0 of the average ambient temperature towards a lower limit temperature and an upper limit temperature respectively according to a fuzzification operation to obtain membership degrees of the ambient average temperature to a series of temperatures comprising the lower limit temperature, the upper limit temperature, at least one additional temperature lower than the lower limit temperature and at least one additional temperature above the upper limit temperature;
   - fifth means for calculating a second partial probability of icing by adding the second degree of approach and the third degree of approach;
   - sixth means for calculating a third partial probability of icing by multiplying the first partial probability of icing and the second partial probability of icing;
   - seventh means for calculating a fourth degree of approach and a fifth degree of approach between 0.0 and 1.0 of the average ambient solar influx towards a lower limit solar influx and an upper limit solar influx respectively according to a fuzzification operation to obtain membership degrees of the average ambient solar influx to a series of values of solar influx comprising the lower limit solar influx and the upper limit solar influx and at least two other values of solar influx between the lower limit solar influx and the upper limit solar influx;
   - eighth means for calculating a upward adjustment parameter based on solar influx according to the formula:

     - upward adjustment parameter=((fourth degree of approach)×0.1)+1.0;

   - ninth means for calculating a downward adjustment parameter based on solar influx according to the formula:

     - downward adjustment parameter=1.0-((fifth degree of approach)×0.1);

   - tenth means for calculating an amplified probability of icing by multiplying the third partial probability of icing by the upward adjustment parameter and the downward adjustment parameter; and
   - eleventh means for calculating the overall icing probability which is equal to the amplified probability of icing if the amplified probability of icing is equal or lower than 1.0 and the overall icing probability is equal to 1.0 if the amplified probability of icing is greater than 1.0.

2. The system according to claim 1, wherein the memory stores reference efficiency curves and an efficiency deviation tolerance, and the system further comprises:

- sensors for detecting an average power generated by the wind turbine, an average position of the wind turbine blades, and an average wind speed proximate the wind turbine, and for generating efficiency signals based thereon; and
- a second calculator for calculating the actual efficiency of the wind turbine based on the efficiency signals, the controller stopping the wind turbine when a deviation between the actual efficiency and an average efficiency calculated based upon the reference efficiency curves is greater than an efficiency deviation tolerance,

wherein the efficiency deviation tolerance is adjusted as a function of the overall icing probability.

3. The system according to claim 1 or 2, wherein the second calculator comprises:

- twelfth means for calculating a first theoretical wind speed associated with the average power generated by the wind turbine, said first theoretical wind speed being obtained through interpolation of a second generated power characteristic curve as a function of wind speed at a lowest temperature measured proximate the wind turbine;
- thirteenth means for calculating a second theoretical wind speed associated with the average power generated by the wind turbine, said second theoretical wind speed being obtained through interpolation of a third generated power characteristic curve as a function of wind speed at a highest temperature measured proximate the wind turbine;
- fourteenth means for calculating a sixth degree of approach and a seventh degree of approach between 0.0 and 1.0 of the average ambient temperature towards a first critical temperature and a second critical temperature respectively according to a fuzzification operation to obtain membership degrees of the ambient average temperature to a first critical temperature and a second critical temperature;
- fifteenth means for calculating a first intermediate theoretical wind speed by multiplying the sixth degree of approach by the first theoretical wind speed, a second intermediate theoretical wind speed by multiplying the seventh degree of approach by the second theoretical wind speed, and a third intermediate theoretical wind speed by adding the first intermediate theoretical wind speed and the second intermediate theoretical wind speed;
- sixteenth means for calculating a third theoretical wind speed associated with an average position of the wind turbine blades, said third theoretical wind speed being obtained through interpolation of a third characteristic curve of the position of the blades as a function of the wind speed at the lowest temperature measured proximate the wind turbine;
- seventeenth means for calculating a fourth theoretical wind speed associated with the average position of the wind turbine blades, said fourth theoretical wind speed being obtained through interpolation of a fourth characteristic curve of the position of the blades as a function of the wind speed at the highest temperature measured proximate the wind turbine;
- eighteenth means for calculating an eighth degree of approach and a ninth degree of approach between 0.0 and 1.0 of the average ambient temperature towards a third critical temperature and a fourth critical temperature respectively according to a fuzzification operation to obtain membership degrees of the average ambient temperature towards the third critical temperature and the fourth critical temperature;
- nineteenth means for calculating a fourth intermediate theoretical wind speed by multiplying the eighth degree of approach by the third theoretical wind speed, a fifth intermediate theoretical wind speed by multiplying the ninth degree of approach by the fourth theoretical wind speed, and a sixth intermediate theoretical wind speed by adding the fourth intermediate theoretical wind speed and the fifth intermediate theoretical wind speed;
- twentieth means for calculating a tenth degree of approach and an eleventh degree of approach between 0.0 and 1.0 of the average wind speed proximate the wind turbine towards a first critical wind speed and a second critical wind speed respectively according to a fuzzification operation in order to obtain membership degrees of the average wind speed towards a first critical wind speed and a second critical wind speed;
- twenty-first means for calculating a seventh intermediate theoretical wind speed by multiplying the tenth degree of approach by a third intermediate theoretical wind speed, an eighth intermediate theoretical wind speed by multiplying the eleventh degree of approach by the sixth intermediate theoretical wind speed, and a ninth intermediate theoretical wind speed by adding the seventh intermediate theoretical wind speed and the eighth intermediate theoretical wind speed; and
- twenty-second means for calculating the deviation between the actual efficiency and the average efficiency by subtracting the average wind speed proximate the wind turbine from the ninth intermediate wind speed.

4. A method for controlling a wind turbine, comprising the steps of:

a) measuring ambient climate conditions, including an average ambient temperature, an average ambient relative humidity and an average ambient solar influx, and generating meteorological signals related thereto;
b) storing in a memory an icing tolerance;
c) calculating an overall icing probability adjusted as a function of the average ambient solar influx, the average ambient temperature, and the average ambient relative humidity; and
d) stopping the wind turbine when the overall icing probability is greater than the icing tolerance,

wherein step c) comprises the sub-steps of:

i) calculating a first relative humidity setting associated with the average ambient temperature, said first setting being obtained through interpolation of a first characteristic curve of the relative humidity characteristic settings as a function of a characteristic ambient temperature;
ii) calculating a second relative humidity setting resulting from a subtraction of a lower limit value from the first setting;
iii) calculating a first partial probability of icing corresponding to a first degree of approach between 0.0 and 1.0 of the ambient average humidity towards a first setting according to a fuzzification operation in order to obtain membership degrees of the ambient average humidity towards the first setting and the second setting;
iv) calculating a second degree of approach and a third degree of approach between 0.0 and 1.0 of the average ambient temperature towards a lower limit temperature and an upper limit temperature respectively according to a fuzzification operation in order to obtain membership degrees of the ambient average temperature to a series of temperatures comprising the lower limit temperature, the upper limit temperature, at least one additional temperature lower than the lower limit temperature and at least one additional temperature greater than the upper limit temperature;
v) calculating a second partial probability of icing by adding the second degree of approach and the third degree of approach;
vi) calculating a third partial probability of icing by multiplying the first partial probability of icing and the second partial probability of icing;
vii) calculating a fourth degree of approach and a fifth degree of approach between 0.0 and 1.0 of the average ambient solar influx towards a lower limit solar influx and an upper limit solar influx respectively according to a fuzzification operation to obtain membership degrees of the average ambient solar influx to a series of values of solar influx comprising the lower limit solar influx and the upper limit solar influx and at least two other values of solar influx between the lower limit solar influx and the upper limit solar influx;
viii) calculating a solar influx upward adjustment parameter according to the formula:

$$\text{upward adjustment parameter} = ((\text{fourth degree of approach}) \times 0.1) + 1.0;$$

ix) calculating a solar influx downward adjustment parameter according to the formula:

$$\text{downward adjustment parameter} = 1.0 - ((\text{fifth degree of approach}) \times 0.1);$$

x) calculating an amplified probability of icing by multiplying the third partial probability of icing by the upward adjustment parameter and the downward adjustment parameter; and
xi) calculating the probability of icing which is equal to the amplified probability of icing if the amplified probability of icing is equal or lower than 1.0 and the probability of icing is equal to 1.0 if the amplified probability of icing is greater than 1.0.

5. The method of controlling the wind turbine according to claim 4, further comprising the steps of:

e) storing in the memory reference efficiency curves and an efficiency deviation tolerance;
f) detecting an average power generated by the wind turbine, an average position of the wind turbine blades, and an average wind speed proximate the wind turbine, and generating efficiency signals based thereon;

g) calculating an actual efficiency of the wind turbine based on the efficiency signals; and

h) stopping the wind turbine when a deviation between the actual efficiency and an average efficiency calculated based on the reference efficiency curves is greater than the efficiency deviation tolerance,

wherein the efficiency deviation tolerance is adjusted as a function of the overall icing probability.

**6.** The method of controlling the wind turbine according to claim 4 or 5, wherein step g) comprises the sub-steps of:

xii) calculating a first theoretical wind speed associated with the average power generated by the wind turbine, said first theoretical wind speed being obtained through interpolation of a second characteristic curve of power generated as a function of wind speed at a lowest temperature measured proximate the wind turbine;

xiii) calculating a second theoretical wind speed associated with the average power generated by the wind turbine, said second theoretical wind speed being obtained through interpolation of a third characteristic curve of power generated as a function of wind speed at a highest temperature measured proximate the wind turbine;

xiv) calculating a sixth degree of approach and a seventh degree of approach between 0.0 and 1.0 of the average ambient temperature towards a first critical temperature and a second critical temperature respectively according to a fuzzification operation to obtain membership degrees of the average ambient temperature towards the first critical temperature and the second critical temperature;

xv) calculating a first intermediate theoretical wind speed by multiplying the sixth degree of approach by the first theoretical wind speed, a second intermediate theoretical wind speed by multiplying the seventh degree of approach by the second theoretical wind speed and a third intermediate theoretical wind speed by adding the first intermediate theoretical wind speed and the second intermediate theoretical wind speed;

xvi) calculating a third theoretical wind speed associated with the average position of the wind turbine blades, said third theoretical wind speed being obtained through interpolation of a third characteristic curve of the position of the blades as a function of the wind speed at the lowest temperature measured proximate the wind turbine;

xvii) calculating a fourth theoretical wind speed associated with the average position of the wind turbine blades, said fourth theoretical wind speed being obtained through interpolation of a fourth characteristic curve of the position of the blades as a function of the wind speed at the highest temperature measured proximate the wind turbine;

xviii) calculating an eighth degree of approach and a ninth degree of approach between 0.0 and 1.0 of the average ambient temperature towards a third critical temperature and a fourth critical temperature respectively according to a fuzzification operation for obtaining membership degrees of the average ambient temperature towards the third critical temperature and the fourth critical temperature;

xix) calculating a fourth intermediate theoretical wind speed by multiplying the eighth degree of approach by a third theoretical wind speed, a fifth intermediate theoretical wind speed by multiplying the ninth degree of approach by the fourth theoretical wind speed, and a sixth intermediate theoretical wind speed by adding the fourth intermediate theoretical wind speed and the fifth intermediate theoretical wind speed;

xx) calculating a tenth degree of approach and an eleventh degree of approach between 0.0 and 1.0 of the average wind speed proximate the wind turbine towards a first critical wind speed and a second critical wind speed respectively according to a fuzzification operation to obtain membership degrees of the average wind speed towards the first critical wind speed and the second critical wind speed;

xxi) calculating a seventh intermediate theoretical wind speed by multiplying the tenth degree of approach by the third intermediate theoretical wind speed, an eighth intermediate theoretical wind speed by multiplying the eleventh degree of approach by the sixth intermediate theoretical wind speed, and a ninth intermediate theoretical wind speed by adding the seventh intermediate theoretical wind speed and the eighth intermediate theoretical wind speed; and

xxii) calculating the deviation between the actual efficiency and average efficiency by subtracting the average wind speed proximate the wind turbine from the ninth intermediate wind speed.

**7.** The system according to claim 3, wherein the first calculator comprises a twenty-third means for comparing the overall icing probability with an excess probability, activating a timer if the value of the overall icing probability is equal or greater than the excess probability, resetting the timer if the value of the overall icing probability is less than the excess probability, and the controller stops the wind turbine if the timer remains active for a duration exceeding a critical time period.

**8.** The system according to claim 2 or 3, wherein the second calculator comprises a means for adjusting the deviation between the actual efficiency and the average efficiency for the wind turbine before comparing the deviation to the deviation tolerance, by adding to the deviation a deviation average between the actual efficiency and the average efficiency for a series of other wind turbines adjacent to said wind turbine comprising the control system and by dividing the result of the addition by two.

9. The system according to claim 1, wherein the memory stores reference efficiency curves and an efficiency deviation tolerance, the system further comprising:

- sensors for detecting the average power generated by the wind turbine, an average position of the wind turbine blades, and an average wind speed proximate the wind turbine, and generating efficiency signals based thereon;
- a second calculator for calculating an actual efficiency of the wind turbine based on the efficiency signals; and
- a third calculator comprising:

- first means for calculating a sensitivity parameter associated with the overall probability of icing, said sensitivity parameter being obtained through interpolation of a characteristic curve of the sensitivity parameter as a function of the probability of icing; and
- second means for calculating an adjusted efficiency deviation tolerance by subtracting the sensitivity parameter from the efficiency deviation tolerance;

the controller stopping the wind turbine when a deviation between the actual efficiency and the average efficiency calculated based on the reference efficiency curves is greater than the adjusted efficiency deviation tolerance.

10. The method of controlling the wind turbine according to any one of claims 4 to 6 , further comprising the steps of comparing the overall icing probability with an excess probability, activating a timer if the value of the overall icing probability is equal or greater than the excess probability, resetting the timer if the value of the overall icing probability is less than the excess probability, and stopping the wind turbine if the timer remains active for a duration exceeding a critical time period.

11. The method of controlling the wind turbine according to claim 5 or 6, further comprising the step of adjusting the deviation between the actual efficiency and average efficiency for the wind turbine before comparing the deviation to the deviation tolerance, by adding to the deviation an average of deviations between the actual efficiency and average efficiency for a series of otherwind turbines adjacent to the wind turbine comprising the control system and by dividing the result of the addition by two.

12. The method of controlling the wind turbine according to claim 4, further comprising the steps of:

e) storing in the memory the reference efficiency curves and an efficiency deviation tolerance;
f) detecting an average power generated by the wind turbine, an average position of the wind turbine blades, and an average wind speed proximate the wind turbine, and generating efficiency signals based thereon;
g) calculating an actual wind turbine efficiency based on the efficiency signals;
h) calculating an adjustment parameter associated with the overall icing probability, said adjustment parameter being obtained through interpolation of a characteristic curve of the adjustment parameter as a function of the probability of icing;
i) calculating a deviation tolerance of the adjusted efficiency by subtracting the adjustment parameter from the efficiency deviation tolerance; and
j) stopping the wind turbine when a deviation between the actual efficiency and an average efficiency calculated based on reference efficiency curves is greater than the adjusted efficiency deviation tolerance.

# Système de détection de Givre
## Principe d'opération

Fig. 1

EP 2 078 159 B1

FBI_2_12 (6)

```
        ┌──────────┐
        │  LAG1    │
        │          │
     ───┤ MAN      │
     ───┤ HALT     │
Puissance_KW ▶──┤ X      Y ├──▶ Puissance_KW_Moy10M
        1.0 ▶──┤ GAIN     │
      t#10m ▶──┤ LAG      │
     ───┤ YMAN     │
        └──────────┘
```

Fig. 2A

FBI_2_8 (2)

```
        ┌──────────┐
        │  LAG1    │
        │          │
     ───┤ MAN      │
     ───┤ HALT     │
Vitesse_Vent ▶──┤ X      Y ├──▶ Vitesse_Vent_Moy10M
        1.0 ▶──┤ GAIN     │
      t#10m ▶──┤ LAG      │
     ───┤ YMAN     │
        └──────────┘
```

Fig. 2B

FBI_2_7 (1)

```
        ┌──────────┐
        │  LAG1    │
        │          │
     ───┤ MAN      │
     ───┤ HALT     │
Temp_Ambiant ▶──┤ X      Y ├──▶ Temp_Ambiant_Moy10M
        1.0 ▶──┤ GAIN     │
      t#10m ───┤ LAG      │
     ───┤ YMAN     │
        └──────────┘
```

Fig. 2C

FBI_2_13 (7)

```
        ┌──────────┐
        │  LAG1    │
        │          │
     ───┤ MAN      │
     ───┤ HALT     │
Humidité_Relative ▶──┤ X      Y ├──▶ Humidité_Moy10M
        1.0 ▶──┤ GAIN     │
      t#10m ▶──┤ LAG      │
     ───┤ YMAN     │
        └──────────┘
```

Fig. 2E

FBI_2_11 (5)

```
                                    ┌──────────┐
                                    │  LAG1    │
        2.9 (3)        2.10(4)      │          │
      ┌──────────┐  ┌──────────┐ ───┤ MAN      │
Pos_Act_Pale1 ▶─┤          │  │          │ ───┤ HALT     │
Pos_Act_Pale2 ▶─┤ ADD_REAL │──┤ DIV_REAL │───┤ X      Y ├──▶ Pos_Pales_Moy10M
Pos_Act_Pale3 ▶─┤          │  │          │ 1.0 ▶──┤ GAIN     │
      └──────────┘  └──────────┘ t#10m ▶──┤ LAG      │
               3.0 ▶               ───┤ YMAN     │
                                    └──────────┘
```

Fig. 2D

Fig. 3A

Fig. 3B

Table des couples XY uniques à la turbine
Conjugaison Pos. Pales/Vitesse Vent @ -7.5°C (D=1.087kg /m³)

FBI_1_20(1)

Compensation en température de la courbe des Pales vs. Vitesse Vent

1.187(3)    146

MUL_ REAL

1.222(7)

ADD_ REAL

**LOOKUP_TABLE**

| Pos_Pales_Moy10M | X | Y |
|---|---|---|
| 2.0 | XiYi1 | OXHI |
| 10.5 | XiYi2 | OXLO |
| 2.21 | XiYi3 | |
| 11.0 | XiYi4 | |
| 2.38 | XiYi5 | |
| 11.5 | XiYi6 | |
| 2.74 | XiYi7 | |
| 12.0 | XiYi8 | |
| 4.89 | XiYi9 | |
| 12.5 | XiYi10 | |
| 7.52 | XiYi11 | |
| 13.0 | XiYi12 | |
| 11.52 | XiYi13 | |
| 14.0 | XiYi14 | |
| 13.0 | XiYi15 | |
| 15.0 | XiYi16 | |
| 16.8 | XiYi17 | |
| 16.0 | XiYi18 | |
| 19.18 | XiYi19 | |
| 17.0 | XiYi20 | |
| 20.61 | XiYi21 | |
| 18.0 | XiYi22 | |
| 21.1 | XiYi23 | |
| 19.0 | XiYi24 | |
| 21.84 | XiYi25 | |
| 19.5 | XiYi26 | |
| 22.7 | XiYi27 | |
| 20.5 | XiYi28 | |
| 23.4 | XiYi29 | |
| 25.0 | XiYi30 | |

140

144

FBI_1_188(2)

**FUZ_ATERM_REAL**

| Temp_Ambiant_Moy10M | x | MD1 |
|---|---|---|
| | | MD2 |
| | | MD3 |
| | | MD4 |
| | | MD5 |
| | | MD6 |
| -7.5 | S1 | MD7 |
| 7.5 | S2 | MD8 |
| | | MD9 |

FBI_1_221(4)

**LOOKUP_TABLE**

| VTG01_BL_ACT_AVG | X | Y |
|---|---|---|
| 2.0 | XiYi1 | OXHI |
| 10.0 | XiYi2 | OXLO |
| 2.34 | XiYi3 | |
| 10.5 | XiYi4 | |
| 2.83 | XiYi5 | |
| 11.0 | XiYi6 | |
| 4.43 | XiYi7 | |
| 12.0 | XiYi8 | |
| 6.45 | XiYi9 | |
| 13.0 | XiYi10 | |
| 10.71 | XiYi11 | |
| 14.0 | XiYi12 | |
| 13.0 | XiYi13 | |
| 15.0 | XiYi14 | |
| 15.8 | XiYi15 | |
| 16.0 | XiYi16 | |
| 17.4 | XiYi17 | |
| 17.0 | XiYi18 | |
| 18.25 | XiYi19 | |
| 18.0 | XiYi20 | |
| 19.28 | XiYi21 | |
| 19.0 | XiYi22 | |
| 20.66 | XiYi23 | |
| 20.0 | XiYi24 | |
| 22.04 | XiYi25 | |
| 21.0 | XiYi26 | |
| 22.73 | XiYi27 | |
| 22.0 | XiYi28 | |
| 23.42 | XiYi29 | |
| 25.0 | XiYi30 | |

1.189(5)

MUL_ REAL

C

Table des couples XY uniques à la turbine
Conjugaison Pos.Pales/Vitesse Vent
@ 7.5°C (D=1.040 kg /m³)

142

**Fig. 3C**

EP 2 078 159 B1

Amortissement des variations brusques

FBL_1_243(19)

Calcul de la déviation d'efficacité actuelle en m/sec

1.241(17)

1.242(18)

Sélection proportionnelle de la courbe à utiliser selon la vitesse du vent

FBL_1_237(13)

1.238(14)

1.240(16)

1.239(15)

**LAG_FILTER**
IN
GAIN
LAG
TR_I
TR_S
OUT

1.0
t#10M
0.0

**LIMIT_REAL**
MN
IN
MX

5.0
-5.0

**SUB_REAL**

Vitesse_Vent_Moy10M

152

**ADD_REAL**

**MUL_REAL**

**MUL_REAL**

**FUZ_ATERM_REAL**
x
MD1
MD2
MD3
MD4
MD5
MD6
MD7
MD8
MD9
S1
S2

Vitesse_ Vent_ Moy10M

10.0
14.0

148

150

B

C

Déviation_Efficacité_Eol

Fig. 3D

43

Courbe XY où:
-X est la température ambiante
-Y est une consigne d'humidité relative

La sortie Y est donc une consigne d'humidité relative
en fonction de la température ambiante

Détermine le degré d'approche (entre 0.0 et 1.0) de
l'humidité relative actuelle vers les points d'appui S1 et S2.
Plus la valeur trouvée à l'entrée X s'approche de S2, plus
la sortie MD2 s'approche de 1.0

FBI_4_24(3)

FUZ_ATERM_REAL

| x | MD1 |
| | MD2 |
| | MD3 |
| | MD4 |
| | MD5 |
| | MD6 |
| S1 | MD7 |
| S2 | MD8 |
| | MD9 |

AA

FBI_4_43 (1)

LOOKUP_TABLE

Temp_Ambiant_Moy10M ▶ — X    Y
-15.0 ▶ — XiYi1    OXHI
86.65 ▶ — XiYi2    OXLO
0.0 ▶ — XiYi3
99.4 ▶ — XiYi4
0.2 ▶ — XiYi5
99.6 ▶ — XiYi6

4.44(2)

SUB_REAL

0.5 ▶

110

112

114

Fig. 4A

Détermine le degré d'approche (entre 0.0 et 1.0) de
la température ambiante actuelle vers les points d'appui
S1, S2, S3 et S4.
Plus la valeur trouvée à l'entrée X s'approche de S2, plus
la sortie MD2 s'approche de 1.0
Plus la valeur trouvée à l'entrée X s'approche de S3, plus
la sortie MD3 s'approche de 1.0

L'addition des indices d'approche permet de déterminer
qu'entre -7°C et 1.7°C, nous obtiendrons un indice – à 1.0.
C'est donc dire que c'est entre ces deux températures
que les risques de formation de givre sont élevés

Fig. 4B

Détermine le degré d'approche (entre 0.0 et 1.0) du Rayonnement solaire vers les points d'appui S1 et S2. Plus la valeur trouvée à l'entrée X s'approche de S1, plus la sortie MD1 s'approche de 1.0

Calcul de l'indice d'amplification en fonction du rayonnement solaire.
En situation de basse énergie, l'indice d'approche sera bonifié.
En situation de haute énergie, l'indice d'approche sera pénalisé.

124

Bonification de l'indice d'approche

FBI_4_28(7)

FUZ_ATERM_REAL

4.29(8)

4.30(9)

ADD_REAL

Rayonnement_
Solaire

x

MD1
MD2
MD3
MD4
MD5
MD6
MD7
MD8
MD9

FUZ_PROD_REAL
IN1
IN2

0.10

1.0

CC

40.0
200.0
700.0
800.0

S1
S2
S3
S4

4.32(10)

Pénalisation de l'indice d'approche

4.33(11)

FUZ_PROD_REAL
IN1
IN2

0.1

1.0

ADD_REAL

DD

122

126

Fig. 4C

EP 2 078 159 B1

Fig. 4D

Polarisation positive (obligatoire)

La Déviation de l'éolienne et la Déviation moyenne de l'ensemble des éoliennes
du parc sont combinées pour obtenir une déviation moyenne amortie

3.8(4)

ABS_REAL

Déviation_Efficacité_Eol ▶

3.13(6)

ADD_REAL

3.14(7)

DIV_REAL

▶ Déviation_Efficacité_Moy

2.0 ▶

3.19(5)

ABS_REAL

Déviation_Efficacité_Parc ▶

Fig. 5

La sensibilisation est ajustée en fonction de l'indice de probabilité de givre.
Le bloc "LOOKUP TABLE" contient des couples XY où les broches contenant
un chiffre impair est l'élément X du couple et où les broches contenant
un chiffre pair est l'élément Y du couple.

FBl_3_16(1)

LOOKUP_TABLE

Probabilité_Givre — X        Y
0.0 — XiYi1      OXHI
0.0 — XiYi2      OXLO
0.8 — XiYi3
0.0 — XiYi4
0.9 — XiYi5
0.2 — XiYi6
0.95 — XiYi7
0.6 — XiYi8
1.0 — XiYi9
1.0 — XiYi10

170

Sensibilisation de la consigne originale

3.4(2)          172
SUB_REAL

Déviation_Max_Tolérée

Vérification de dépassement de la
tolérance sensibilisée de déviation

3.5(3)
GE_REAL

Déviation_Efficacité_Moy

3.18(10)
OR_BOOL

Arrêt_Pour_Glaçage_Eol

Haute probabilité pendant plus
de 20 minutes = Certitude

FBl_3_20(9)
TON
IN    O
PT    ET

t#20m

3.17(8)
GE_REAL

Probabilité_Givre
0.98

Fig. 6

FBI_2_12 (6)

```
            ┌──────────┐
            │  LAG1    │
            │          │
          ──┤ MAN      │
          ──┤ HALT     │
  710.0 ▶──┤ X      Y ├──▶ 709.9714
    1.0 ▶──┤ GAIN     │
  t#10m▶──┤ LAG      │
          ──┤ YMAN     │
            └──────────┘
```

Fig. 7A

FBI_2_8 (2)

```
            ┌──────────┐
            │  LAG1    │
            │          │
          ──┤ MAN      │
          ──┤ HALT     │
    8.2 ▶──┤ X      Y ├──▶ 8.200445
    1.0 ▶──┤ GAIN     │
  t#10m▶──┤ LAG      │
          ──┤ YMAN     │
            └──────────┘
```

Fig. 7B

FBI_2_7 (1)

```
            ┌──────────┐
            │  LAG1    │
            │          │
          ──┤ MAN      │
          ──┤ HALT     │
    2.0 ▶──┤ X      Y ├──▶ 2.000112
    1.0 ▶──┤ GAIN     │
  t#10m▶──┤ LAG      │
          ──┤ YMAN     │
            └──────────┘
```

Fig. 7C

FBI_2_13 (7)

```
            ┌──────────┐
            │  LAG1    │
            │          │
          ──┤ MAN      │
          ──┤ HALT     │
   80.0 ▶──┤ X      Y ├──▶ 80.00357
    1.0 ▶──┤ GAIN     │
  t#10m▶──┤ LAG      │
          ──┤ YMAN     │
            └──────────┘
```

Fig. 7E

FBI_2_11 (5)

```
          2.9 (3)              2.10(4)                        ┌──────────┐
        ┌──────────┐        ┌──────────┐                     │  LAG1    │
  2.0▶──┤          │        │          │                   ──┤ MAN      │
  2.0▶──┤ ADD_REAL │ 6.0  ──┤ DIV_REAL │  2.0              ──┤ HALT     │
  2.0▶──┤          ├────────┤          ├──────────────────┤ X      Y ├──▶ 1.99994
        │          │        │          │              1.0▶──┤ GAIN     │
        └──────────┘ 3.0 ▶──┘          │            t#10m▶──┤ LAG      │
                            └──────────┘                   ──┤ YMAN     │
                                                            └──────────┘
```

Fig. 7D

Table des couples XY uniques à la turbine
Conjugaison Puissance/Vitesse Vent @ 7.5°C (D=1.040kg /m³)

Fig. 8A

Fig. 8B

Table des couples XY uniques à la turbine
Conjugaison Puissance/Vitesse Vent @ -7.5°C (D=1.121kg /m³)

Compensation en température de la courbe de Puissance vs. Vitesse Vent

FBI_1_229(9))

LOOKUP_TABLE

| | |
|---|---|
| 709.9714 ► | X  Y |
| 17.0 ► | XiYi1  OXHI |
| 3.0 ► | XiYi2  OXLO |
| 26.0 ► | XiYi3 |
| 3.5 ► | XiYi4 |
| 49.0 ► | XiYi5 |
| 4.0 ► | XiYi6 |
| 90.0 ► | XiYi7 |
| 4.5 ► | XiYi8 |
| 123.0 ► | XiYi9 |
| 5.0 ► | XiYi10 |
| 234.0 ► | XiYi11 |
| 6.0 ► | XiYi12 |
| 251.0 ► | XiYi13 |
| 6.5 ► | XiYi14 |
| 294.0 ► | XiYi15 |
| 7.0 ► | XiYi16 |
| 1398.0 ► | XiYi17 |
| 11.0 ► | XiYi18 |
| 1478.0 ► | XiYi19 |
| 11.5 ► | XiYi20 |
| 1510.0 ► | XiYi21 |
| 12.0 ► | XiYi22 |
| 1530.0 ► | XiYi23 |
| 12.5 ► | XiYi24 |
| 1530.0 ► | XiYi25 |
| 13.0 ► | XiYi26 |
| 1530.0 ► | XiYi27 |
| 13.5 ► | XiYi28 |
| 1530.0 ► | XiYi29 |
| 14.0 ► | XiYi30 |

FBI_1_223(8)

FUZ_ATERM_REAL

2.000112 ► x        MD1
                    MD2
                    MD3
                    MD4
                    MD5
                    MD6
2.5 ►  S1           MD7
7.5 ►  S2           MD8
                    MD9

1.224(10)

MUL_REAL

8.25885

1.0

1.226(12)

ADD_REAL

B1

8.25885

0.0

1.225(11)

MUL_REAL

0.0

8.545851

A1

EP 2 078 159 B1

Fig. 8C

Fig. 8D

Détermine le degré d'approche (entre 0.0 et 1.0) de
l'humidité relative actuelle vers les points d'appui S1 et S2.
Plus la valeur trouvée à l'entrée X s'approche de S2, plus
la sortie MD2 s'approche de 1.0

FBI_4_24(3)

FUZ_ATERM_REAL

X
MD1
MD2
MD3
MD4
MD5
MD6
MD7
MD8
MD9

S1
S2

AA1

80.00357

99.1

99.6

4.44(2)

SUB_REAL

0.5

99.5

Courbe XY où:
-X est la température ambiante
-Y est une consigne d'humidité relative

La sortie Y est donc une consigne d'humidité relative
en fonction de la température ambiante

FBI_4_43 (1)

LOOKUP_TABLE

X
XiYi1
XiYi2
XiYi3
XiYi4
XiYi5
XiYi6

Y
OXHI
OXLO

2.000112
-15.0
86.65
0.0
99.4
0.2
99.6

Fig. 9A

Détermine le degré d'approche (entre 0.0 et 1.0) de
la température ambiante actuelle vers les points d'appui
S1, S2, S3 et S4.
Plus la valeur trouvée à l'entrée X s'approche de S2, plus
la sortie MD2 s'approche de 1.0
Plus la valeur trouvée à l'entrée X s'approche de S3, plus
la sortie MD3 s'approche de 1.0

L'addition des indices d'approche permet de déterminer
qu'entre -7°C et 1.7°C, nous obtiendrons un indice – à 1.0.
C'est donc dire que c'est entre ces deux températures
que les risques de formation de givre sont élevés

FBI_4_25(4)

FUZ_ATERM_REAL

2.000112 ▶ x          MD1
                      MD2          0.0
                      MD3
                      MD4
                      MD5
-60.0 ▶  S1           MD6
-7.0 ▶   S2           MD7          0.2497209
1.7 ▶    S3           MD8
2.1 ▶    S4           MD9

4.26(5)

ADD_REAL

BB1

Fig. 9B

Détermine le degré d'approche (entre 0.0 et 1.0) du
Rayonnement solaire vers les points d'appui S1 et S2.
Plus la valeur trouvée à l'entrée X s'approche de S1, plus
la sortie MD1 s'approche de 1.0

Calcul de l'indice d'amplification en
fonction du rayonnement solaire.
En situation de basse énergie, l'indice
d'approche sera bonifié.
En situation de haute énergie, l'indice
d'approche sera pénalisé.

Bonification de l'indice d'approche

Fig. 9C

Fig. 9D

Polarisation positive (obligatoire)

La Déviation de l'éolienne et la Déviation moyenne de l'ensemble des éoliennes
du parc sont combinées pour obtenir une déviation moyenne amortie

3.8(4)

ABS_REAL

3.13(6)

ADD_REAL

3.14(7)

DIV_REAL

0.05868959 ▶

0.05868959

0.07868959

2.0 ▶

0.0393448 ▶

3.19(5)

ABS_REAL

0.02

0.02 ▶

Fig. 10

La sensibilisation est ajustée en fonction de l'indice de probabilité de givre.
Le bloc "LOOKUP TABLE" contient des couples XY où les broches contenant
un chiffre impair est l'élément X du couple et où les broches contenant
un chiffre pair est l'élément Y du couple.

FBI_3_16(1)

```
              LOOKUP_TABLE

3.002453E-11 ▶─────   X            Y
       0.0 ▶─────     XiYi1     OXHI ───
       0.0 ▶─────     XiYi2     OXLO ───
                      XiYi3
       0.8 ▶─────     XiYi3
       0.0 ▶─────     XiYi4
       0.9 ▶─────     XiYi5
       0.2 ▶─────     XiYi6
      0.95 ▶─────     XiYi7
       0.6 ▶─────     XiYi8
       1.0 ▶─────     XiYi9
       1.0 ▶─────     XiYi10
```

Sensibilisation de la consigne originale

3.4(2)

```
          SUB_REAL
2.0 ▶───
          
0.0
```

Vérification de dépassement de la
tolérance sensibilisée de déviation

3.5(3)

```
             GE_REAL
0.0393448 ▶───

    2.0
```

3.18(10)

```
    OR_BOOL
```
───▶ Arrêt_Pour_Glaçage_Eol

Haute probabilité pendant plus
de 20 minutes = Certitude

3.17(8)

```
             GE_REAL
3.002453E-11 ▶───

    98.0 ▶───
```

FBI_3_20(9)

```
          TON

    IN        O
    PT        ET
t#20m ▶───
```

## Fig. 11

FBI_2_12 (6)

```
        ┌─────────┐
        │ LAG1    │
        │         │
        │  MAN    │
        │  HALT   │
627.0 ▶─┤  X    Y ├──▶ 627.9145
  1.0 ▶─┤  GAIN   │
t#10m▶──┤  LAG    │
        │  YMAN   │
        └─────────┘
```

Fig. 12A

FBI_2_8 (2)

```
        ┌─────────┐
        │ LAG1    │
        │         │
        │  MAN    │
        │  HALT   │
 8.65 ▶─┤  X    Y ├──▶ 8.635706
  1.0 ▶─┤  GAIN   │
t#10m▶──┤  LAG    │
        │  YMAN   │
        └─────────┘
```

Fig. 12B

FBI_2_7 (1)

```
        ┌─────────┐
        │ LAG1    │
        │         │
        │  MAN    │
        │  HALT   │
 -0.6 ▶─┤  X    Y ├──▶ -0.5999852
  1.0 ▶─┤  GAIN   │
t#10m▶──┤  LAG    │
        │  YMAN   │
        └─────────┘
```

Fig. 12C

FBI_2_13 (7)

```
        ┌─────────┐
        │ LAG1    │
        │         │
        │  MAN    │
        │  HALT   │
 98.8 ▶─┤  X    Y ├──▶ 98.68585
  1.0 ▶─┤  GAIN   │
t#10m▶──┤  LAG    │
        │  YMAN   │
        └─────────┘
```

Fig. 12E

FBI_2_11 (5)

2.9 (3)           2.10(4)

```
      ┌──────────┐        ┌──────────┐        ┌─────────┐
      │ ADD_REAL │  6.0   │ DIV_REAL │  2.0   │ LAG1    │
2.0 ▶─┤          ├────────┤          ├────────┤  MAN    │
2.0 ▶─┤          │        │          │        │  HALT   │
2.0 ▶─┤          │    3.0 ▶┤          │  1.0 ▶─┤  X    Y ├──▶ 1.999948
      └──────────┘        └──────────┘ t#10m▶─┤  GAIN   │
                                               │  LAG    │
                                               │  YMAN   │
                                               └─────────┘
```

Fig. 12D

Table des couples XY uniques à la turbine
Conjugaison Puissance/Vitesse Vent @ 7.5°C (D=1.040kg /m³)

FBI_1_32(6)

LOOKUP_TABLE

| X | Y |
|---|---|
| | OXHI |
| | OXLO |

| | |
|---|---|
| 627.9145 | XIYi1 |
| 12.0 | XIYi2 |
| 3.0 | XIYi3 |
| 25.0 | XIYi4 |
| 3.5 | XIYi5 |
| 52.0 | XIYi6 |
| 4.0 | XIYi7 |
| 87.0 | XIYi8 |
| 4.5 | XIYi9 |
| 126.0 | XIYi10 |
| 5.0 | XIYi11 |
| 227.0 | XIYi12 |
| 6.0 | XIYi13 |
| 297.0 | XIYi14 |
| 6.5 | XIYi15 |
| 378.0 | XIYi16 |
| 7.0 | XIYi17 |
| 1237.0 | XIYi18 |
| 11.0 | XIYi19 |
| 1322.0 | XIYi20 |
| 11.5 | XIYi21 |
| 1393.0 | XIYi22 |
| 12.0 | XIYi23 |
| 1428.0 | XIYi24 |
| 12.5 | XIYi25 |
| 1480.0 | XIYi26 |
| 13.0 | XIYi27 |
| 1495.0 | XIYi28 |
| 13.5 | XIYi29 |
| 1514.0 | XIYi30 |
| 14.0 | |

A2

Fig. 13A

Table des couples XY uniques à la turbine
Conjugaison Puissance/Vitesse Vent @ -7.5ºC (D=1.121kg /m³)

Compensation en température de la courbe de Puissance vs. Vitesse Vent

FBI_1_229(9))

1.224(10)

LOOKUP_TABLE

627.9145 ▶ — X          Y
17.0 ▶ — XiYi1    OXHI
3.0 ▶ — XiYi2    OXLO
26.0 ▶ — XiYi3
3.5 ▶ — XiYi4
49.0 ▶ — XiYi5
4.0 ▶ — XiYi6
90.0 ▶ — XiYi7
4.5 ▶ — XiYi8
123.0 ▶ — XiYi9
5.0 ▶ — XiYi10
234.0 ▶ — XiYi11
6.0 ▶ — XiYi12
251.0 ▶ — XiYi13
6.5 ▶ — XiYi14
294.0 ▶ — XiYi15
7.0 ▶ — XiYi16
1398.0 ▶ — XiYi17
11.0 ▶ — XiYi18
1478.0 ▶ — XiYi19
11.5 ▶ — XiYi20
1510.0 ▶ — XiYi21
12.0 ▶ — XiYi22
1530.0 ▶ — XiYi23
12.5 ▶ — XiYi24
1530.0 ▶ — XiYi25
13.0 ▶ — XiYi26
1530.0 ▶ — XiYi27
13.5 ▶ — XiYi28
1530.0 ▶ — XiYi29
14.0 ▶ — XiYi30

7.93193

MUL_REAL

1.0

1.226(12)

ADD_REAL

B2

7.93193

0.0

FBI_1_223(8)

FUZ_ATERM_REAL

-0.5999852 ▶ — x          MD1
                        MD2
                        MD3
                        MD4
                        MD5
                        MD6
2.5 ▶ — S1          MD7
7.5 ▶ — S2          MD8
                        MD9

1.225(11)

0.0

MUL_REAL

8.153745

A2

Fig. 13B

Table des couples XY uniques à la turbine
Conjugaison Pos. Pales/Vitesse Vent @ -7.5°C (D=1.087kg /m³)

FBI_1_20(1)

Compensation en température de la courbe des Pales vs. Vitesse Vent    10.5

1.187(3)

MUL_
REAL

5.56999    1.222(7)

ADD_
REAL

LOOKUP_TABLE

| | |
|---|---|
| X | Y |
| XiYi1 | OXHI |
| XiYi2 | OXLO |
| XiYi3 | |
| XiYi4 | |
| XiYi5 | |
| XiYi6 | |
| XiYi7 | |
| XiYi8 | |
| XiYi9 | |
| XiYi10 | |
| XiYi11 | |
| XiYi12 | |
| XiYi13 | |
| XiYi14 | |
| XiYi15 | |
| XiYi16 | |
| XiYi17 | |
| XiYi18 | |
| XiYi19 | |
| XiYi20 | |
| XiYi21 | |
| XiYi22 | |
| XiYi23 | |
| XiYi24 | |
| XiYi25 | |
| XiYi26 | |
| XiYi27 | |
| XiYi28 | |
| XiYi29 | |
| XiYi30 | |

-1.999948
2.0
10.5
2.21
11.0
2.38
11.5
2.74
12.0
4.89
12.5
7.52
13.0
11.52
14.0
13.0
15.0
16.8
16.0
19.18
17.0
20.61
18.0
21.1
19.0
21.84
19.5
22.7
20.5
23.4
25.0

0.539999

0.460001    1.189(5)

MUL_
REAL

10.0    4.60001

C2

FBI_1_188(2)

FUZ_ATERM_REAL

| | |
|---|---|
| x | MD1 |
| | MD2 |
| | MD3 |
| | MD4 |
| | MD5 |
| | MD6 |
| S1 | MD7 |
| S2 | MD8 |
| | MD9 |

-0.5999852

-7.5
7.5

FBI_1_221(4)

LOOKUP_TABLE

| | |
|---|---|
| X | Y |
| XiYi1 | OXHI |
| XiYi2 | OXLO |
| XiYi3 | |
| XiYi4 | |
| XiYi5 | |
| XiYi6 | |
| XiYi7 | |
| XiYi8 | |
| XiYi9 | |
| XiYi10 | |
| XiYi11 | |
| XiYi12 | |
| XiYi13 | |
| XiYi14 | |
| XiYi15 | |
| XiYi16 | |
| XiYi17 | |
| XiYi18 | |
| XiYi19 | |
| XiYi20 | |
| XiYi21 | |
| XiYi22 | |
| XiYi23 | |
| XiYi24 | |
| XiYi25 | |
| XiYi26 | |
| XiYi27 | |
| XiYi28 | |
| XiYi29 | |
| XiYi30 | |

0.0
2.0
10.0
2.34
10.5
2.83
11.0
4.43
12.0
6.45
13.0
10.71
14.0
13.0
15.0
15.8
16.0
17.4
17.0
18.25
18.0
19.28
19.0
20.66
20.0
22.04
21.0
22.73
22.0
23.42
25.0

Table des couples XY uniques à la turbine
Conjugaison Pos.Pales/Vitesse Vent
@ 7.5°C (D=1.040 kg /m³)

Fig. 13C

150

B2    7.931929    1.238(14)

Sélection proportionnelle de la courbe
à utiliser selon la vitesse du vent

MUL_REAL    7.931929

Calcul de la déviation
d'efficacité actuelle
en m/sec

Amortissement des
variations brusques

FBI_1_237(13)

1.0    1.240(16)    1.241(17)    1.242(18)    FBI_1_243(19)

FUZ_ATERM_REAL    ADD_REAL    SUB_REAL    LIMIT_REAL

8.635711 ►    x    MD1    1.239(15)    -5.0 ►    MN    LAG_FILTER

MD2    0.0    0.0    IN    IN

MD3    MUL_REAL    -5.0 ►    MX    1.0 ►    GAIN

MD4    t#10M ►    LAG

MD5    0.0 ►    TR_I

MD6    TR_S    OUT

10.0 ►    S1    MD7

14.0 ►    S2    MD8

MD9    10.27

8.635708    -0.7028913

C2

Fig. 13D

Déterminé le degré d'approche (entre 0.0 et 1.0) de
l'humidité relative actuelle vers les points d'appui S1 et S2.
Plus la valeur trouvée à l'entrée X s'approche de S2, plus
la sortie MD2 s'approche de 1.0

Courbe XY où:
-X est la température ambiante
-Y est une consigne d'humidité relative

La sortie Y est donc une consigne d'humidité relative
en fonction de la température ambiante

FBI_4_24(3)

FUZ_ATERM_REAL

98.68585 — x          MD1 ——— (AA2)
                      MD2
                      MD3
                      MD4
FBI_4_43 (1)          MD5
                      MD6
LOOKUP_TABLE          MD7
                      MD8
-0.5999352 ▶  X      Y    98.89001    4.44(2)    98.39001   S1   MD9
-15.0 ▶      XiYi1  OXHI              SUB_REAL               S2
86.65 ▶      XiYi2  OXLO

0.0 ▶        XiYi3         0.5 ▶
99.4 ▶       XiYi4
0.2 ▶        XiYi5                    98.89001
99.6 ▶       XiYi6

Fig. 14A

Détermine le degré d'approche (entre 0.0 et 1.0) de
la température ambiante actuelle vers les points d'appui
S1, S2, S3 et S4.
Plus la valeur trouvée à l'entrée X s'approche de S2, plus
la sortie MD2 s'approche de 1.0
Plus la valeur trouvée à l'entrée X s'approche de S3, plus
la sortie MD3 s'approche de 1.0

L'addition des indices d'approche permet de déterminer
qu'entre -7°C et 1.7°C, nous obtiendrons un indice – à 1.0.
C'est donc dire que c'est entre ces deux températures
que les risques de formation de givre sont élevés

FBI_4_25(4)

| FUZ_ATERM_REAL | |
|---|---|
| x | MD1 |
| | MD2 |
| | MD3 |
| | MD4 |
| | MD5 |
| S1 | MD6 |
| S2 | MD7 |
| S3 | MD8 |
| S4 | MD9 |

-0.5999852 ►— x

-60.0 ► S1
-7.0 ► S2
1.7 ► S3
2.1 ► S4

0.2643661

0.7356339

4.26(5)

ADD_REAL

BB2

Fig. 14B

Déterminer le degré d'approche (entre 0.0 et 1.0) du
Rayonnement solaire vers les points d'appui S1 et S2.
Plus la valeur trouvée à l'entrée X s'approche de S1, plus
la sortie MD1 s'approche de 1.0

Calcul de l'indice d'amplification en
fonction du rayonnement solaire.
En situation de basse énergie, l'indice
d'approche sera bonifié.
En situation de haute énergie, l'indice
d'approche sera pénalisé.

Bonification de l'indice d'approche

FBI_4_28(7)

4.29(8)

4.30(9)

| FUZ_ATERM_REAL | | | FUZ_PROD_REAL | | ADD_REAL |
|---|---|---|---|---|---|

0.0 ► x          MD1          1.0          IN1          0.1          ADD_REAL          CC2
                 MD2          0.10 ►       IN2          1.0 ►
                 MD3
                 MD4
40.0 ►   S1      MD5
200.0 ►  S2      MD6
700.0 ►  S3      MD7
800.0 ►  S4      MD8
                 MD9

Pénalisation de l'indice d'approche

4.32(10)

4.33(11)

FUZ_PROD_REAL

0.0   IN1
0.1 ► IN2          1.0 ►   ADD_REAL
                          0.0              DD2

Fig. 14C

Valide les signaux des sondes:
-Humidité relative
-Température
-Rayonnement Solaire

Si une sonde est défaillante, l'indice de Probabilité de Givre passe à -1

Atténuation des variations brusques

FBI_4_35(14)

4.40(15)

SEL
G
IN0
IN1

LAG1
MAN
HALT
X      Y
GAIN
LAG
YMAN

Sondes_OK
-1.0

0.6504749

0.6504749

0
0
1.0
t#10s
0.0

0.6504898

Limitation de l'indice d'approche global nécessaire dû à l'amplification

4.41(13)

LIMIT_REAL
MN
IN
MX

0.0

1.0

0.6504898

Amplification positive ou négative en fonction de l'énergie solaire absorbée par les matériaux

4.34(12)

MUL_REAL

0.5913544

1.0

1.1

CC2      DD2

Combinaison des indices d'approches calculés pour l'humidité relative et la température ambiante

4.27(6)

FUZ_PROD_REAL
IN1
IN2

0.5913544

1.0

AA2

BB2

Fig. 14D

69

Fig. 15

FBI_3_16(1)

La sensibilisation est ajustée en fonction de l'indice de probabilité de givre.
Le bloc "LOOKUP TABLE" contient des couples XY où les broches contenant
un chiffre impair est l'élément X du couple et où les broches contenant
un chiffre pair est l'élément Y du couple.

```
              LOOKUP_TABLE
0.6421795 ▶    X              Y
    0.0 ▶     XiYi1        OXHI
    0.0 ▶     XiYi2        OXLO
    0.8 ▶     XiYi3
    0.0 ▶     XiYi4
    0.9 ▶     XiYi5
    0.2 ▶     XiYi6
   0.95 ▶     XiYi7
    0.6 ▶     XiYi8
    1.0 ▶     XiYi9
    1.0 ▶     XiYi10
```

Sensibilisation de la consigne originale

Vérification de dépassement de la
tolérance sensibilisée de déviation

3.4(2)

```
2.0 ▶    SUB_REAL
0.0
```

3.5(3)

```
0.7007065 ▶    GE_REAL
        2.0
```

3.18(10)

```
        OR_BOOL
          ·
```

▶ Arrêt_Pour_Glaçage_Eol

Haute probabilité pendant plus
de 20 minutes = Certitude

3.17(8)

```
0.6421795 ▶    GE_REAL
     98.0 ▶
```

FBI_3_20(9)

```
        TON
  IN        O
  PT        ET
t#20m ▶
```

# Fig. 16

FBI_2_12 (6)

LAG1

MAN
HALT
430.0 ▶ X    Y
1.0 ▶ GAIN
t#10m▶ LAG
YMAN

→ 430.0127

Fig. 17A

FBI_2_8 (2)

LAG1

MAN
HALT
8.35 ▶ X    Y
1.0 ▶ GAIN
t#10m▶ LAG
YMAN

→ 8.350239

Fig. 17B

FBI_2_7 (1)

LAG1

MAN
HALT
-2.8 ▶ X    Y
1.0 ▶ GAIN
t#10m▶ LAG
YMAN

→ -2.799881

Fig. 17C

FBI_2_13 (7)

LAG1

MAN
HALT
99.1 ▶ X    Y
1.0 ▶ GAIN
t#10m▶ LAG
YMAN

→ 98.0981

Fig. 17E

FBI_2_11 (5)

2.9 (3)                    2.10(4)                           LAG1

MAN
2.0 ▶ ADD_REAL  6.0  DIV_REAL  2.0  HALT
2.0 ▶                                           X    Y
2.0 ▶                                      1.0 ▶ GAIN
                3.0 ▶                      t#10m▶ LAG
                                                 YMAN

→ 1.999948

Fig. 17D

Table des couples XY uniques à la turbine
Conjugaison Puissance/Vitesse Vent @ 7.5°C (D=1.040kg /m³)

FBI_1_32(6)

Fig. 18A

Table des couples XY uniques à la turbine
Conjugaison Puissance/Vitesse Vent @ -7.5°C (D=1.121kg /m³)

Compensation en température de la courbe de Puissance vs. Vitesse Vent

FBI_1_229(9))

LOOKUP_TABLE

| | |
|---|---|
| X | Y |
| XiYi1 | OXHI |
| XiYi2 | OXLO |
| XiYi3 | |
| XiYi4 | |
| XiYi5 | |
| XiYi6 | |
| XiYi7 | |
| XiYi8 | |
| XiYi9 | |
| XiYi10 | |
| XiYi11 | |
| XiYi12 | |
| XiYi13 | |
| XiYi14 | |
| XiYi15 | |
| XiYi16 | |
| XiYi17 | |
| XiYi18 | |
| XiYi19 | |
| XiYi20 | |
| XiYi21 | |
| XiYi22 | |
| XiYi23 | |
| XiYi24 | |
| XiYi25 | |
| XiYi26 | |
| XiYi27 | |
| XiYi28 | |
| XiYi29 | |
| XiYi30 | |

430.0127 ►— X
17.0 ►— XiYi1
3.0 ►— XiYi2
26.0 ►— XiYi3
3.5 ►— XiYi4
49.0 ►— XiYi5
4.0 ►— XiYi6
90.0 ►— XiYi7
4.5 ►— XiYi8
123.0 ►— XiYi9
5.0 ►— XiYi10
234.0 ►— XiYi11
6.0 ►— XiYi12
251.0 ►— XiYi13
6.5 ►— XiYi14
294.0 ►— XiYi15
7.0 ►— XiYi16
1398.0 ►— XiYi17
11.0 ►— XiYi18
1478.0 ►— XiYi19
11.5 ►— XiYi20
1510.0 ►— XiYi21
12.0 ►— XiYi22
1530.0 ►— XiYi23
12.5 ►— XiYi24
1530.0 ►— XiYi25
13.0 ►— XiYi26
1530.0 ►— XiYi27
13.5 ►— XiYi28
1530.0 ►— XiYi29
14.0 ►— XiYi30

7.143477

1.224(10)

MUL_REAL

1.0

1.226(12)

ADD_REAL

B3

7.143477

0.0

FBI_1_223(8)

FUZ_ATERM_REAL

| | |
|---|---|
| x | MD1 |
| | MD2 |
| | MD3 |
| | MD4 |
| | MD5 |
| | MD6 |
| S1 | MD7 |
| S2 | MD8 |
| | MD9 |

-2.799881 ►— x

2.5 ►— S1
7.5 ►— S2

0.0

1.225(11)

MUL_REAL

0.0

7.242201

A3

Fig. 18B

Table des couples XY uniques à la turbine
Conjugaison Pos. Pales/Vitesse Vent @ -7.5°C (D=1.087kg /m³)

FBI_1_20(1)

1.187(3)

MUL_
REAL

Compensation en température de la courbe des Pales vs. Vitesse Vent    10.5

7.209917    1.222(7)

LOOKUP_TABLE

ADD_
REAL

-1.999948 ▶ — X          Y
2.0 ▶ — XiYi1    OXHI
10.5 ▶ — XiYi2    OXLO
2.21 ▶ — XiYi3
11.0 ▶ — XiYi4
2.38 ▶ — XiYi5
11.5 ▶ — XiYi6
2.74 ▶ — XiYi7
12.0 ▶ — XiYi8
4.89 ▶ — XiYi9
12.5 ▶ — XiYi10
7.52 ▶ — XiYi11
13.0 ▶ — XiYi12
11.52 ▶ — XiYi13
14.0 ▶ — XiYi14
13.0 ▶ — XiYi15
15.0 ▶ — XiYi16
16.8 ▶ — XiYi17
16.0 ▶ — XiYi18
19.18 ▶ — XiYi19
17.0 ▶ — XiYi20
20.61 ▶ — XiYi21
18.0 ▶ — XiYi22
21.1 ▶ — XiYi23
19.0 ▶ — XiYi24
21.84 ▶ — XiYi25
19.5 ▶ — XiYi26
22.7 ▶ — XiYi27
20.5 ▶ — XiYi28
23.4 ▶ — XiYi29
25.0 ▶ — XiYi30

0.6866587

0.3133413    1.189(5)

MUL_
REAL

FBI_1_221(4)

3.133413

C3

FBI_1_188(2)

LOOKUP_TABLE

FUZ_ATERM_REAL

0.0 ▶ — X          Y
2.0 ▶ — XiYi1    OXHI
-2.799981 ▶ — x          MD1       10.0 ▶ — XiYi2    OXLO
MD2       2.34 ▶ — XiYi3
MD3       10.5 ▶ — XiYi4
MD4       2.83 ▶ — XiYi5
MD5       11.0 ▶ — XiYi6
MD6       4.43 ▶ — XiYi7
-7.5 ▶ — S1         MD7       12.0 ▶ — XiYi8
7.5 ▶ — S2         MD8       6.45 ▶ — XiYi9
MD9       13.0 ▶ — XiYi10
10.71 ▶ — XiYi11
14.0 ▶ — XiYi12
13.0 ▶ — XiYi13
15.0 ▶ — XiYi14
15.8 ▶ — XiYi15
16.0 ▶ — XiYi16
17.4 ▶ — XiYi17
17.0 ▶ — XiYi18
18.25 ▶ — XiYi19
18.0 ▶ — XiYi20
19.28 ▶ — XiYi21
19.0 ▶ — XiYi22
20.66 ▶ — XiYi23
20.0 ▶ — XiYi24
22.04 ▶ — XiYi25
21.0 ▶ — XiYi26
22.73 ▶ — XiYi27
22.0 ▶ — XiYi28
23.42 ▶ — XiYi29
25.0 ▶ — XiYi30

10.0

Table des couples XY uniques à la turbine
Conjugaison Pos.Pales/Vitesse Vent
@ 7.5°C (D=1.040 kg /m³)

Fig. 18C

Fig. 18D

Courbe XY où:
-X est la température ambiante
-Y est une consigne d'humidité relative

La sortie Y est donc une consigne d'humidité relative
en fonction de la température ambiante

Détermine le degré d'approche (entre 0.0 et 1.0) de
l'humidité relative actuelle vers les points d'appui S1 et S2.
Plus la valeur trouvée à l'entrée X s'approche de S2, plus
la sortie MD2 s'approche de 1.0

FBI_4_24(3)

FUZ_ATERM_REAL

99.0981 ── X    MD1
              MD2 ── AA3
              MD3
              MD4
              MD5
FBI_4_43 (1)  MD6

LOOKUP_TABLE

-2.799881 ▶── X        Y ── 97.0201    4.44(2)
-15.0 ▶── XiYi1   OXHI                SUB_REAL          96.5201   S1   MD7
86.65 ▶── XiYi2   OXLO                                          S2   MD8
0.0 ▶── XiYi3                  0.5 ▶                                  MD9
99.4 ▶── XiYi4
0.2 ▶── XiYi5                              97.0201
99.6 ▶── XiYi6

Fig. 19A

Détermine le degré d'approche (entre 0.0 et 1.0) de
la température ambiante actuelle vers les points d'appui
S1, S2, S3 et S4.
Plus la valeur trouvée à l'entrée X s'approche de S2, plus
la sortie MD2 s'approche de 1.0
Plus la valeur trouvée à l'entrée X s'approche de S3, plus
la sortie MD3 s'approche de 1.0

L'addition des indices d'approche permet de déterminer
qu'entre -7°C et 1.7°C, nous obtiendrons un indice – à 1.0.
C'est donc dire que c'est entre ces deux températures
que les risques de formation de givre sont élevés

FBI_4_25(4)

| FUZ_ATERM_REAL | |
|---|---|
| x | MD1 |
| | MD2 |
| | MD3 |
| | MD4 |
| S1 | MD5 |
| S2 | MD6 |
| S3 | MD7 |
| S4 | MD8 |
| | MD9 |

-2.799881 ▶ x

-60.0 ▶ S1
-7.0 ▶ S2
1.7 ▶ S3
2.1 ▶ S4

0.5172276

0.4827723

4.26(5)

ADD_REAL

BB3

## Fig. 19B

Fig. 19C

80

Valide les signaux des sondes:
-Humidité relative
-Température
-Rayonnement Solaire

Si une sonde est défaillante,
l'indice de Probabilité de Givre
passe à -1

Combinaison des indices
d'approches calculés pour
l'humidité relative et la
température ambiante

Amplification positive ou
négative en fonction de
l'énergie solaire absorbée par
les matériaux

Limitation de l'indice
d'approche global nécessaire
dû à l'amplification

Atténuation des
variations
brusques

4.41(13)

FBI_4_35(14)

4.40(15)

4.27(6)

4.34(12)

LIMIT_REAL

LAG1

SEL

AA3  1.0    FUZ_PROD_REAL    1.0    MUL_REAL

IN1
IN2

BB3  1.0

1.1   0.0 ►   MN
              IN
       1.0 ►  MX

1.0

0 ►
0 ►   MAN
      HALT
      X        Y
1.0 ► GAIN
t#10s► LAG
0.0 ► YMAN

Sondes_OK►
      -1.0 ►

G
IN0
IN1

0.9999852

1.1

1.0

CC3   DD3

0.9999852

Fig. 19D

Fig. 20

FBI_3_16(1)

La sensibilisation est ajustée en fonction de l'indice de probabilité de givre.
Le bloc "LOOKUP TABLE" contient des couples XY où les broches contenant
un chiffre impair est l'élément X du couple et où les broches contenant
un chiffre pair est l'élément Y du couple.

LOOKUP_TABLE

| | |
|---|---|
| 0.9999352 ▶ X | Y |
| 0.0 ▶ XiYi1 | OXHI |
| 0.0 ▶ XiYi2 | OXLO |
| 0.8 ▶ XiYi3 | |
| 0.0 ▶ XiYi4 | |
| 0.9 ▶ XiYi5 | |
| 0.2 ▶ XiYi6 | |
| 0.95 ▶ XiYi7 | |
| 0.6 ▶ XiYi8 | |
| 1.0 ▶ XiYi9 | |
| 1.0 ▶ XiYi10 | |

Sensibilisation de la consigne originale

Vérification de dépassement de la
tolérance sensibilisée de déviation

3.4(2)

SUB_REAL

2.0 ▶

0.9993817

3.5(3)

GE_REAL

0.9983764 ▶

1.000118

3.18(10)

OR_BOOL

▶ Arrêt_Pour_Glaçage_Eol

Haute probabilité pendant plus
de 20 minutes = Certitude

3.17(8)

GE_REAL

0.9999352 ▶

0.98 ▶

FBI_3_20(9)

TON

IN    O
PT    ET

t#20m ▶

Fig. 21

82

Tracé polygonal avec interpolation de 1er ordre

Fig. 22

Fig. 23

Fig. 24

Fig. 25A

Fig. 25B

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

* US 7086834 B